# EUROPÄISCHE PATENTSCHRIFT

(11) **EP 4 475 493 B1**
(45) Veröffentlichungstag und Bekanntmachung des Hinweises auf die Patenterteilung: **29.07.2026**
(21) Anmeldenummer: 24207785.7
(22) Anmeldetag: 27.02.2019
(51) Int. Cl.: H04L 12/403

(54) **VERFAHREN UND VORRICHTUNG ZUR ANSTEUERUNG ELEKTRISCHER UND/ODER ELEKTRONISCHER KOMPONENTEN EINES KFZ-MODULS**
METHOD AND DEVICE FOR CONTROLLING ELECTRIC AND/OR ELECTRONIC COMPONENTS OF A MOTOR VEHICLE MODULE
PROCÉDÉ ET DISPOSITIF DE COMMANDE DE COMPOSANTS ÉLECTRIQUES ET/OU ÉLECTRONIQUES D'UN MODULE DE VÉHICULE AUTOMOBILE

(30) Priorität: 02.03.2018 DE 102018104871; 02.03.2018 DE 102018104868; 02.03.2018 DE 102018104866; 02.03.2018 DE 102018104865; 02.03.2018 DE 102018104864; 02.03.2018 DE 102018104862; 02.03.2018 DE 102018104858; 02.03.2018 DE 102018104855; 02.03.2018 DE 102018104852; 02.03.2018 DE 102018104850; 02.03.2018 DE 102018104847
(43) Veröffentlichungstag der Anmeldung: 11.12.2024
(62) Teilanmeldung aus: 19708281.1
(73) Patentinhaber: Elmos Semiconductor SE, 51379 Leverkusen (DE)
(72) Erfinder: Schmitz, Christian, 44575 Castrop-Rauxel (DE)
(74) Vertreter: dompatent

(56) Entgegenhaltungen:
- WO-A1-2017/089185
- DE-A1- 102008 003 082
- DE-A1- 102011 015 327
- GB-A- 2 527 534

## Beschreibung

Die Erfindung betrifft einen Busknoten für einen seriellen, bidirektionalen, differentiellen Zweidraht-Kommunikationsbus, wobei der Zeitdraht-Kommunikatonsbus einen ersten Eindrahtbus sowie einen zweiten Eindrahtbus und einen mit beiden verbundenen Bus-master aufweist.

Die elektrischen bzw. elektronischen Komponenten von Kfz-Modulen wie beispielsweise der diversen Lichtmodule werden in zunehmendem Maße komplexer. Insbesondere im Bereich "Licht" geht man in jüngster Vergangenheit verstärkt dazu über, dynamische Funktionen wie z.B. den "wischenden Blinker" oder die sogenannte "coming home"-Applikation einzusetzen. Dabei nutzt man mit Vorteil den Umstand aus, dass die einzelnen Außen- und Innenlichtfunktionen eines Fahrzeugs durch jeweils mehrere LEDs bzw. OLEDs realisiert werden. Dynamische Effekte lassen sich nun auf vergleichsweise hardwaremäßig einfache Art und Weise dadurch realisieren, dass die Vielzahl von Lichtquellen, die ein derartiges Kfz-Lichtmodul aufweist, in unterschiedlicher Weise angesteuert werden.

Die Vielzahl von Komponenten eines Kfz-Moduls, also beispielsweise die Vielzahl von den einzelnen Lichtfunktionen zugeordneten LEDs bzw. OLEDs eines beispielsweise Rücklichtmoduls sind vorteilhafterweise über einen Kommunikationsbus an eine Ansteuereinheit des Moduls angeschlossen bzw. stehen über den Kommunikationsbus mit der Ansteuereinheit in Kommunikationsverbindung. Im Regelfall umfasst die Ansteuereinheit auch einen Spannungswandler zur Versorgung von insbesondere LED-Treibern eines Lichtmoduls.

Hinsichtlich der Übertragungsgeschwindigkeit und Robustheit haben sich differentielle Zweidraht-Kommunikationsbussysteme bewährt. Die Informationssignale werden dabei zwischen der Ansteuereinheit und den Teilnehmern als Spannungsdifferenz zwischen den beiden Busleitungen übertragen, wodurch eine größere Signalsicherheit und eine höhere Übertragungsgeschwindigkeit und eine geringere Störanfälligkeit erreicht werden. Derartige Zweidraht-Busleitungen sind grundsätzlich bekannt.

Problematisch ist, dass der Hardware-Aufwand für derartige Zweidraht- Bussysteme und deren Teilnehmer nicht unerheblich ist. Insbesondere hinsichtlich der Kosten von Nachteil ist der Umstand, dass die Teilnehmer über relativ präzise arbeitende Taktgeber verfügen müssen, die synchron zueinander arbeiten. Des Weiteren müssen die Lichtmodule beim Verbau und Anschluss im Fahrzeugwerk ihre physikalische Position feststellen und in eine logische Adresse wandeln können, sodass ohne Vorprogrammierung einer Busknotenadresse für diese Leuchtmodule gleichartige Leuchtmodule eingesetzt werden können, was Fehlermöglichkeiten und Logistik in der Produktion massiv reduziert.

Aus NN: "High-Brightness LED Matrix Manager for Automotive Headlight Systems", 1. Februar 2016 (2016-02-01), Seiten 1-53, XP055348745, Dallas, Texas (gefunden im Internet: URL:http://www.ti.com/lit/ds/symlink/tps92661-q1.pdf am 2017-02-23) ist eine Kfz-Frontlicht-Ansteuerung bekannt, deren Bus zwei Leitungen aufweist, an die keine differentielle Signale angelegt werden.

In MONAL GIRADKAR ET AL: "Design and Implementation of Adaptive Front Light System of Vehicle Using FPGA Based LIN Controller", EMERGING TRENDS IN ENGINEERING AND TECHNOLOGY (ICETET), 2011 4TH INTERNATIONAL CONFERENCE ON, IEEE, 18. November 2011 (2011-11-18), Seiten 258-261, XP032087461, DOI: 10.1109/ICETET.2011.67; ISBN: 978-1-4577-1847-2 ist eine Bit-Timing-Logik für einen CAN-Bus beschrieben.

Eine Vorrichtung zur Ansteuerung eines adaptiven Kfz-Fontlichts mit FPGA-basiertem LIN-Controller ist in GUO JINYAN ET AL: "The design and realization of CAN bit timing logic", MICROELECTRONICS AND ELECTRONIS (PRIMEASIA), 2010 ASIA PACIFIC CONFERENCE ON POSTGRADUATE RESEARCH IN, IEEE, PISCATAWAY, NJ, USA, 22. September 2010 (2010-09-22), Seiten 333-337, XP031777603, ISBN: 978-1-4244-6735-8 beschrieben.

Schließlich gibt ZENG WEIYING ET AL: "In-Vehicle Networks Outlook: Achievements and Challenges", IEEE COMMUNICATIONS SURVEYS & TUTORIALS, Bd. 18, Nr. 3, 27. Februar 2016 (2016-02-27), Seiten 1552-1571, XP011620858, DOI: 10.1109/COMST.2016.2521642; [gefunden am 2016-08-19] einen Überblick über Kfz-Kommunikationssysteme.

Aus der DE-A-10 2016 125 290 und der DE-A-10 2017 100 718 sind Vorrichtungen und Verfahren zur Adressierung und zum Betreiben einer LED-Kette mit Hilfe eines JTAG-Protokolls bekannt. Ein Problem ist dabei, dass das Taktsignal mit den Daten gemeinsam mittels eines Mehrpegelsignals übertragen werden muss. Es besteht aber das Bedürfnis im Markt, auf bestehende Protokolle zurückgreifen zu können. Hierbei müssen die Busknoten ausreichend präzise synchronisiert werden, um eine Übertragung des Taktsignals wie in der technischen Lehre der DE-A-10 2016 125 290 und der DE-A-10 2017 100 718 vermeiden zu können. Im CAN Protokoll ist dies beispielsweise über aufwendige Timing-Synchronisationen gelöst, die in der Regel aber zu zu aufwendigen Busknoten führen.

Aus DE-A-10 2008 003 082 sind ein Steuergerät und ein Verfahren zur Ansteuerung von Personenschutzmitteln bekannt. Offenbart ist ein Zweidrahtbussystem mit zwei Eindrahtbussen und mit differentiellen Gegentaktadressierungsstromquellen zur Vergabe einer Adresse des Busknotens im Zweidraht-Kommunikationsbus, wobei die Gegentaktadressierungsstromquelle einen Gegentaktadressierungsstromanteil in den ersten Eindrahtbus des Zweidraht-Kommunikationsbusses geregelt einspeisen kann. Der Gesamtstrom wird auf einen vorgegebenen ersten Summenstromwert geregelt.

Aufgabe der Erfindung ist es einen Busknoten anzugeben, der zur Durchführung eines Verfahrens zur Vergabe von Busadressen an Busknoten eines seriellen, bidirektionalen, differentiellen Zweidraht-Kommunikationsbusses eingerichtet ist, wobei das Verfahren zur Vergabe von Busadressen an Busknoten des seriellen, bidirektonalen, differentiellen Zweidraht-Kommunikationsbusses mit Hilfe von Bus-Shunt-Widerständen in den einzelnen Busknoten in einem Vergabezeitraum durchgeführt wird und wobei sich nach der Durchführung des Verfahrens zur Vergabe von Busadressen an die Busknoten ein Betriebszeitraum anschließt.

Zur Lösung dieser Aufgabe wird mit der Erfindung ein Busknoten mit den Merkmalen des Anspruchs 1 vorgeschlagen.

Einzelne Ausgestaltungen des erfindungsgemäßen Busknotens sind Gegenstand der Unteransprüche 2 bis 8.

Die Erfindung ist insbesondere im Rahmen digitaler Schnittstellen zur robusten und Hochgeschwindigkeits-Übertragung von Daten über eine Zweidraht-Kabelverbindung zwischen mit LEDs bestückten Platinen für beispielsweise Rücklicht und Innenlicht innerhalb einer Leuchte mit einer Datenrate von bis zu 500 kBit/s einsetzbar. Dabei wird die symmetrische Übertragung mittels eines differentiellen Hochgeschwindigkeits-Zweidraht-Bussystems zum Zwecke der Übertragung eines einfachen seriellen Protokolls und damit zur Reduktion des Hardware-Digitalaufwands genutzt.

Die Erfindung wird nachfolgend in ihren unterschiedlichsten Ausprägungen anhand der Zeichnung näher erläutert. Im Einzelnen zeigen:
- Figur 1: ein Beispiel für ein Rücklichtmodul (BLM) eines Kfz.
- Figur 2: einen Zweidraht-Kommunikationsbus (DB), wie er beispielsweise aus dem Stand der Technik bekannt ist.
- Figur 3: die bevorzugte Struktur der vom Busmaster (ECU) versendeten Bit-Strom-Pakete (BP).
- Figur 4: ein Datenbussystem, bei dem in den ersten Eindrahtbus (DBa) ein erster Bus-Shunt-Widerstand (R2) je Busknoten ((BK₁) bis [BKₙ]) eingefügt ist.
- Figur 5: basierend auf Figur 4 einen seriellen, bidirektionalen, differentiellen Zweidraht-Kommunikationsbus (DB) mit einem ersten Bus-Shunt-Widerstand (R2), der in den ersten Eindrahtbus (DB₁) eingefügt ist, und einem zweiten Bus-Shunt-Widerstand (R2'), der in den zweiten Eindrahtbus (DB₂) eingefügt ist.
- Figur 6: eine ähnliche Darstellung wie in Figur 5 mit dem Unterschied, dass die jeweiligen ersten Adressierungsstromquellen ((Iq₁) bis [Iqₙ]) vom Bus-Master (ECU) aus gesehen den ersten Adressierungsstrom hinter den ersten Bus-Shunt-Widerständen (R2) in der Adressierungsphase, in der der jeweilige Busknoten (BKⱼ) in einem Adressierungszustand ist, einspeisen.
- Figur 7: beispielhaft den Verlauf des Ausgangsstroms (i₁) des ersten Busknotens (BK₁), des Ausgangsstroms (i₂) des zweiten Busknotens (BK₂) und des Ausgangsstroms (i₃) des dritten Busknotens (BK₃) in einem beispeilhaften Datenbussystem mit n=3 Busknoten (BK₁ bis BK₃).
- Figur 8: den Verlauf des Ausgangsstroms (i₁) des ersten Busknotens (BK₁), des Ausgangsstroms (i₂) des zweiten Busknotens (BK₂) und des Ausgangsstroms (i₃) des dritten Busknotens (BK₃).
- Figur 9: den Verlauf des Ausgangsstroms (i₁) des ersten Busknotens (BK₁), des Ausgangsstroms (i₂) des zweiten Busknotens (BK₂) und des Ausgangsstroms (i₃) des dritten Busknotens (BK₃).
- Figur 10: den Regelkreis eines Busknotens (BKⱼ) mit einer ersten Detektionsvorrichtung (DET) zu versehen, die interne Signale (ds1, ds3) des Busknotens (BKⱼ) auf Plausibilität prüft.
- Figur: 11 einen vereinfacht dargestellten j-te Autoadressierungsbusknoten (BKⱼ), der für die Umpositionierung des Einspeisepunktes des zweiten Adressierungsstroms der zweiten Adressierungsstromquelle (Iq'ⱼ) des betrachteten Busknotens (BKⱼ) eine zweite Detektionsvorrichtung (DET') aufweist.
- Figur 12: Autoadressierungsbusknoten (BK₁, BK₂, BK₃) mit einem zweiten Bus-Shunt-Überbrückungsschalter (S4') je Busknoten (BKj) den zugehörigen zweiten Bus-Shunt-Widerstand (R2') des Busknotens (BKj) im Normalbetrieb, also im Normalzustand des Busknotens (BKj), zu überbrücken und diesen zweiten Bus-Shunt-Überbrückungsschalter (S4') nur im Adressierungszustand zu öffnen.
- Figur 13: basierend auf Figur 2 ein Datenbussystem mit Autoadressierung mittels Interrupt-Leitung.
- Figur 14: den grundsätzlichen Ablauf des hier beschrieben bevorzugten Adressvergabeverfahrens mittels Interrupt-Leitung

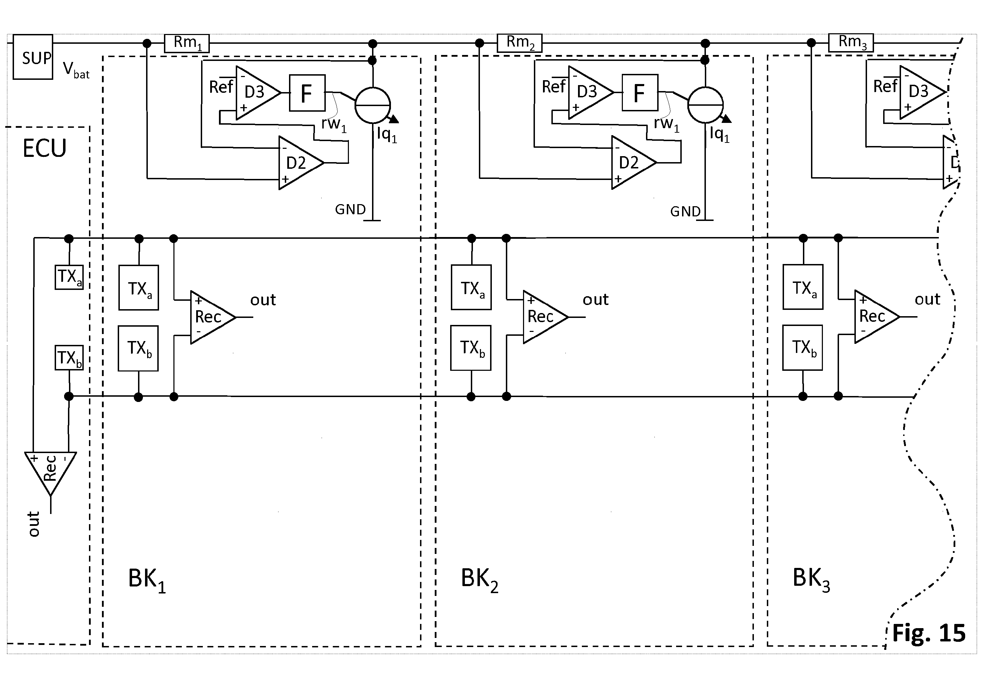

- Figur 15: einen seriellen, bidirektionalen, differentiellen Zweidraht-Kommunikationsbus (DB), mit n Busknoten ((BK₁), (BK₂), (BK₃), ..... [BKₙ₋₁], [BKₙ]), mit n als ganzer positiver Zahl größer Null, und einem Busmaster (ECU), bei dem die Busknoten über eine Versorgungsspannungsleitung (V_{bat}) mit elektrischer Energie versorgt werden, der Kommunikationsbus (DB) mit dem Busmaster (ECU) verbunden ist, jeder Busknoten ((BK₁), (BK₂), ..... [BKₙ₋₁], [BKₙ]) mit dem Kommunikationsbus (DB) verbunden ist und bei dem innerhalb der Busknoten ((BK₁) bis [BKₙ]) jeweils ein dem jeweiligen Busknoten (BKⱼ) der n Busknoten ((BK₁) bis [BKₙ]) zugeordneter Messwiderstand (Rmⱼ) in die Versorgungsspannungsleitung (V_{bat}) eingefügt ist
- Figur 16: Figur 15 mit Leuchtmitteln (LED₁ bis LEDₙ).
- Figur 17: eine Darstellung basierend auf Figur 15, wobei nun auch zweite Adressierungsstromquellen (Iq'ⱼ) der betreffenden Busknoten (BKⱼ) für die Autoadressierung über die Spannungsversorgungsleitung (V_{bat}) verwendet werden.
- Figur 18: eine Vorrichtung, die die Durchführung mehrerer Autoadressierungsverfahren zulässt. Die Figur 18 ist eine Kombination der Figuren 17, 13, 6 und 5.
- Figur 19: entsprechend der Vorrichtung nach Figur 18 eine Vorrichtung mit einem Überbrückungsschalter (S4).
- Figur 20: in den beispielhaften Busknoten ((BK₁) bis [BKₙ]) jeweils einen vierten Multiplexer (X4) je Busknoten (BKⱼ), mit einer Steuerung innerhalb dieses Busknotens (BKⱼ) sowie jeweils einen weiteren vierten Multiplexer (X4') je Busknoten (BKⱼ), mit einer Steuerung innerhalb dieses Busknotens (BKⱼ) mit dem die Steuerung innerhalb dieses Busknotens (BKⱼ) die beiden Eingänge des weiteren zweiten Differenzverstärkers (D2') dieses Busknotens (BKⱼ) vertauschen kann.
- Figur 21: Figur 20 mit einem verdrehten Busknoten (BK₂).

Abkürzungen werden im folgenden Text im Gegensatz zu den Bezugszeichen mit eckigen Klammern "[]" markiert und in der beigefügten Abkürzungsliste aufgeführt. Die Bezugszeichen, die zumindest in einer der Figuren enthalten sind, werden im folgenden Text im Gegensatz zu den Abkürzungen mit runden Klammern "()" markiert und in der beigefügten Bezugszeichenliste aufgeführt. Es werden immer die Bezeichnungen mit den jeweiligen Bezugszeichen aufgeführt, auch wenn diese an anderen Stellen der Beschreibung als der Figurenbeschreibung verwendet werden.

Die Indices j und n entsprechen jeweils einer positiven ganzen Zahl.

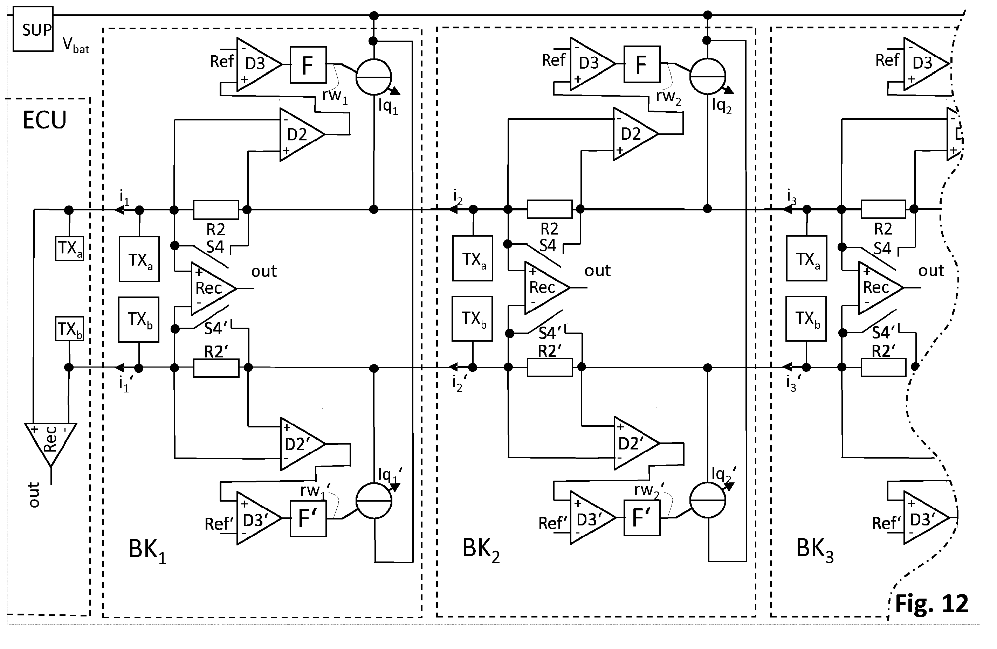

Vorab sei darauf hingewiesen, dass die Fign. 12 und 17 bis 21 verschiedene Ausführungsbeispiele des erfindungsgemäßen Busknotens zeigen.

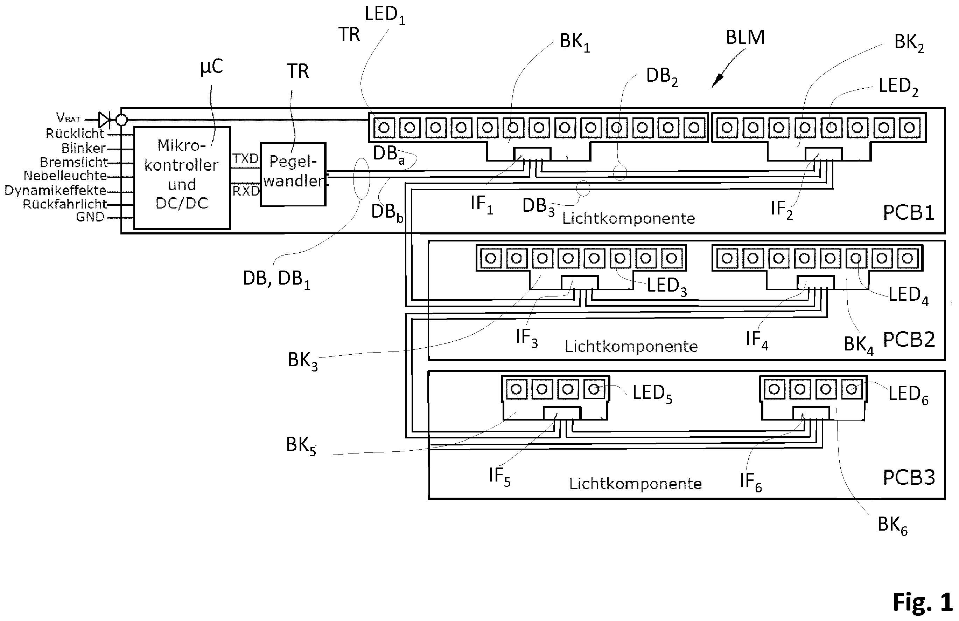

Die Figur 1 zeigt ein Beispiel für ein Rücklichtmodul (BLM) eines Kfz. Das Rücklichtmodul (BLM) weist einen Busmaster (ECU) und einen seriellen, bidirektionalen, differentiellen Zweidraht-Kommunikationsbus (DB) auf. Der serielle, bidirektionale und differentielle Zweidraht-Kommunikationsbus (DB) besteht aus einem ersten Eindrahtbus (DBₐ) und einem zweiten Eindrahtbus (DB_{b}). Die TXD- und RXD-Leitungen des Busmasters (ECU) führen zu einem Pegelwandler (TR), um den Signalpegel für den Betrieb des Zweidraht-Kommunikationsbusses DB umzusetzen. Der Busmaster (ECU) erhält von extern verschiedene Steuerbefehle, beispielsweise für die Funktionen Rücklicht, Blinker, Nebelschlussleuchte, Dynamikeffekte etc., und/oder Informationen über einen digitalen Bus. Der Busmaster (ECU) setzt diese Befehle in Bitströme um, die unter anderem Bits eines Synchronisationsfeldes der entsprechenden Datenrahmen (Bit-Strom-Paket (BP)) aufweisen. Pegelwandler und Busmaster (ECU) werden im Folgenden auch als Einheit betrachtet und mit Busmaster (ECU) gemeinsam bezeichnet.

Am Kommunikationsbus (DB) sind diverse Komponenten bzw. Teilnehmer als Busknoten BK₁ bis BK₆ angeschlossen. So sind der erste und zweite Busknoten ((BK₁) und (BK₂)) beispielhaft für die Realisierung des Blinklichts, der dritte Busknoten (BK₃) für die Realisierung des Rücklichts, der vierte und sechste Busknoten (BK₄) und (BK₆) für die Ausführung der Bremslichtfunktion und der fünfte Busknoten (BK₅) für die Realisierung des Rückfahrtlichts verantwortlich. Jeder dieser Teilnehmer bzw. jede dieser Komponenten weist eine Vielzahl von LEDs (LED₁ bis LED₆) auf, die von jeweiligen LED-Treibern angesteuert werden.

Jeder Busknoten ist darüber hinaus mit einer digitalen Schnittstelle (IF₁ bis IF₆) in Form einer UART versehen. Ferner weist jeder Busknoten bedarfsweise einen Mikrocontroller ([µC₁] bis [µC₆]) und ferner einen Taktgeber ([CLKG₁] bis [CLKG₆]) auf, um auf dem differentiellen Zweidraht-Kommunikationsbus (DB) liegende Nachrichten synchron zur Versendung der Bits der Bitströme lesen zu können bzw. um derartige Bitströme synchron zum Lesen durch andere Teilnehmer bzw. den Busmaster (ECU) auf den Zweidraht-Kommunikationsbus (DB) legen zu können.

Zur Vereinfachung der Hardware der Ansteuerung der Komponenten eines Kfz-Moduls trägt darüber hinaus bei, dass auf der Ebene der Komponenten bzw. Zweidraht-Kommunikationsbus-Teilnehmer mit festen Abtastpunkten statt mit einer dynamischen Anpassung der Abtastpunkte gearbeitet wird. Letzteres ist wesentlich aufwendiger. Die Taktgewinnung pro Teilnehmer erfolgt durch Auslesen der Synchronisationsinformationen der Bitströme, die vorteilhafterweise zu Beginn eines Bitstroms gesendet werden.

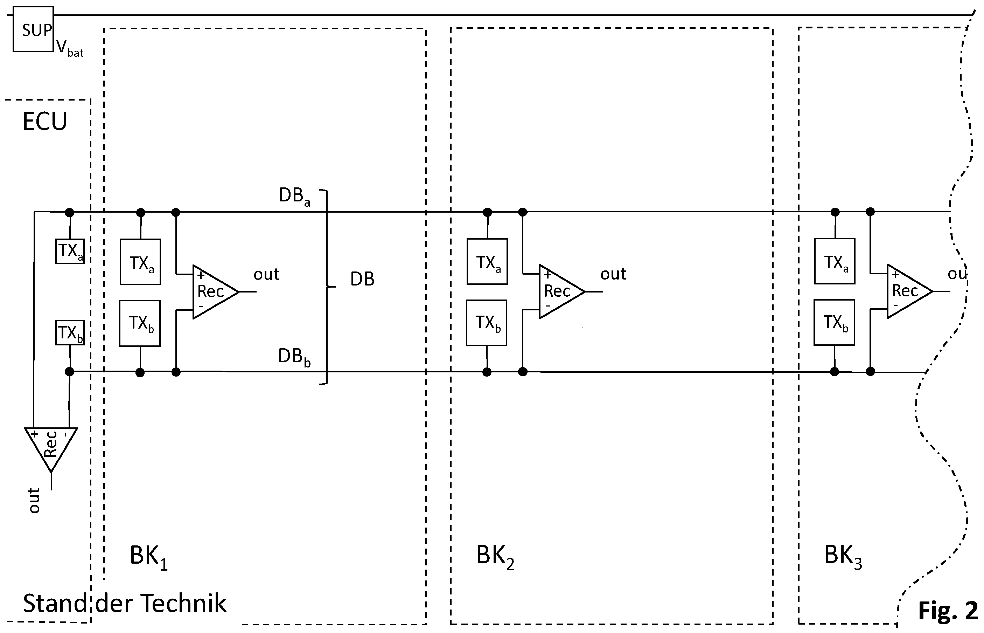

Figur 2 zeigt einen Zweidraht-Kommunikationsbus (DB), wie er beispielsweise aus dem Stand der Technik bekannt ist. Der serielle, bidirektionale, differentielle Zweidraht-Kommunikationsbus (DB) besteht aus einem ersten Eindrahtbus (DBₐ) und einem zweiten Eindrahtbus (DB_{b}).

Der serielle, bidirektionale, differentielle Zweidraht-Kommunikationsbus (DB) verbindet den Busmaster (ECU) mit mehreren Busknoten ((BK₁) bis [BKₙ]).

### Figur 3

Der Busmaster (ECU) verfügt über einen ersten Treiber [TRa] mit dem er den ersten Eindrahtbus (DBₐ) in einen ersten Zustand (Z1) oder einen zweiten Zustand (Z2) oder einen dritten Zustand (Z3) bringen kann.

Ein erster Treiber kann als CAN-Treiber bevorzugt zwei von drei erlaubten Zuständen einnehmen: In einem ersten Zustand legt er einen ersten logischen Pegel (Z1) auf den ersten Eindrahtbus (DBₐ). In einem zweiten Zustand legt er einen dritten logischen Pegel (Z3) auf den ersten Eindrahtbus (DBₐ). Der erste Treiber des Busmasters (ECU) arbeitet außerdem im Adressierungszustand des Datenbussystems und der Busknoten ((BK₁) bis [BK_{n'}]) als erste Stromsenke für die ersten Adressierungsströme der ersten Adressierungsstromquellen ((Iq₁) bis [Iqₙ]) der Busknoten ((BK₁) bis [BKₙ]) und deren erste Ruheströme. Bevorzugt nimmt der erste Treiber eines Busknotens ((BK₁) bis [BKₙ]) bzw. des Busmasters (ECU) den ersten Zustand (Z1) an, wenn der zweite Treiber [TR_{b}] des betreffenden Busknotens ((BK₁) bis [BKₙ]) den zweiten Zustand (Z2) annimmt. Hierdurch wird das Signal mit einem ersten differentiellen Pegel (z1) differentiell eingeprägt. Bevorzugt nimmt der erste Treiber eines Busknotens ((BK₁) bis [BKₙ]) bzw. des Busmasters (ECU) den dritten Zustand (Z3) an, wenn der zweite Treiber (TR_{b}) des betreffenden Busknotens ((BK₁) bis [BKₙ]) den dritten Zustand (Z3) annimmt. Hierdurch wird das Signal mit einem dritten differentiellen Pegel (z3) differentiell eingeprägt.

Der erste Treiber kann auch als RS485-Treiber bevorzugt zwei von zwei erlaubten Zuständen einnehmen: In einem ersten Zustand legt er einen ersten logischen Pegel (Z1) auf den ersten Eindrahtbus (DBₐ). In einem zweiten Zustand legt er einen zweiten logischen Pegel (Z2) auf den ersten Eindrahtbus (DBₐ). Der erste Treiber des Busmasters (ECU) arbeitet außerdem im Adressierungszustand des Datenbussystems und der Busknoten ((BK₁) bis [BKₙ]) als erste Stromsenke für die ersten Adressierungsströme der ersten Adressierungsstromquellen ((Iq₁) bis [Iqₙ]) der Busknoten ((BK₁) bis [BKₙ]) und deren erste Ruheströme. Bevorzugt nimmt der erste Treiber eines Busknotens ((BK₁) bis [BKₙ]) bzw. des Busmasters (ECU) den ersten Zustand (Z1) an, wenn der zweite Treiber [TR_{b}] des betreffenden Busknotens ((BK₁) bis [BKₙ]) den zweiten Zustand (Z2) annimmt. Hierdurch wird das Signal mit einem ersten differentiellen Pegel (z1) differentiell eingeprägt. Bevorzugt nimmt der erste Treiber eines Busknotens ((BK₁) bis [BKₙ]) bzw. des Busmasters (ECU) den zweiten Zustand (Z2) an, wenn der zweite Treiber [TR_{b}] des betreffenden Busknotens ((BK₁) bis [BKₙ]) den ersten Zustand (Z1) annimmt. Hierdurch wird das Signal mit einem zweiten differentiellen Pegel (z2) differentiell eingeprägt.

Außerdem verfügt der erste Treiber typischerweise über eine Teilvorrichtung zur Detektion und Vermeidung einer Buskollision im Falle eines gleichzeitigen Zugriffs auf den ersten Eindrahtbus (DBₐ) durch einen ersten Treiber eines anderen Busknotens ((BK₁) bis [BKₙ]) bzw. des Busmasters (ECU).

Ein zweiter Treiber kann als CAN-Treiber bevorzugt zwei von drei erlaubten Zuständen einnehmen: In einem ersten Zustand legt er einen zweiten logischen Pegel (Z2) auf den zweiten Eindrahtbus (DB_{b}). In einem zweiten Zustand legt er einen dritten logischen Pegel (Z3) auf den zweiten Eindrahtbus (DB_{b}). Der zweite Treiber des Busmasters (ECU) arbeitet außerdem im Adressierungszustand des Datenbussystems und der Busknoten ((BK₁) bis [BKₙ]) als zweite Stromsenke für die zweiten Adressierungsströme der zweiten Adressierungsstromquellen ((Iq'₁) bis [Iq'ₙ]) der Busknoten ((BK₁) bis [BKₙ]) und deren zweite Ruheströme. Bevorzugt nimmt der zweite Treiber eines Busknotens ((BK₁) bis [BKₙ]) bzw. des Busmasters (ECU) den zweiten Zustand (Z2) an, wenn der erste Treiber [TRₐ] des betreffenden Busknotens ((BK₁) bis [BKₙ]) den ersten Zustand (Z1) annimmt. Hierdurch wird das Signal mit einem ersten differentiellen Pegel (z1) differentiell eingeprägt. Bevorzugt nimmt der zweite Treiber eines Busknotens ((BK₁) bis [BKₙ]) bzw. des Busmasters (ECU) den dritten Zustand (Z3) an, wenn der erste Treiber [TRₐ] des betreffenden Busknotens ((BK₁) bis (BKₙ]) den dritten Zustand (Z3) annimmt. Hierdurch wird das Signal mit einem dritten differentiellen Pegel (z3) differentiell eingeprägt.

Der zweite Treiber kann auch als RS485-Treiber bevorzugt zwei von zwei erlaubten Zuständen einnehmen: In einem ersten Zustand legt er einen zweiten logischen Pegel (Z2) auf den ersten Eindrahtbus (DBₐ). In einem zweiten Zustand legt er einen ersten logischen Pegel (Z1) auf den zweiten Eindrahtbus (DB_{b}). Der zweite Treiber des Busmasters (ECU) arbeitet außerdem im Adressierungszustand des Datenbussystems und der Busknoten ((BK₁) bis [BKₙ]) als zweite Stromsenke für die zweiten Adressierungsströme der zweiten Adressierungsstromquellen ((Iq'₁) bis [Iq'n]) der Busknoten ((BK₁) bis [BKₙ]) und deren zweite Ruheströme. Bevorzugt nimmt der zweite Treiber eines Busknotens ((BK₁) bis [BKₙ]) bzw. des Busmasters (ECU) den zweiten Zustand (Z2) an, wenn der erste Treiber [TRₐ] des betreffenden Busknotens ((BK₁) bis [BKₙ]) den ersten Zustand (Z1) annimmt. Hierdurch wird das Signal mit einem ersten differentiellen Pegel (z1) differentiell eingeprägt. Bevorzugt nimmt der zweite Treiber eines Busknotens ((BK₁) bis [BKₙ]) bzw. des Busmasters (ECU) den ersten Zustand (Z1) an, wenn der erste Treiber [TRₐ] des betreffenden Busknotens ((BK₁) bis [BKₙ]) den zweiten Zustand (Z2) annimmt. Hierdurch wird das Signal mit einem zweiten differentiellen Pegel (z2) differentiell eingeprägt.

Außerdem verfügt der zweite Treiber typischerweise über eine Teilvorrichtung zur Detektion und Vermeidung einer Buskollision im Falle eines gleichzeitigen Zugriffs auf den ersten Eindrahtbus (DBₐ) durch einen zweiten Treiber eines anderen Busknotens ((BK₁) bis [BKₙ]) bzw. des Busmasters (ECU).

### Figur 2

Jeder der Busknoten ((BK₁) bis [BKₙ]) und der Busmaster (ECU) verfügen bevorzugt über einen Empfänger (Rec). Der jeweilige Empfänger (Rec) extrahiert die in den Bit-Strom-Paketen (BP) auf dem seriellen, bidirektionalen, differentiellen Zweidraht-Kommunikationsbus (DB) enthaltenen Daten (DATA) und gibt diese bevorzugt zusammen mit Fehlerinformationen über einen Ausgang (out) des Empfängers (Rec) aus. Der Empfänger (Rec) überprüft typischerweise, ob Prüfinformationen (CHKD) innerhalb von Dateninformationen (DATA) eines Bit-Strom-Pakets (BP) auf einen fehlerfreien Empfang durch den Empfänger (Rec) schließen lassen. Wurde ein Bit-Strom-Paket (BP) durch den Empfänger (Rec) nicht fehlerfrei empfangen, so signalisiert der Empfänger (Rec) dieses bevorzugt. Die eigentlichen Nutzschaltungen am Empfängerausgang (out) sind hier in der Figur 2 zur besseren Übersicht nicht eingezeichnet. Diese verarbeiten die durch den Empfänger (Rec) empfangenen Informationen (out) und steuern die Treiber [TRₐ, TR_{b}] für den jeweiligen Sendevorgang eines Busknotens ((BK₁) bis [BKₙ]) bzw. des Busmasters (ECU).

Das Datenbussystem verfügt über eine gemeinsame Versorgungsspannungsleitung (V_{bat}) und typischerweise ein gemeinsames Bezugspotenzial [GND], das in Figur 2 nicht eingezeichnet ist.

Man beachte, dass die Figur 2 trotz serieller Anordnung der Busknoten ((BK₁) bis [BKₙ]) eine Stern-Struktur des Datenbusses aufweist. Die Darstellung der Figur 2 bricht zur besseren Übersicht bei dem dritten Busknoten (BK₃) ab.

Nachstehend wird ein elektrischer und/oder elektronischer Busknoten ((BK₁) bis [BKₙ]), insbesondere innerhalb eines Kfz-Moduls, einer Innenleuchte und/oder Außenleuchte wie z.B. eines Rücklichtmoduls eines Kfz beschrieben, der einen seriellen, bidirektionalen, differentiellen Zweidraht-Kommunikationsbus (DB) mit n Busknoten (BK₁ bis [BKₙ]) aufweist. Dabei ist n eine ganze positive Zahl größer 1. Des Weiteren weist der Zweidraht-Kommunikationsbus einen Busmaster (ECU) auf. Der serielle, bidirektionale, differentielle Kommunikationsbus (DB) besteht aus einem ersten Eindrahtbus (DBₐ) und einem zweiten Eindrahtbus (DB_{b}). Jeder Busknoten (BKⱼ) der n Busknoten ((BK₁) bis [BKₙ]) verfügt über eine differentielle, serielle Schnittstelle [IFⱼ] passend zu dem seriellen, bidirektionalen, differentiellen Kommunikationsbus (DB). Jeder Busknoten (BKⱼ) der n Busknoten ((BK₁) bis [BKₙ]) weist bevorzugt einen Taktgeber [CLKGⱼ], eine Abtastvorrichtung [ATⱼ], eine Adresserkennungseinheit [ADRⱼ] und ein Busknotenadressregister [BKADRⱼ] auf. Der serielle, bidirektionale, differentielle Kommunikationsbus (DB) ist so gestaltet, dass er sich bevorzugt zumindest in einem ersten logischen Zustand (High, Z1) und in einem zweiten logischen Zustand (Low, Z2) und ggf. in einem dritten logischen Zustand (Idle, Z3) befinden kann.

Zum Ersten können Pegel des Hochgeschwindigkeits CAN-Protokolls [HS-CAN] verwendet werden. Dies wird als Erstes erläutert.

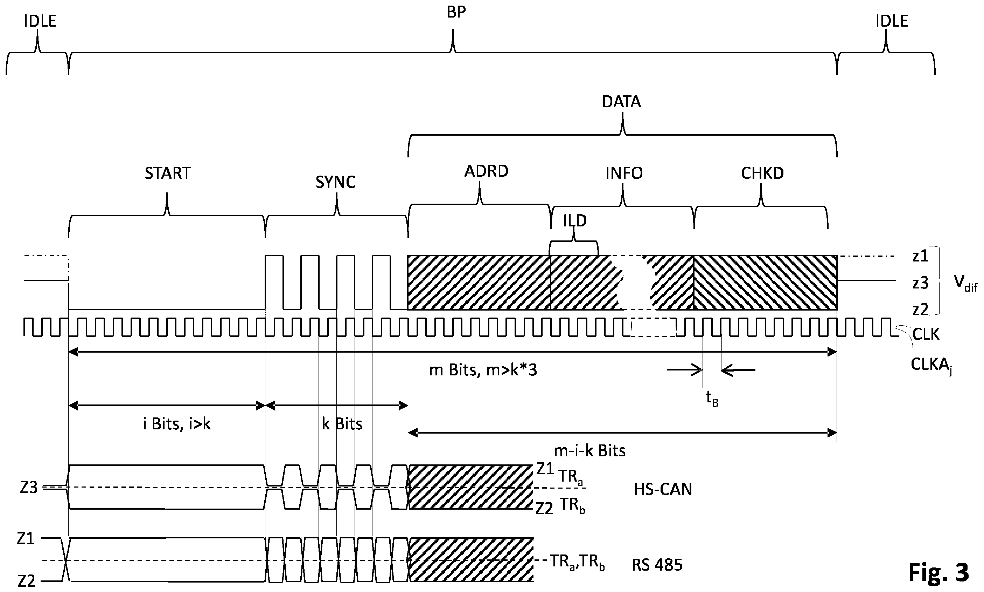

Hierzu wird der serielle, bidirektionale, differentielle Kommunikationsbus (DB) in den Transmittern (TXₐ, TX_{b}) der jeweilige Busknoten (BKⱼ) jeweils bevorzugt über jeweils einen hochhohmigen Spannungsteiler je Transmitter (TXₐ, TX_{b}) bevorzugt auf eine bevorzugt verschwindende differentielle Spannungsdifferenz zwischen dem ersten Eindrahtbus (DBₐ) und dem zweiten Eindrahtbus (DB_{b}) entsprechend dem dritten logischen Zustand (Idle, Z3) geklemmt. Jeder der Transmitter (TXₐ, TX_{b}) umfasst bevorzugt je einen Schalter, mit dem bei Ansteuerung der erste Eindrahtbus (DBₐ) des seriellen, bidirektionalen, differentiellen Kommunikationsbusses (DB) durch den ersten Treiber [TRₐ] auf den ersten logischen Zustand (High, Z1) gebracht wird und der zweite Eindrahtbus (DB_{b}) des seriellen, bidirektionalen, differentiellen Kommunikationsbusses (DB) durch den zweiten Treiber (TR_{b}) in einen zweiten logischen Zustand (Low, Z2) gebracht werden kann. Das ist in Figur 3 unten dargestellt. Werden die Schalter der Treiber [TRₐ, TR_{b}] ausgeschaltet (IDLE), so nimmt der serielle, bidirektionale, differentielle Kommunikationsbus (DB) wieder den dritten logischen Zustand (Idle, Z3) an.

Zum Zweiten können Pegel des RS484 Protokolls verwendet werden. Dies wird als Zweites erläutert.

Hierzu wird der serielle, bidirektionale, differentielle Kommunikationsbus (DB) in den Transmittern (TXₐ, TX_{b}) der jeweilige Busknoten (BKⱼ) jeweils bevorzugt über jeweils einen hochhohmigen Spannungsteiler je Transmitter (TXₐ, TX_{b}) bevorzugt auf eine differentielle Spannungsdifferenz entsprechend dem dritten logischen Zustand (Idle, Z3) geklemmt. Jeder der Transmitter (TXₐ, TX_{b}) umfasst bevorzugt je eine Halbbrücke, mit der durch zueinander inverser Ansteuerung der serielle, bidirektionale, differentielle Kommunikationsbus (DB) auf den ersten logischen Zustand (High, Z1) und in einen zweiten logischen Zustand (Low, Z2) gebracht werden kann. Werden die Halbbrücken ausgeschaltet (IDLE), so nimmt der serielle, bidirektionale, differentielle Kommunikationsbus (DB) wieder den dritten logischen Zustand (Idle, Z3) an.

### Figur 3

Die serielle Schnittstelle (IFⱼ) des mindestens einen Busknoten (BKⱼ) der n Busknoten ((BK₁) bis [BKₙ]) ist jeweils mit dem seriellen, bidirektionalen, differentiellen Kommunikationsbus (DB) verbunden, um Daten über diesen seriellen, bidirektionalen, differentiellen Kommunikationsbus (DB) zu senden und/oder von diesem zu empfangen. Sie umfasst typischerweise je Busknoten (BKⱼ) die schon erwähnten Transmitter (TXₐ, TX_{b}) und einen Empfänger (Rec). Die Takt- und Datenextraktion innerhalb der Busknoten ((BK₁) bis [BKₙ]) aus den Bit-Paketen (BP) ist in den Zeichnungen zur Vereinfachung nicht eingezeichnet, da sie dem Stand der Technik entnommen werden kann. Der Busmaster (ECU) erhält von extern Steuerbefehle für die n Busknoten ((BK₁) bis [BKₙ]) und setzt diese Steuerbefehle in über den seriellen, bidirektionalen, differentiellen Kommunikationsbus (DB) an die Busknoten ((BK₁) bis [BKₙ]) zu versendende Bitströme um. Der Busmaster (ECU) sendet in Abhängigkeit von einem Takt (CLK) innerhalb des Busmasters (ECU) die Bits der durch den Busmaster (ECU) zu versendenden Bitströme über den seriellen, bidirektionalen, differentiellen Kommunikationsbus (DB). Der Busmaster (ECU) empfängt in der Gegenrichtung von den Busknoten ((BK₁) bis [BKₙ]) erzeugte Bitströme über den seriellen, bidirektionalen, differentiellen Kommunikationsbus (DB). Taktgeber [CLKGⱼ] innerhalb eines jeden Busknotens (BKⱼ) der n Busknoten ((BK₁) bis [BKₙ]) erzeugen innerhalb jedes Busknotens (BKⱼ) dieser Busknoten ((BK₁) bis [BKₙ]) ein jeweiliges Abtastsignal [CLKAⱼ]. Die Abtastvorrichtung [ATⱼ] dieses jeweiligen Busknotens (BKⱼ) der n Busknoten ((BK₁) bis [BKₙ]) tastet dann in Abhängigkeit von dem Abtastsignal [CLKAⱼ] dieses Busknotens (BKⱼ) die über den seriellen, bidirektionalen, differentiellen Kommunikationsbus (DB) versendeten Bitströme ab. Hierbei kann es sich sowohl um Bitströme des Busmasters (ECU) an die Busknoten ((BK₁) bis [BKₙ]) als auch um Bitströme der anderen Busknoten ((BK₁) bis [BKₙ]) an den Busmaster (ECU) oder an andere Busknoten ((BK₁) bis [BKₙ]) handeln. Der betreffende Busknoten (BKⱼ) extrahiert auf diese Weise aus den Signalen auf dem seriellen, bidirektionalen, differentiellen Kommunikationsbus (DB) einen lokalen Bitstrom innerhalb dieses Busknotens (BKⱼ), aus dem Ausgang des Receivers (Rec) durch Abtastung des Ausgangssignals des Receivers (Rec) oder eines daraus abgeleiteten Signals. Der Busmaster (ECU) sendet die zu versendenden Bitströme als Folgen von Bits in Bit-Strom-Paketen (englisch Frames, BP). Auch die Busknoten versenden bevorzugt ihre zu versendenden Bitströme als Folgen von Bits in Bit-Strom-Paketen (englisch Frames, BP), die bevorzugt in ihrem Aufbau denen des Busmasters (ECU) entsprechen. Zur Vereinfachung werden hier nur die Bit-Strom-Pakete (englisch Frames, BP) des Busmasters (ECU) diskutiert. Für die Bit-Strom-Pakete (BP) der Busknoten ((BK₁) bis [BKₙ]) gilt dann Entsprechendes.

Wie zuvor erläutert, bedeutet dieser Aufbau, dass der serielle, bidirektionale, differentielle Zweidraht-Kommunikationsbus (DB), wenn weder der Busmaster (ECU) noch einer der n Busknoten ((BK₁) bis [BKₙ]) Daten über den seriellen, bidirektionalen, differentiellen Zweidraht-Kommunikationsbus (DB) überträgt, den ersten logischen Zustand (Z1) (gestrichelt in Figur 3) oder den dritten logischen Zustand (Z3) - was bevorzugt ist - annimmt.

Die vorgeschlagene bevorzugte Struktur der vom Busmaster (ECU) versendeten Bit-Strom-Pakete (BP) wird mit Hilfe von Figur3 erläutert. Das mit V_{diff} bezeichnet Signal soll den differentiellen Pegel auf dem seriellen, bidirektionalen, differentiellen Kommunikationsbus (DB) darstellen, also die Spannungsdifferenz zwischen dem ersten Eindrahtbus (DBₐ) und dem zweiten Eindrahtbus (DB_{b}).

Das mit HS-CAN bezeichnete Diagramm beschreibt die entsprechenden Einzelpegel sowie differenziellen Pegel, wenn CAN-Treiber [TRₐ, TR_{b}] verwendet werden.

Das mit RS485 bezeichnete Diagramm stellt die entsprechenden Einzelpegel sowie differenzeillen Pegel dar, wenn RS485 Treiber [TRₐ, TR_{b}] verwendet werden.

Die Treiber [TRₐ, TR_{b}] liefern im HS-CAN-Schema drei Spannungspegel, aber nur zwei differentielle Spannungspegel.

Die Treiber (TRₐ, TR_{b}) liefern im RS485-Schema zwei Spannungspegel und nur zwei differentielle Spannungspegel.

Es wird hier vorgeschlagen, dass zumindest ein Teil der von dem Busmaster (ECU) versendeten Bit-Strom-Pakete (BP) folgende Inhalte aufweist:
1. ein Startsignal (START) in Form von i Bits mit i als ganzer positiver Zahl mit i-1≤m/3 der m bits des jeweiligen Bit-Strom-Paketes (BP) mit einem zweiten logischen differentiellen Zustand (z2) auf dem seriellen, bidirektionalen, differentiellen Zweidraht-Kommunikationsbus (DB),
2. eine Synchronisationsinformation (SYNC), zur Synchronisation des Abtastsignals [CLKA;] der Taktgeber [CLKGⱼ] der Busknoten (BKⱼ) mit dem Takt (CLK) des Busmasters (ECU),
3. Dateninformationen (DATA) in Form von k bits mit k<i und k<m/3 der m bits des jeweiligen Bit-Strom-Paketes (BP) aus den restlichen Bits der m-i-k Bits der m Bits des jeweiligen Bit-Strom-Paketes (BP), wobei die Dateninformationen (DATA) Adressinformationen (ADRD) und Nutzinformationen (INFO) umfassen.

Die Adresserkennungseinheiten ([Adr₁] bis [Adrₙ]) der Busknoten ((BK₁) bis [BKₙ]) und ggf. auch des Busmasters (ECU) werten die die Adressinformationen (ADRD) der Bit-Strom-Pakete (BP) aus. Die Adresserkennungseinheiten ([Adr₁] bis [Adrₙ]) der Busknoten ((BK₁) bis [BKₙ]) lassen nur dann eine Verwendung der enthaltenen Nutzinformationen (INFO) zu, wenn der Inhalt der Adressinformationen (ADRD) mit dem Inhalt des Busknotenadressregisters [BKADRⱼ] des Busknotens (BKⱼ) korrespondiert. Bevorzugt weisen die Busknoten (BKⱼ) der n Busknoten ((BK₁) bis [BKₙ]) Mittel auf, um ein Autoadressierungsverfahren für einen Zweidrahtdatenbus durchzuführen, um das Busknotenadressregister [BAKDRⱼ] mit einer logischen Busknotenadresse zu füllen, die mit der physikalischen Position dieses Busknotens (BKⱼ) der n Busknoten ((BK₁) bis [BKₙ]) innerhalb des seriellen, bidirektionalen, differentiellen Zweidraht-Kommunikationsbusses (DB) korrespondiert. Dies ist ein wesentlicher Schritt, der im Stand der Technik nicht gelöst ist.

Gemäß einer Verfeinerung der Erfindung weist jeder Busknoten (BKⱼ) der n Busknoten ((BK₁) bis [BKₙ]) einen Mikrocontroller [µCⱼ] auf, der einige der zuvor benannten Aufgaben, wie beispielsweise die der Adresserkennungseinheit [ADRⱼ] des jeweiligen Busknotens (BKⱼ) und/oder der Abtastvorrichtung [ATⱼ] des jeweiligen Busknotens (BKⱼ) per Softwareprogramm übernehmen kann. Es wird nun vorgeschlagen, dass bevorzugt zusätzlich mindestens ein Busknoten (BKⱼ) der n Busknoten ((BK₁) bis [BKₙ]) mindestens ein Leuchtmittel [LED;] aufweist und mindestens ein Energieversorgungsmittel [EVⱼ] aufweist. Das mindestens eine Energieversorgungsmittel [EVⱼ] des mindestens einen Busknotens (BKⱼ) der n Busknoten ((BK₁) bis [BKₙ]) ist dabei dann für die Energieversorgung des mindestens einen Leuchtmittels [LED;] des mindestens einen Busknotens (BKⱼ) der n Busknoten ((BK₁) bis [BKₙ]) vorgesehen.

Wie zuvor, erzeugt der Taktgeber [CLKGⱼ] eines jeden Busknotens (BKⱼ) der n Busknoten ((BK₁) bis [BKₙ]) ein Abtastsignal [CLKAⱼ] innerhalb des jeweiligen Busknotens (BKⱼ) der n Busknoten ((BK₁) bis [BKₙ]). Die Abtastvorrichtung [ATⱼ] eines bevorzugt jeden Busknotens (BKⱼ) der n Busknoten ((BK₁) bis [BKₙ]) tastet wieder in Abhängigkeit von dem Abtastsignal [CLKAⱼ] dieses Busknotens [BKⱼ] über den seriellen, bidirektionalen, differentiellen Zweidraht-Kommunikationsbus (DB) versendete Bitströme, um einen lokalen Bitstrom innerhalb dieses Busknotens (BKⱼ) zu gewinnen. Die Bit-Strom-Pakete (BP) bestehen bevorzugt aus einer zeitlichen Abfolge von m Einzelbits gleicher zeitlicher Länge t_{B} mit m als ganzer positiver Zahl, deren zeitliche Länge t_{B} um nicht mehr als einen Faktor von +/- (0,4/m)*t_{B} und/oder besser +/- (0,2/m)*t_{B} und/oder besser +/(0,1/m)*t_{B} und/oder besser +/- (0,05/m)*t_{B} innerhalb eines Bit-Strom-Pakets (BP) variiert. Zumindest ein Teil der von dem Busmaster (ECU) versendeten Bit-Strom-Pakete (BP) weist bevorzugt folgende Inhalte auf (siehe Figur 3):
1. Ein Startsignal (START) in Form von i Bits mit i als ganzer positiver Zahl mit i-1≤m/3 mit einem zweiten differentiellen logischen Zustand (z2) auf dem seriellen, bidirektionalen, differentiellen Zweidraht-Kommunikationsbus (DB);
2. Eine Synchronisationsinformation (SYNC) aus k-Bits mit k als ganzer positiver Zahl, insbesondere mit k<i und k<m/3, zur Phasensynchronisation des Abtastsignals (CLKAⱼ) der Taktgeber [CLKGⱼ] der Busknoten (BKⱼ) auf die Phase des Takts (CLK) des Busmasters (ECU) und zur Frequenzsynchronisation des Abtastsignals [CLKA;] der Taktgeber [CLKGⱼ]der Busknoten (BKⱼ) auf die Frequenz des Takts (CLK) des Busmasters (ECU);
3. Dateninformationen (DATA) aus den restlichen Bits der m-i-k Bits der m Bits des jeweiligen Bit-Strom-Paketes (BP), wobei die Dateninformationen (DATA) Adressinformationen (ADRD) und Nutzinformationen (INFO) und Prüfinformationen (CHKD) umfassen.

Zumindest ein Teil der Nutzinformationen (INFO) umfasst dabei Beleuchtungsinformationen (ILD) zur Steuerung der Energieversorgung der Leuchtmittel [LED;] des Busknotens (BKⱼ) durch das Energieversorgungsmittel [EVⱼ] des Busknotens (BKⱼ) in Abhängigkeit von diesen Beleuchtungsinformationen. Hierzu wird typischerweise ein Beleuchtungsregister innerhalb des Energieversorgungsmittels [EVⱼ] mit einem Wert in Abhängigkeit von der empfangenen Beleuchtungsinformation (ILD) beschrieben, was die Abstrahleigenschaften wie Farbe, Farbtemperatur und Helligkeit der angeschlossenen Leuchtmittel [LED;] bestimmt. Damit diese Daten durch den betreffenden Busknoten (BKⱼ) akzeptiert werden, muss der logische Inhalt der Adressinformationen (ADRD) mit dem Inhalt des Busknotenadressregisters [BKADRⱼ] des Busknotens (BKⱼ) übereinstimmen. Ist dies nicht der Fall, werden die Dateninformationen (DATA) ignoriert. Gleiches ist der Fall, wenn die Überprüfung der Integrität der empfangenen Dateninformationen (DATA) mittes der ebenfalls empfangenen Prüfdaten (CHKD) ergibt, dass der Empfang fehlerhaft war. Die jeweilge Adresserkennungseinheit [ADRⱼ] des jeweiligen Busknotens (BKⱼ) wertet die Adressinformation (ADRD) eines empfangenen Bit-Strom-Pakets (BP) jeweils aus und lässt nur dann eine Verwendung der enthaltenen Nutzinformationen (INFO) durch den Rest der Busknotenvorrichtungen des Busknotens (BKⱼ) zu, wenn der Inhalt der empfangenen Adressinformationen (ADRD) mit dem Inhalt des Busknotenadressregisters [BKADRⱼ] des Busknotens (BKⱼ) korrespondiert und fehlerfrei ist. Im Gegensatz zum Stand der Technik weisen Busknoten ((BK₁) bis [BKₙ]) Mittel auf, um ein Autoadressierungsverfahren für einen seriellen, bidirektionalen und differentiellen Kommunikationsbus (DB) durchzuführen. Als Ergebnis eines solchen Autoadressierungsverfahrens wird das Busknotenadressregister [BAKDRⱼ] dieser Busknoten ((BK₁) bis [BKₙ]) mit einer logischen Busknotenadresse gefüllt, die mit der physikalischen Position dieses Busknotens (BKⱼ) der n Busknoten ((BK₁) bis [BKₙ]) innerhalb des seriellen, bidirektionalen, differentiellen Zweidraht-Kommunikationsbusses (DB) korrespondiert.

Die zuvor beschriebenen Prüfungen können weiter genutzt werden. In einer ersten Variante der Vorrichtung werden der Busmaster (ECU) und/oder Busknoten ((BK₁) bis [BKₙ]) mit Mitteln ausgestattet, um aufgrund der Auswertung der Prüfinformationen (CHKD) auf einen nicht korrekt laufenden Taktgeber [CLKGⱼ] eines oder mehrerer Busknoten (BKⱼ) zu schließen.

Im Folgenden werden verschiedene beispielhafte Autoadressierungsverfahren und andere Varianten beschrieben, die beispielhaft verwendet werden können:

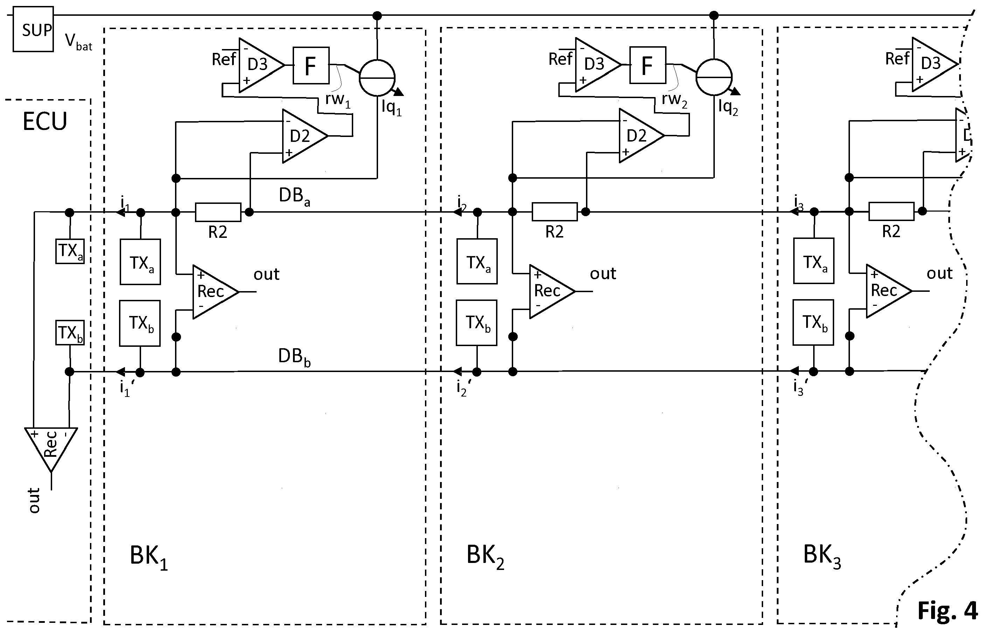

### ASYMMETRISCHE AUTOADRESSIERUNG DER BUSKNOTEN MIT BUS-SHUNT-WIDERSTÄNDEN, DIE VON DEM EIGENEN ADRESSIERUNGSSTROM DES BETREFFENDEN BUSKNOTENS NICHT DURCHSTRÖMT WERDEN (FIG. 4)

### Figur 4

Es ist nun typischerweise gewünscht, dass die Busknoten ((BK₁) bis [BKₙ]) ihre physikalische Position innerhalb des Datenbussystems in dem seriellen, bidirektionalen, differentiellen Zweidraht-Kommunikationsbus (DB) selbstständig feststellen und eine darauf basierende Busknotenadresse erhalten, sodass die logische Adresse mit der physikalischen Adresse korrespondiert. Dies hat den Vorteil, dass bei gleichartig aufgebauten Busknoten ((BK₁) bis [BKₙ]) nur eine Art von Busknoten in der Fertigung vorgehalten werden muss, was Fehlermöglichkeiten verhindert und Logistik verbessert. Um eine solche Autoadressierung durchzuführen, könnte man nun auf die Idee kommen, eine Autoadressierung einzubauen. Dies ist in Figur 4 dargestellt. Beispielhaft ist hier in den ersten Eindrahtbus (DBₐ) ein erster Bus-Shunt-Widerstand (R2) je Busknoten ((BK₁) bis [BKₙ]) eingefügt. Ein zweiter Differenzverstärker (D2) dient zur Messung des ersten Stromes durch den ersten Eindrahtbus (DBₐ) mittels des ersten Shunt-Widerstands (R2). Der Ausgang des zweiten Differenzverstärkers (D2), der zur Messung des ersten Stromes durch den ersten Eindrahtbus (DBₐ) dient, ist mit einem dritten Komparator (D3) verbunden, der den Ausgangswert des zweiten Differenzverstärkers (D2) mit einem ersten Referenzwert (Ref) vergleicht. Dies entspricht in seiner Wirkung einem Vergleich des ersten Stroms im ersten Eindrahtbus (DBₐ) durch den ersten Bus-Shunt-Widerstand (R2) mit einem ersten Referenzstrom [I_{ref}]. Das Datenbussystem mit seinen Buknoten ((BK₁) bis [BKₙ]) kann nun durch den Busmaster (ECU) mittels eines speziellen Bus-Signals in einen Adressierungszustand und in einen Normalzustand versetzt werden. Während des Adressierungszustands wird ein Autoadressierungsverfahren durchgeführt. Ist das Datenbussystem im Adressierungszustand, so befinden sich die Busknoten ((BK₁) bis [BKₙ]), die das Autoadressierungsverfahren durchführen können, in einem entsprechenden Adressierungszustand der Busknoten. Die erste Adressierungsstromquelle (Iqⱼ) (mit 1≤j≤n) des jeweiligen Busknotens (BKⱼ) wird im Normalzustand abgeschaltet oder erfüllt eine andere Funktion wie beispielsweise die Energieversorgung eines Leuchtmittels [LEDⱼ]. Die erste Adressierungsstromquelle (Iqⱼ) (mit 1≤j≤n) des jeweiligen Busknotens (BKⱼ) wird im Adressierungszustand abgeschaltet, wenn der jeweilige Busknoten (BKⱼ) mittels dieser ersten Mittel (R2, D2, D3) einen ersten Strom durch seinen ersten Bus-Shunt-Widerstand (R2) detektiert, der oberhalb eines Schwellwertes entsprechend dem ersten Referenzstrom[I_{Ref}] liegt. In dem Beispiel der Figur 4 speist die jeweilige erste Adressierungsstromquelle (Iqⱼ) eines Busknotens (BKⱼ) ihren ersten Adressierungsstrom vom Busmaster (ECU) aus gesehen vor dem jeweiligen ersten Bus-Shunt-Widerstand (R2) des jeweiligen Busknotens (BKⱼ) in den ersten Eindrahtbus (DBₐ) ein, wenn der Busknoten (BKⱼ) mittels der zuvor beschriebenen ersten Mittel (R2, D2, D3) feststellt, dass nur ein erster Strom unterhalb dieses Schwellwerts durch seinen ersten Bus-Shunt-Widerstand (R2) in Richtung Busmaster (ECU) fließt. Dies hat den Nachteil, dass ein Selbsttest des Busknotens (BKⱼ) bei diesem Einspeisepunkt des ersten Adressierungsstromes nicht möglich ist. Außerdem kann es im Einschaltvorgang zu einer Überlastung des ersten Treibers [TRₐ] des Busmasters (ECU) kommen. Daher muss der erste Adressierungsstrom der ersten Adressierungsstromquellen ((Iq₁) bis [Iqₙ]) auf einen n-ten Teil des maximalen Stromwerts begrenzt werden, den der erste Treiber [TRₐ] noch aufnehmen kann. Dies begrenzt den Widerstandswert des ersten Bus-Shunt-Widerstands (R2) nach unten, da ansonsten der Pegel des Spannungsabfalls über den ersten Bus-Shunt-Widerstand (R2) eines Busknotens (BKⱼ) zu klein für eine Detektion durch die ersten Mittel (R2, D2, D3) dieses Busknotens (BKⱼ) würde. Dies führt zu einer erhöhten Sensibilität gegenüber elektromagnetischen Einstrahlungen, was eigentlich vermieden werden soll. Außerdem führt die Asymmetrie zwischen dem ersten Eindrahtbus (DBₐ) der Figur 4 und dem zweiten Eindrahtbus (DB_{b}) der Figur 4 zu Einkopplungen von Gleichtaktstörungen in das differenzielle Signal auf dem seriellen, bidirektionalen, differentiellen Zweidraht-Kommunikationsbus (DB), was auch vermieden werden soll. Stellt ein Busknoten (BKⱼ) im Adressierungszustand nach einer gewissen, vorgegebenen Wartezeit nach Einnahme des Adressierungszustands fest, dass seine erste Adressierungsstromquelle (Iqⱼ) noch nicht abgeschaltet ist, so ist er der letzte noch nicht mit einer gültigen Busknotenadresse versehene Busknoten (BKⱼ). Er übernimmt dann eine typischerweise vom Busmaster (ECU) angebotene zu vergebende Busknotenadresse als seine neue gültige Busknotenadresse. Da er dann über eine gültige Busknotenadresse verfügt, schaltet er dann seine Adressierungsstromquelle (Iqⱼ) ab und wartet dann das Ende des Adressierungszustands des Datenbussystems ab ohne seine Adressierungsstromquelle (Iqⱼ) vor diesem Ende des Adressierungszustands des Datenbussystems erneut einzuschalten. Der Busknoten [BKⱼ₋₁], der als nächster Busknoten im nächsten Initialisierungslauf dann feststellt, dass seine Adressierungsstromquelle (Iqⱼ) nicht abgeschaltet ist, übernimmt dann die nächste vom Busmaster (ECU) angebotene zu vergebende Busknotenadresse als seine gültige Busknotenadresse und so fort. Dies wird fortgeführt, bis alle Busknoten ((BK₁) bis [BKₙ]) des Datenbussystems auf diese Weise eine gültige Busknotenadresse bekommen haben. Der Busmaster versetzt dann typischerweise anschließend das Datenbussystem und dessen Busknoten ((BK₁) bis [BKₙ]) wieder in den Normalzustand, wobei die gültigen Busknotenadressen beibehalten werden. Dieses empfohlene Beibehalten der gültigen Busknotenadressen beim Übergang vom Adressierungszustand in den Normalzustand gilt bevorzugt für das ganze Dokument.

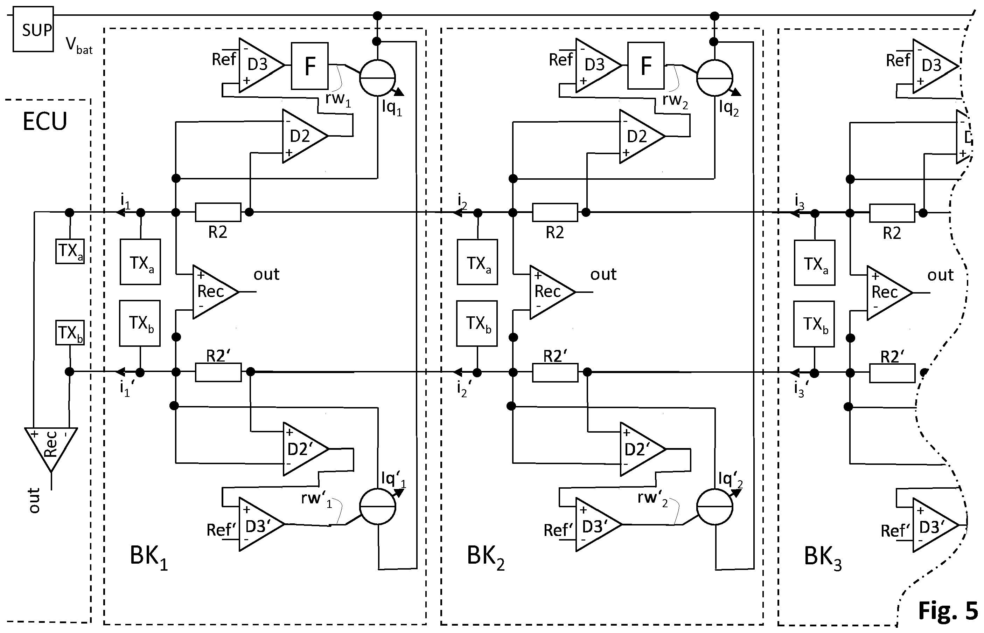

### SYMMETRISCHE AUTOADRESSIERUNG DER BUSKNOTEN MIT BUS-SHUNT-WIDERSTÄNDEN, DIE VON DEM EIGENEN ADRESSIERUNGSSTROM DES BETREFFENDEN BUSKNOTENS NICHT DURCHSTRÖMT WERDEN (FIG. 5)

### Figur 5

Ein sich bei der Autoadressierung ergebendes Problem ist, wie erwähnt, das der Symmetrie. Da es sich bei dem seriellen, bidirektionalen, differentiellen Zweidraht-Kommunikationsbus (DB) um einen differentiellen Bus handelt, sollten die beiden Eindrahtbusse (DBₐ und DB_{b}) möglichst symmetrisch konstruiert werden, um keinen Angriffspunkt für Gleichtaktstörungen zu bieten. Das Datenbussystem sollte daher Busknoten (BKⱼ) mit für den Zweidraht-Kommunikationsbus (DB), der aus einem ersten Eindrahtbus (DB₁) und einem zweiten Eindrahtbus (DB₂) besteht, einem ersten Bus-Shunt-Widerstand (R2), der in den ersten Eindrahtbus (DB₁) eingefügt ist, und mit einem zweiten Bus-Shunt-Widerstand (R2') aufweisen, der in den zweiten Eindrahtbus (DB₂) eingefügt ist. Ein entsprechender Vorschlag basierend auf Figur 4 ist in Figur 5 gezeigt. Die beiden Bus-Shunt-Widerstände (R2, R2') je Busknoten (BKⱼ) der Busknoten ((BK₁) bis [BKₙ]) sind bevorzugt monolithisch integriert sowie mit einer relativen Widerstandswertabweichung innerhalb des jeweiligen Busknotens (BKⱼ) von weniger als 10% und/oder besser weniger als 5% und/oder besser weniger als 2% und/oder besser weniger als 1% und/oder besser weniger als 0,5% matchend gefertigt.

Jeder Busknoten (BKⱼ) ist nun zusätzlich zu den ersten Mitteln (R2, D2, D3) zur Erfassung des ersten Stromes durch den ersten Bus-Shunt-Widerstand (R2) im ersten Eindrahtbus (DBₐ) mit zweiten Mitteln (R2', D2', D3') zur Erfassung des zweiten Stromes durch den zweiten Bus-Shunt-Widerstand (R2') im zweiten Eindrahtbus (DB_{b}) ausgestattet.

Beispielhaft ist hier nun auch in den zweiten Eindrahtbus (DB_{b}) ein zweiter Bus-Shunt-Widerstand (R2') je Busknoten ((BK₁) bis [BKₙ]) eingefügt. Ein weiterer zweiter Differenzverstärker (D2') dient zur Messung des zweiten Stromes durch den zweiten Eindrahtbus (DB_{b}) anhand des zweiten Shunt-Widerstands (R2') des betreffenden Busknotens (BKⱼ). Der Ausgang des weiteren zweiten Differenzverstärkers (D2'), der zur Messung des zweiten Stromes durch den zweiten Eindrahtbus (DB_{b}) dient, ist mit einem weiteren dritten Komparator (D3') verbunden, der den Ausgangswert des weiteren zweiten Differenzverstärkers (D2') mit einem weiteren Referenzwert (Ref'), der typischerweise gleich dem bereits zuvor genannten Referenzwert (Ref) ist, vergleicht. Dies entspricht in seiner Wirkung einem Vergleich des zweiten Stroms im zweiten Eindrahtbus (DB_{b}) durch den zweiten Bus-Shunt-Widerstand (R2') mit einem zweiten Referenzstrom [I'_{ref}], der typischerweise gleich dem zuvor genannten ersten Referenzstrom [I_{ref}] gewählt wird. Die zweite Adressierungsstromquelle (Iq';) (mit 1≤j≤n) des jeweiligen Busknotens (BKⱼ) wird abgeschaltet, wenn der jeweilige Busknoten (BKⱼ) mittels dieser zweiten Mittel (R2', D2', D3') einen ersten Strom durch seinen zweiten Bus-Shunt-Widerstand (R2') detektiert, der oberhalb eines Schwellwertes entsprechend dem ersten Referenzstrom [I_{Ref}] liegt. In dem Beispiel der Figur 5 speist die jeweilige zweite Adressierungsstromquelle (Iq';) eines Busknotens (BKⱼ) den zweiten Adressierungsstrom vom Busmaster (ECU) aus gesehen ebenfalls vor dem jeweiligen zweiten Bus-Shunt-Widerstand (R2') des jeweiligen Busknotens (BKⱼ) in den zweiten Eindrahtbus (DB_{b}) ein, wenn der Busknoten (BKⱼ) mittels der zuvor beschriebenen zweiten Mittel (R2', D2', D3') feststellt, dass nur ein zweiter Strom unterhalb dieses Schwellwerts durch seinen zweiten Bus-Shunt-Widerstand (R2') in Richtung Busmaster (ECU) fließt. Dies hat wie zuvor den Nachteil, dass ein Selbsttest des Busknotens (BKⱼ) nicht möglich ist. Außerdem kann es auch hier im Einschaltvorgang zu einer Überlastung des zweiten Treibers [TR_{b}] des Busmasters (ECU) kommen. Daher muss der zweite Adressierungsstrom der zweiten Adressierungsstromquellen ((Iq'₁) bis [Iq'ₙ]) auf einen n-ten Teil des maximalen Stromwerts begrenzt werden, den der zweite Treiber [TR_{b}] noch aufnehmen kann. Dies begrenzt den Widerstandswert des zweiten Bus-Shunt-Widerstands (R2') nach unten, da ansonsten der Pegel des Spannungsabfalls über den zweiten Bus-Shunt-Widerstand (R2') eines Busknotens (BKⱼ) zu klein für eine Detektion durch die zweiten Mittel (R2', D2', D3') würde. Dies führt zu einer erhöhten Sensibilität gegenüber elektromagnetischen Einstrahlungen, was vermieden werden soll. Die Symmetrie zwischen dem ersten Eindrahtbus (DBₐ) der Figur 5 und dem zweiten Eindrahtbus (DB_{b}) der Figur 5 führt nun jedoch schon zu einer verringerten Einkopplung von Gleichtaktstörungen in das differenzielle Signal auf dem seriellen, bidirektionalen, differentiellen Zweidraht-Kommunikationsbus (DB), was ein Vorteil ist.

Bevorzugt werden immer beide Adressierungsstromquellen (Iqⱼ, Iq'ⱼ) eines Busknotens (BKⱼ) abgeschaltet, wenn der Busknoten (BKⱼ) mittels der zuvor beschriebenen ersten Mittel (R2, D2, D3) feststellt, dass ein erster Strom oberhalb des Schwellwerts durch seinen ersten Bus-Shunt-Widerstand (R2) in Richtung Busmaster (ECU) fließt oder mittels der zuvor beschriebenen zweiten Mittel (R2', D2', D3') feststellt, dass nur ein zweiter Strom oberhalb dieses Schwellwerts durch seinen zweiten Bus-Shunt-Widerstand (R2') in Richtung Busmaster (ECU) fließt.

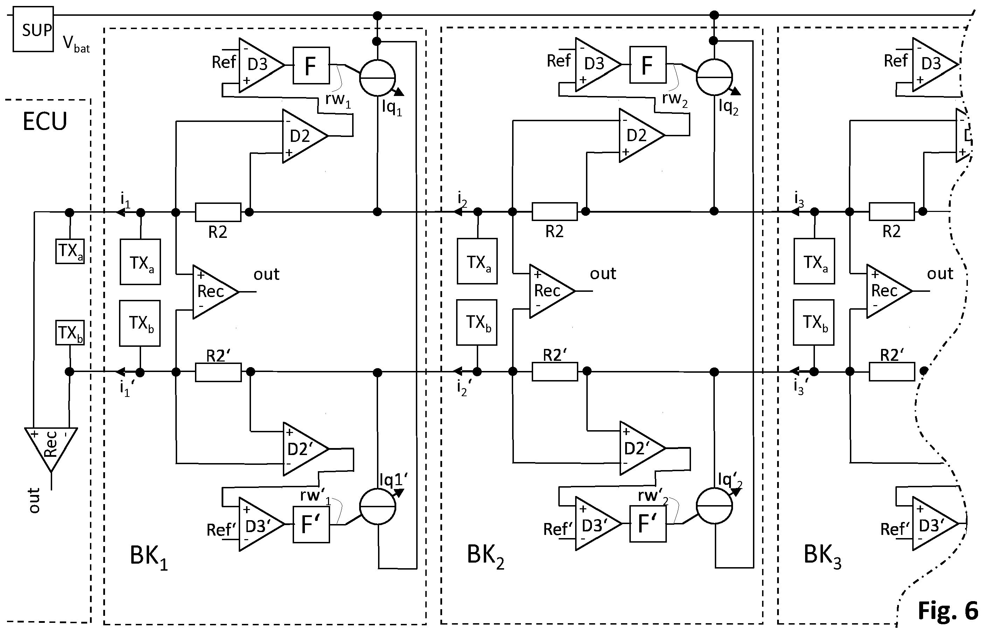

### SYMMETRISCHE AUTOADRESSIERUNG DER BUSKNOTEN MIT BUS-SHUNT-WIDERSTÄNDEN, DIE VON DEM EIGENEN ADRESSIERUNGSSTROM DES BETREFFENDEN BUSKNOTENS DURCHSTRÖMT WERDEN (FIG. 6)

### Figur 6

Figur 6 zeigt nun einen anderen Vorschlag basierend auf der Figur 5. Wesentlicher Unterschied zur Figur 5 ist nun, dass die jeweiligen ersten Adressierungsstromquellen ((Iq₁) bis [Iqₙ]) vom Bus-Master (ECU) aus gesehen den ersten Adressierungsstrom hinter den ersten Bus-Shunt-Widerständen (R2) in der Adressierungsphase, in der der jeweilige Busknoten (BKⱼ) in einem Adressierungszustand ist, einspeisen, wenn der jeweilige Busknoten (BKⱼ) mittels der ersten Mittel (R2, D2, D3) einen Stromwert des ersten Stroms durch den ersten Bus-Shunt-Widerstand (R2) feststellt, der kleiner als ein vorgegebener erster Referenzstromwert [I_{ref}] ist. Der dritte Komparator (D3) ist bevorzugt nun ein dritter Differenzverstärker (D3). Im Gegensatz zum Vorschlag der Figur 5 wird der erste Adressierungsstrom der jeweiligen ersten Adressierungsstromquelle (Iqⱼ) des jeweiligen Busknotens (BKⱼ) nun jedoch nachgeregelt, bis der erste Strom durch den ersten Bus-Shunt-Widerstand (R2) dem vorgegebenen ersten Referenzstrom [I_{ref}] entspricht. Analog dazu speisen in Abweichung von Figur 5 die jeweiligen zweiten Adressierungsstromquellen ((Iq'₁) bis [Iq'n]) vom Bus-Master (ECU) aus gesehen den jeweiligen zweiten Adressierungsstrom ebenfalls hinter den entsprechenden zweiten Bus-Shunt-Widerständen (R2') in der Adressierungsphase, in der der jeweilige Busknoten (BKⱼ) in einem Adressierungszustand ist, ein, wenn der jeweilige Busknoten (BKⱼ) mittels der zweiten Mittel (R2', D2', D3') einen Stromwert des zweiten Stroms durch den zweiten Bus-Shunt-Widerstand (R2) feststellt, der kleiner als ein vorgegebener zweiter Referenzstromwert [I'_{ref}] ist, der bevorzugt gleich dem ersten Referenzstromwert [I_{ref}] ist. Der weitere dritte Komparator (D3') ist bevorzugt nun ein weiterer dritter Differenzverstärker (D3'). Im Gegensatz zum Vorschlag der Figur 5 wird der zweite Adressierungsstrom der jeweiligen zweiten Adressierungsstromquelle (Iq';) des jeweiligen Busknotens (BKⱼ) nun jedoch ebenfalls nachgeregelt, bis der zweite Strom durch den zweiten Bus-Shunt-Widerstand (R2') dem vorgegebenen zweiten Referenzstrom [I'_{ref}] entspricht.

Natürlich ist es möglich in der Konfiguration der Figur 6 die Adressierungsstromquellen ((Iq₁) bis [Iqₙ], (Iq'₁) bis [Iq'n]) zu schalten statt zu regeln.

Der Busknoten (BKⱼ) ist somit mit einer ersten Adressierungsstromquelle (Iqⱼ) zur Ermittlung der Busposition des Busknotens (BKⱼ) im seriellen, bidirektionalen, differentiellen Zweidraht-Kommunikationsbus (DB) versehen, die einen ersten Adressierungsstrom in der Art in den ersten Eindrahtbus (DBₐ) des seriellen, bidirektionalen, differentiellen Zweidraht-Kommunikationsbusses (DB) geregelt zusätzlich derart einspeisen kann, dass der erste Gesamtstrom (iⱼ) durch den ersten Bus-Shunt-Widerstand (R2) des Busknotens (BKⱼ) einem vorgegebenen oder berechneten oder sonst wie bestimmten ersten Summenstrom [I_{ref}] entspricht. Bevorzugt durchströmt der erste Adressierungsstrom den ersten Bus-Shunt-Widerstand (R2). Bevorzugt ist der jeweilige Busknoten (BKⱼ) nun mit einer zweiten Adressierungsstromquelle (Iq'ⱼ) zur Ermittlung der Busposition des Busknotens (BKⱼ) im seriellen, bidirektionalen, differentiellen Zweidraht-Kommunikationsbus (DB), die einen zweiten Adressierungsstrom in der Art in den zweiten Eindrahtbus (DB_{b}) des seriellen, bidirektionalen, differentiellen Zweidraht-Kommunikationsbusses (DB) geregelt zusätzlich einspeisen kann, dass der zweite Gesamtstrom (iⱼ) durch den zweiten Bus-Shunt-Widerstand (R2') des Busknotens (BKⱼ) einem vorgegebenen oder berechneten oder sonst wie bestimmten zweiten Summenstrom [I'_{ref}] entspricht. Der zweite Adressierungsstrom durchströmt nun den zweiten Bus-Shunt-Widerstand (R2'). Für die Symmetrie ist es hilfreich, wenn die beiden Adressierungsstromquellen (Iqⱼ, Iq'ⱼ) matchend ausgeführt sind. Auch sollten alle messenden und regelnden Komponenten des Regelkreises für diese beiden Adressierungsstromquellen (Iqⱼ, Iq'ⱼ) matchend ausgeführt werden, um volle Symmetrie zu erzielen.

### Figuren 7 bis 9

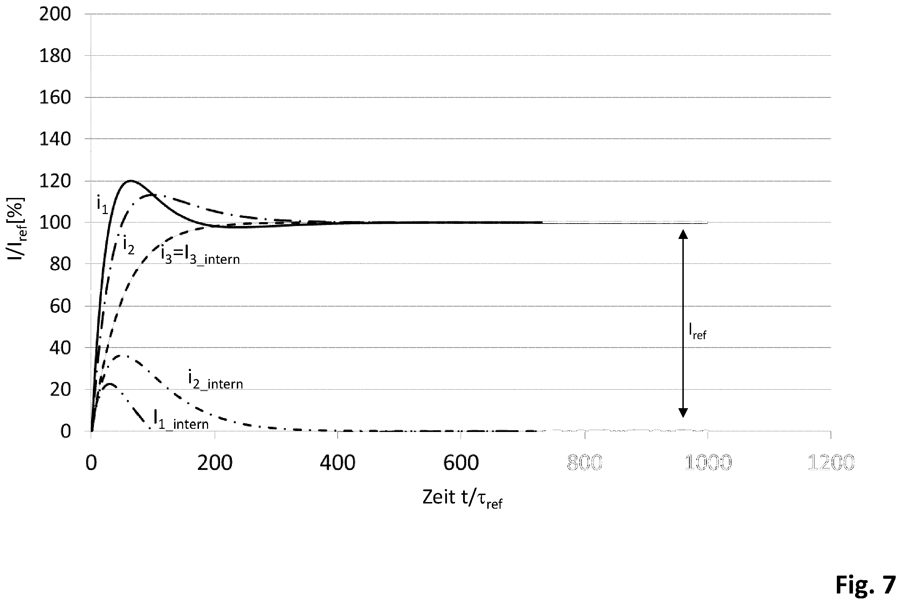

Die Figuren 7 bis 9 stellen vorteilhafte Eigenschaften der Regelung dar. Die Regelung wird am Beispiel der ersten Adressierungsstromquellen ((Iq₁) bis [Iqₙ]) erläutert, trifft aber auch auf die zweiten Adressierungsstromquellen ([Iq'₁] bis [Iq'ₙ]) in analoger Weise zu. Die Einheiten für Abszisse und Ordinate sind mit [an] als Platzhalter für eine beliebige Einheit (arbitrary unit) bezeichnet.

Die Regelcharakteristik für die erste Adressierungsstromquelle (Iqⱼ) eines Busknotens (Bkⱼ) wird jeweils bevorzugt durch ein erstes Filter (F) bzw. einen ersten Regler erzeugt, das bzw. der aus dem Ausgangssignal des dritten Differenzverstärkers (D3) ein erstes Regelsignal [rwⱼ] erzeugt, mit dem die erste Adressierungsstromquelle (Iqⱼ) des betreffenden Busknotens (BKⱼ) gesteuert wird. Die Regelcharakteristik für die zweite Adressierungsstromquelle (Iq';) eines Busknotens (Bkⱼ) wird jeweils bevorzugt durch ein zweites Filter (F) oder einen zweiten Regler erzeugt, das bzw. der aus dem Ausgangssignal des weiteren dritten Differenzverstärkers (D3') ein zweites Regelsignal (rw'ⱼ) erzeugt, mit dem die zweite Adressierungsstromquelle (Iq';) des betreffenden Busknotens (BKⱼ) gesteuert wird.

### Figur 7

Figur 7 zeigt beispielhaft den Verlauf des Ausgangsstroms (i₁) des ersten Busknotens (BK₁), des Ausgangsstroms (i₂) des zweiten Busknotens (BK₂) und des Ausgangsstroms (i₃) des dritten Busknotens (BK₃) in einem beispeilhaften Datenbussystem mit n=3 Busknoten (BK₁ bis BK₃). Außerdem zeigt sie den ersten Adressierungsstrom (I_{1_intern}) der ersten Adressierungsstromquelle (Iq₁) des ersten Busknotens (BK₁), den ersten Adressierungsstrom (I_{2_intern}) der ersten Adressierungsstromquelle (Iq₂) des zweiten Busknotens (BK₂) und den ersten Adressierungsstrom (I_{3_intern}) der ersten Adressierungsstromquelle (Iq₃) des dritten Busknotens (BK₃). Hier sind die Zeitkonstanten für die Heraufregelung des ersten Adressierungsstroms der ersten Adressierungsstromquellen und die Herunterregelung des ersten Adressierungsstroms der ersten Adressierungsstromquellen in etwa gleich. Es kommt zu einem Überschwinger. Gut zu erkennen ist, dass der erste Adressierungsstrom (I_{1_intern}) der ersten Adressierungsstromquelle (Iq₁) des ersten Busknotens (BK₁) und der erste Adressierungsstrom (I_{2_intern}) der ersten Adressierungsstromquelle (Iq₂) des zweiten Busknotens (BK₂) von den Reglern dieser ersten Autoadressierungsbusknoten herunter geregelt werden, während der erste Adressierungsstrom (I_{3_intern}) der ersten Adressierungsstromquelle (Iq₃) des dritten Busknotens (BK₃) auf den Referenzwert [I_{ref}] geregelt wird. Die Zeit zum Einschwingen wird durch eine erste Zeitkonstante [τ₁] zum Heraufregeln des ersten Adressierungsstroms der ersten Adressierungsstromquellen (Iq₁ bis Iq₃) bestimmt.

### Figur 8

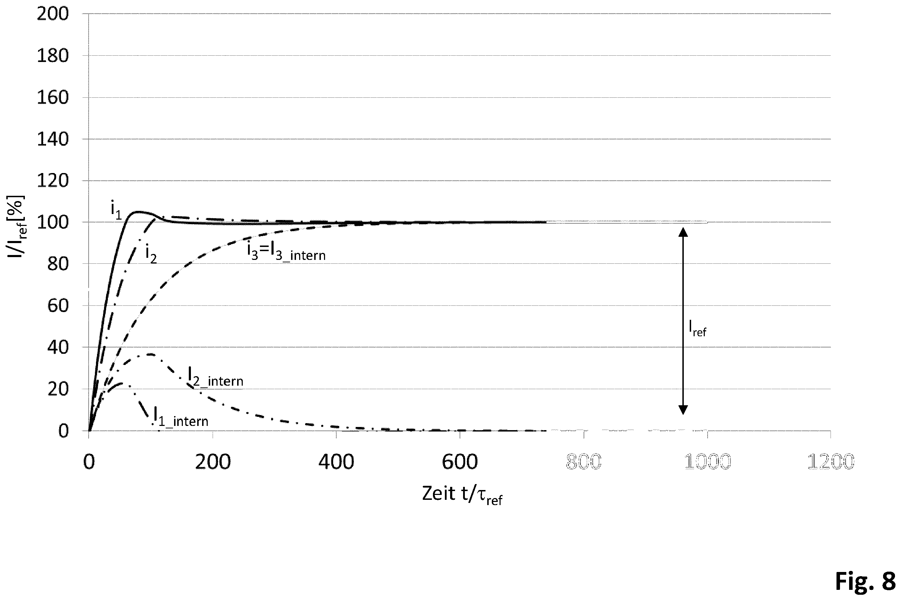

Figur 8 zeigt den Verlauf des Ausgangsstroms (i₁) des ersten Busknotens (BK₁), des Ausgangsstroms (i₂) des zweiten Busknotens (BK₂) und des Ausgangsstroms (i₃) des dritten Busknotens (BK₃). Außerdem zeigt sie den Strom (I_{1_intern}) der ersten Adressierungsstromquelle (Iq₁) des ersten Busknotens (BK₁), den Strom (I_{2_intern}) der ersten Adressierungsstromquelle (Iq₂) des zweiten Busknotens (BK₂) und den Strom (I_{3_intern}) der ersten Adressierungsstromquelle (Iq₃) des dritten Busknotens (BL₃). Hier sind die ersten Zeitkonstanten [τ₁] für die Heraufregelung des ersten Adressierungsstroms der ersten Adressierungsstromquellen in etwa zehnmal so lang wie die zweiten Zeitkonstanten [τ₂] für die Herunterregelung des ersten Adressierungsstroms der ersten Adressierungsstromquellen. Es kommt nur noch zu einem minimalen Überschwinger.

### Figur 9

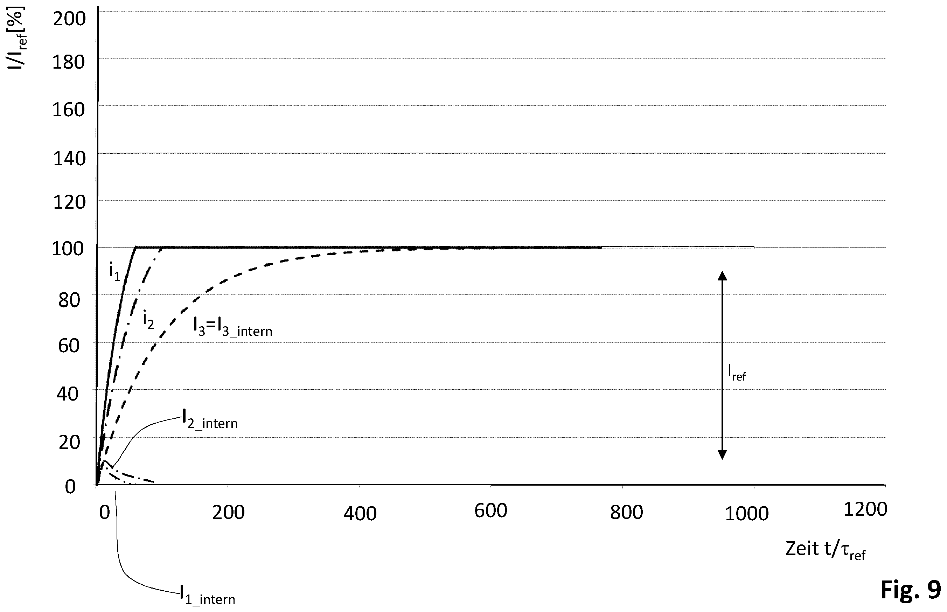

Figur 9 zeigt den Verlauf des Ausgangsstroms (i₁) des ersten Busknotens (BK₁), des Ausgangsstroms (i₂) des zweiten Busknotens (BK₂) und des Ausgangsstroms (i₃) des dritten Busknotens (BK₃). Außerdem zeigt sie den ersten Adressierungsstrom (I_{1_intern}) der ersten Adressierungsstromquelle (Iq₁) des ersten Busknotens (BK₁), den ersten Adressierungsstrom (I_{2_intern}) der ersten Adressierungsstromquelle (Iq₂) des zweiten Busknotens (BK₂) und den ersten Adressierungsstrom (I_{3_intern}) der ersten Adressierungsstromquelle (Iq₃) des dritten Busknotens (BK₃). Hier sind die ersten Zeitkonstanten [τ₁] für die Heraufregelung des ersten Adressierungsstroms der ersten Adressierungsstromquellen in etwa hundertmal so lang wie die zweiten Zeitkonstanten [τ₂] für die Herunterregelung des ersten Adressierungsstroms der ersten Adressierungsstromquellen. Es kommt zu keinem Überschwinger.

Bevorzugt umfasst der Busknoten (BKⱼ) erste Mittel (R2, D2), um den Strom durch den ersten Bus-Shunt-Widerstand (R2) zu detektieren und/oder zweite Mittel (R2', D2'), um den Strom durch den zweiten Bus-Shunt-Widerstand (R2') zu detektieren.

Wird das Datenbussystem so aufgebaut, dass der erste und zweite Adressierungsstrom der beiden Adressierungsstromquellen (Iqⱼ, Iq'ⱼ) vom Busmaster (ECU) aus gesehen immer hinter den Bus-Shunt Widerständen (R2, R2') jeweils eingespeist werden, so kann der jeweils detektierte Strom durch den ersten Bus-Shunt-Widerstand (R2) und/oder durch den zweiten Bus-Shunt-Widerstand (R2') jeweils für einen Selbsttest genutzt werden. Bei voller Symmetrie sollten beispielsweise beide Spannungsabfälle über beide Bus-Shunt-Widerstände (R2, R2') bevorzugt gleich sein. Eine kalte Lötstelle beispielsweise kann also auf diese Weise leicht detektiert werden.

### Figur 10

Für die Fehlererkennung ist es vorteilhaft, den Busknoten (BKⱼ) mit einer ersten Detektionsvorrichtung (DET) zu versehen, die internen Signale (ds1, ds3) des Busknotens (BKⱼ) auf Plausibilität prüft. Die internen Signale sind bevorzugt Regelsignale innerhalb des Busknotens (BKⱼ). Im Falle einer Bussymmetrie kann beispielsweise die Symmetrie dieser Signale geprüft werden. Es sind aber auch Prüfungen je Kanal möglich. Hierzu sei auf DE-B- 10 2017 122 365 verwiesen, die vollumfänglich Teil dieser Offenlegung ist.

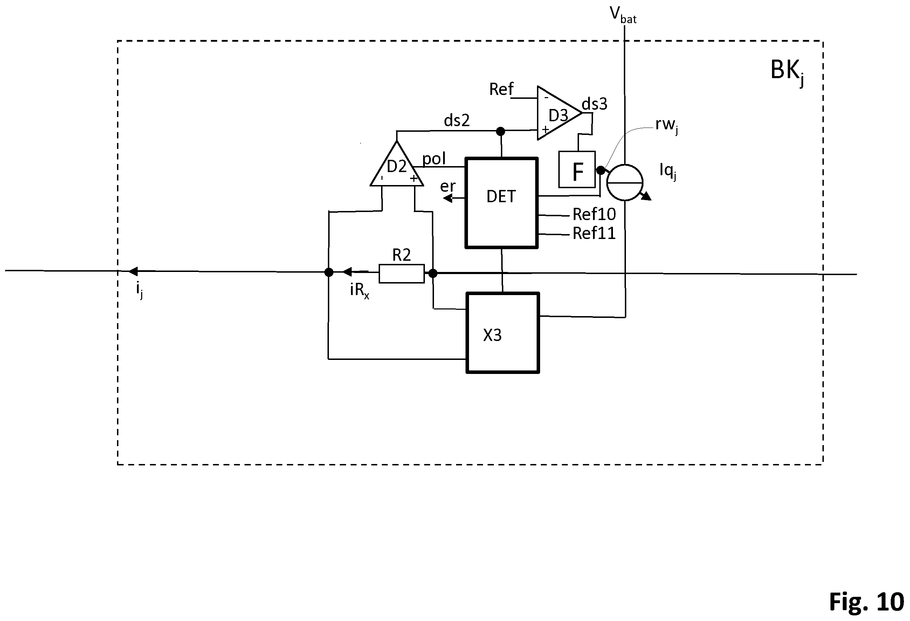

Figur 10 zeigt das Prinzip einer solchen Detektion. Figur 10 zeigt den Regelkreis eines Busknotens (BKⱼ). Hierbei steht j hier für eine Position in der Bus-Kette der Busknoten ((BK₁) bis [BKₙ]) in Form einer positiven, ganzen, natürlichen Zahl. Es handelt sich um einen j-ten Busknoten (BKⱼ), der in der Lage ist,
- zum Ersten eine Vertauschung seiner Buseingänge mit seinem Busausgängen zu erkennen und
- zum Zweiten in diesem Fall als beispielhafte Gegenmaßnahme
- den Einspeisepunkt für den ersten Adressierungsstrom seiner geregelten ersten Adressierungsstromquelle (Iqⱼ) so vor oder hinter seinem ersten Bus-Shunt Widerstand (R2) zu positionieren, dass die Autoadressierung je nach Beschaltung möglich ist und
- den Einspeisepunkt für den zweiten Adressierungsstrom seiner geregelten zweiten Adressierungsstromquelle (Iq';) so vor oder hinter seinem zweiten Bus-Shunt Widerstand (R2') zu positionieren, dass die Autoadressierung je nach Beschaltung möglich ist.

In der Figur 10 wird beispielhaft nur die Umpositionierung des Einspeisepunktes des ersten Adressierungsstroms der ersten Adressierungsstromquelle (Iqⱼ) des betrachteten Busknotens (BKⱼ) demonstriert. Für die Umpositionierung des Einspeisepunktes des zweiten Adressierungsstroms der zweiten Adressierungsstromquelle (Iq';) des betrachteten Busknotens (BKⱼ) gilt Entsprechendes.

Der in Figur 10 beispielhaft dargestellte j-te Autoadressierungsbusknoten (BKⱼ) weist für die Umpositionierung des Einspeisepunktes des ersten Adressierungsstroms der ersten Adressierungsstromquelle (Iqⱼ) des betrachteten Busknotens (BKⱼ) eine erste Detektionsvorrichtung (DET) auf, die in der Lage ist, eine Vertauschung des Bus-Eingangs des j-ten Busknotens (BKⱼ) für den ersten Eindrahtbus (DBₐ) mit dem Bus-Ausgang des j-ten Busknotens (BKⱼ) für den ersten Eindrahtbus (DBₐ) festzustellen. Hierzu überprüft die beispielhafte erste Detektionsvorrichtung (DET) interne Signale des j-ten Busknoten (BKⱼ) auf Plausibilität. Lassen die internen Signale des j-ten Busknotens (BKⱼ) auf eine Vertauschung des Bus-Eingangs des j-ten Busknotens (BKⱼ) für den ersten Eindrahtbus (DBₐ) mit dem Bus-Ausgang des j-ten Busknotens (BKⱼ) für den ersten Eindrahtbus (DBₐ) sicher schließen, so kann die erste Detektionsvorrichtung (DET) verschiedene beispielhafte Maßnahmen potenziell ergreifen:
a. Signalisierung des Fehlers an einen Nutzer;
b. Signalisierung des Fehlers an den Busmaster (ECU) mittels Antwort auf eine Diagnoseanfrage (Broadcast-Message) oder mittels einer Interruptleitung;
c. Verwendung einer vorbestimmten Fehleradresse als gültige Busknotenadresse;
d. Umkonfiguration der internen Topologie zur Neutralisation des Fehlers;
e. Umparametrierung interner Teilvorrichtungen wie z.B. Stromquellen zur Neutralisation des Fehlers;

Weitere Maßnahmen sind denkbar.

In dem Beispiel der Figur 10 ist eine Umkonfiguration der internen Topologie zur Neutralisation des Fehlers vorgesehen. In der Figur 10 ändert beispielhaft die erste Detektionsvorrichtung (DET) den Einspeisepunkt für den ersten Adressierungsstrom der geregelten ersten Adressierungsstromquelle (Iqⱼ) des j-ten Busknotens (BKⱼ) beispielsweise mit Hilfe eines ersten analogen Demultiplexers (X3) und vertauscht die Polarität der Eingänge oder des Ausgangs des zweiten Differenzverstärkers (D2) mittels des Polaritätssignals (pol).

### Figur 11

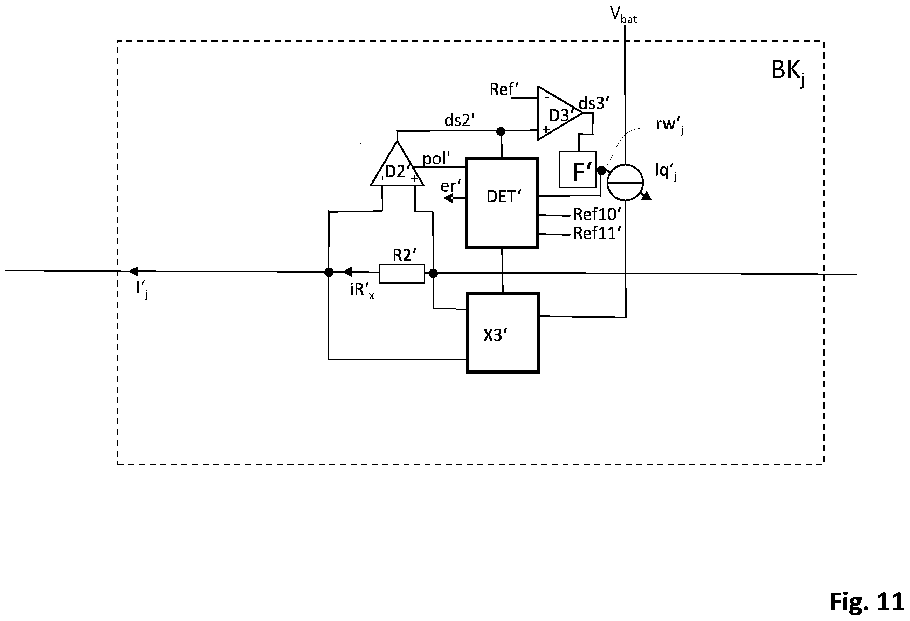

Zur besseren Übersicht ist die analoge Vorrichtung für den zweiten Eindrahtbus (DB_{b}) nicht eingezeichnet, da sie analog aufgebaut ist. Der in Figur 11 beispielhaft vereinfacht dargestellte j-te Autoadressierungsbusknoten (BKⱼ) weist für die Umpositionierung des Einspeisepunktes des zweiten Adressierungsstroms der zweiten Adressierungsstromquelle (Iq';) des betrachteten Busknotens (BKⱼ) eine zweite Detektionsvorrichtung (DET') auf, die in der Lage ist, eine Vertauschung des Bus-Eingangs des j-ten Busknotens (BKⱼ) für den zweiten Eindrahtbus (DB_{b}) mit dem Bus-Ausgang des j-ten Busknotens (BKⱼ) für den zweiten Eindrahtbus (DB_{b}) festzustellen. Hierzu überprüft die beispielhafte zweite Detektionsvorrichtung (DET') weitere interne Signale des j-ten Busknoten (BKⱼ) auf Plausibilität. Lassen die internen Signale des j-ten Busknotens (BKⱼ) auf eine Vertauschung des Bus-Eingangs des j-ten Busknotens (BKⱼ) für den zweiten Eindrahtbus (DB_{b}) mit dem Bus-Ausgang des j-ten Busknotens (BKⱼ) für den zweiten Eindrahtbus (DB_{b}) sicher schließen, so kann die zweite Detektionsvorrichtung (DET') verschiedene beispielhafte Maßnahmen potenziell ergreifen:
a. Signalisierung des Fehlers an einen Nutzer;
b. Signalisierung des Fehlers an den Busmaster (ECU) mittels Antwort auf eine Diagnoseanfrage (Broadcast-Message) oder mittels einer Interruptleitung;
c. Verwendung einer Fehleradresse als Busknotenadresse;
d. Umkonfiguration der internen Topologie zur Neutralisation des Fehlers;
e. Umparametrierung interner Teilvorrichtungen wie z.B. Stromquellen zur Neutralisation des Fehlers;

Weitere Maßnahmen sind denkbar.

Auch hier kann eine Umkonfiguration der internen Topologie zur Neutralisation des Fehlers vorgesehen werden. Die zweite Detektionsvorrichtung (DET') kann beispielsweise auch hier den Einspeisepunkt für den zweiten Adressierungsstrom der geregelten zweiten Adressierungsstromquelle (Iq';) des j-ten Busknotens (BKⱼ) beispielsweise mit Hilfe eines zweiten analogen Demultiplexers (X3') ändern und die Polarität der Eingänge oder des Ausgangs des weiteren zweiten Differenzverstärkers (D2') mittels eines zweiten Polaritätssignals (pol') vertauschen.

Alternativ zu dem vorhergehenden Beispiel der Figuren 10 und 11 ist eine Umparametrierung interner Teilvorrichtungen wie z.B. Stromquellen zur Neutralisation des Fehlers möglich, wenn statt einer ersten Adressierungsstromquelle (Iqⱼ) des j-ten Busknotens (BKⱼ) und einem ersten Multiplexer (X3) eine erste Adressierungsstromquelle [Iqⱼ₁] des j-ten Busknotens (BKⱼ) und beispielsweise eine weitere erste Adressierungsstromquelle [Iqⱼ₂] des j-ten Busknotens (BKⱼ) verwendet werden, von denen die erste Adressierungsstromquelle [Iqⱼ₁] des j-ten Busknotens (BKⱼ) ihren ersten Adressierungsstrom vor dem ersten Bus-Shunt-Widerstand (R2) einspeist und die weitere erste Adressierungsstromquelle [Iqⱼ₂] des j-ten Busknotens (BKⱼ) ihren weiteren ersten Adressierungsstrom hinter dem ersten Bus-Shunt-Widerstand (R2) einspeist. In dem Fall würde die erste Detektionsvorrichtung (DET) den ersten Adressierungsstrom einer der beiden ersten Adressierungsstromquellen ([Iqⱼ₁], [Iqⱼ₂]) zu null setzen, so dass der äquivalente Effekt wie bei der Kombination einer ersten Adressierungsstromquelle (Iqⱼ) des j-ten Busknotens (BKⱼ) mit der Umschaltung durch einen ersten Demultiplexer (X3) erzielt wird.

Für den zweiten Eindrahtbus (DB_{b}) würde dann statt einer zweiten Adressierungsstromquelle (Iq';) des j-ten Busknotens (BKⱼ) und einem weiteren zweiten Multiplexer (X3') eine zweite Adressierungsstromquelle [Iq'ⱼ₁] des j-ten Busknotens (BKⱼ) und beispielsweise eine weitere zweite Adressierungsstromquelle [Iq'ⱼ₂] des j-ten Busknotens (BKⱼ) verwendet werden, von denen die zweite Adressierungsstromquelle [Iq'ⱼ₁] des j-ten Busknotens (BKⱼ) ihren zweiten Adressierungsstrom vor dem zweiten Bus-Shunt-Widerstand (R2') einspeist und die weitere zweite Adressierungsstromquelle [Iq'ⱼ₂] des j-ten Busknotens (BKⱼ) ihren weiteren zweiten Adressierungsstrom hinter dem zweiten Bus-Shunt-Widerstand (R2') einspeist. In dem Fall würde die zweite Detektionsvorrichtung (DET') den zweiten Adressierungsstrom einer der beiden zweiten Adressierungsstromquellen ([Iq'ⱼ₁], [Iq'ⱼ₂]) zu null setzen, so dass der äquivalente Effekt wie bei der Kombination einer zweiten Adressierungsstromquelle (Iq';) des j-ten Busknotens (BKⱼ) mit der Umschaltung durch einen weiteren zweiten Demultiplexer (X3') erzielt wird.

Beispielsweise kann die erste Detektionsvorrichtung (DET) erkennen, dass der erste Regelwert des ersten Regelsignals (rwⱼ) des j-ten Busknotens (BKⱼ) den ersten Adressierungsstrom der ersten Adressierungsstromquelle (Iqⱼ) maximiert. Dies kann beispielsweise bei geeigneter Konstruktion durch Vergleich des ersten Regelwerts des ersten Regelsignals (rwⱼ) mit einem zehnten Schwellwert (Ref10) geschehen. Ist die Ableitung des ersten Adressierungsstromes der ersten Autoadressierungsstromquelle (Iqⱼ) nach dem ersten Regelwert des ersten Regelsignals (rwⱼ) positiv, so bedeutet dies, dass der erste Regelwert des ersten Regelsignals (rwⱼ) oberhalb des zehnten Schwellwerts (Ref10) liegt. Des Weiteren kann die erste Detektionsvorrichtung (DET) gleichzeitig den Ausgang (ds2) des zweiten Differenzverstärkers (D2) mit einem elften Schwellwert (Ref11) vergleichen. Liegt der Wert des Ausgangs (ds2) des zweiten Differenzverstärkers (D2) unterhalb des elften Schwellwerts (Ref11), so kann die erste Detektionsvorrichtung (DET) auf einen negativen Spannungsabfall über den ersten Bus-Shunt-Widerstand (R2) schließen oder auf einen Spannungsabfall über den ersten Bus-Shunt-Widerstand (R2) nahe Null schließen. Dieser Zustand ist illegal, da die erste Autoadressierungsstromquelle (Iqⱼ) ja einen positiven ersten Adressierungsstrom liefert, der bei korrekter Montage durch den ersten Bus-Shunt-Widerstand (R2) fließen müsste, was aber offensichtlich nicht geschieht.

Beispielsweise kann darüber hinaus die zweite Detektionsvorrichtung (DET') erkennen, dass der zweite Regelwert des zweiten Regelsignals (rw'ⱼ) des j-ten Busknotens (BKⱼ) den zweiten Adressierungsstrom der zweiten Adressierungsstromquelle (Iq';) maximiert. Dies kann beispielsweise bei geeigneter Konstruktion durch Vergleich des zweiten Regelwerts des zweiten Regelsignals (rw'ⱼ) mit einem weiteren zehnten Schwellwert (Ref10') geschehen, der vorzugsweise gleich dem zehnten Schwellwert (Ref10) ist. Ist die Ableitung des zweiten Adressierungsstromes der zweiten Autoadressierungsstromquelle (Iq'ⱼ) nach dem zweiten Regelwert des zweiten Regelsignals (rw'ⱼ) positiv, so bedeutet dies, dass der zweite Regelwert des zweiten Regelsignals (rw'ⱼ) oberhalb des weiteren zehnten Schwellwerts (Ref10') liegt, der vorzugsweise gleich dem zehnten Schwellwert (Ref10) ist. Des Weiteren kann die zweite Detektionsvorrichtung (DET') gleichzeitig den weiteren Ausgang (ds2') des weiteren zweiten Differenzverstärkers (D2') mit einem weiteren elften Schwellwert (Ref11') vergleichen. Der weitere elfte Schwellwert (Ref11') ist bevorzugt gleich dem elften Schwellwert (Ref11). Liegt der Wert des weiteren Ausgangs (ds2') des weiteren zweiten Differenzverstärkers (D2') unterhalb des weiteren elften Schwellwerts (Ref11), so kann die zweite Detektionsvorrichtung (DET') auf einen negativen Spannungsabfall über den zweiten Bus-Shunt-Widerstand (R2') schließen oder auf einen Spannungsabfall über den zweiten Bus-Shunt-Widerstand (R2') nahe Null schließen. Dieser Zustand ist illegal, da die zweite Autoadressierungsstromquelle (Iq';) ja einen positiven zweiten Adressierungsstrom liefert, der bei korrekter Montage durch den zweiten Bus-Shunt-Widerstand (R2') fließen müsste, was aber offensichtlich nicht geschieht.

Bevorzugt bilden die erste Detektionsvorrichtung (DET) und die zweite Detektionsvorrichtung (DET') eine Einheit.

Ein Umschalten der Busrichtung, wie oben beschrieben, erfolgt bevorzugt nur dann, wenn beide Detektionsvorrichtungen (DET, DET') eine Vertauschung der Busanschlüsse erkennen.

Einen erkannten Fehler können die Detektionsvorrichtungen (DET, DET') beispielsweise über ein jeweiliges Fehlersignal (er, er') an einen Busknoten internen Rechner oder eine geeignete Steuerung signalisieren.

Die Prüfungsergebnisse können durch den Busknoten (BKⱼ) oder eine Teilvorrichtung (DET, DET') des Busknotens (BKⱼ) genutzt werden, um vorbestimmte Maßnahmen zu initiieren und zu ergreifen, wenn eine oder mehrere der Detektionsvorrichtungen (DET, DET') nicht plausible interne Signale innerhalb des Busknotens (BKⱼ) feststellen. Beispielsweise kann der Busknoten (BKⱼ) von einer Vertauschung von Eingang und Ausgang ausgehen. Um diese kompensieren zu können ist es vorteilhaft wenn der Busknoten (BKⱼ) eine erste Teilvorrichtung (X3) aufweist, die den Einspeisepunkt des ersten Adressierungsstromes der ersten Adressierungsstromquelle (Iqⱼ) ändern kann und/oder, wenn der Busknoten (BKⱼ) eine zweite Teilvorrichtung (X3') aufweist, die den Einspeisepunkt des zweiten Adressierungsstromes der zweiten Adressierungsstromquelle (Iq'ⱼ) ändern kann. Bevorzugt werden die Änderungen für die Ansteuerung des ersten Eindrahtbusses (DBₐ) und des ersten Bus-Shunt-Widerstands (R2) synchron zu den analogen Änderungen für die Ansteuerung des zweiten Eindrahtbusses (DB_{b}) und des zweiten Bus-Shunt-Widerstands (R2') durchgeführt. Statt eines Umschaltens des Einspeisepunkts der Adressierungsstromquellen (iqⱼ und iq'ⱼ) mittels der besagten Demultiplexer (X3, X3') ist auch die Verwendung zweier verschiedener erster Adressierungsstromquellen statt einer einzelnen ersten Adressierungsstromquelle (Iqⱼ) denkbar, was das Umschalten mittels des Demultiplexers (X3) in ein Umsteuern zwischen diesen beiden ersten Adressierungsstromquellen verwandelt. Ein solcher Busknoten (BKⱼ) weist also an Stelle einer ersten Adressierungsstromquelle (Iqⱼ) eine erste Adressierungsstromquelle und eine weitere erste Adressierungsstromquelle auf, wobei die erste Adressierungsstromquelle ihren ersten Adressierungsstrom in einen mit dem ersten Anschluss des ersten Bus-Shunt-Widerstands (R2) verbundenen Knoten einspeist, wenn sie Strom einspeist, und wobei die weitere erste Adressierungsstromquelle ihren ersten Adressierungsstrom in einen mit dem zweiten Anschluss des ersten Bus-Shunt-Widerstands (R2) verbundenen Knoten einspeist, wenn sie Strom einspeist. Die beiden ersten Adressierungsstromquellen speisen bevorzugt ihre Adressierungsströme so ein, dass der sich ergebende gesamte Adressierungsstrom den ersten Bus-Shunt-Widerstand (R2) durchströmt, was die Selbsttestfähigkeit sichert. Der Busknoten (BKⱼ) weist gegenüber dem Stand der Technik darüber hinaus an Stelle einer zweiten Adressierungsstromquelle eine zweite Adressierungsstromquelle und eine weitere zweite Adressierungsstromquelle auf, wobei die zweite Adressierungsstromquelle ihren Adressierungsstrom in einen mit dem ersten Anschluss des zweiten Bus-Shunt-Widerstands (R2') verbundenen Knoten einspeist, wenn sie Strom einspeist, und wobei die weitere zweite Adressierungsstromquelle ihren Adressierungsstrom in einen mit dem zweiten Anschluss des zweiten Bus-Shunt-Widerstands (R2') verbundenen Knoten einspeist, wenn sie Strom einspeist. Auch diese beiden zweiten Adressierungsstromquellen speisen bevorzugt ihre Adressierungsströme so ein, dass der Adressierungsstrom den zweiten Bus-Shunt-Widerstand (R2') durchströmt, um die Selbsttestfähigkeit sicherzustellen.

Werden nun mehrere Busknoten an einem Datenbus zusammengeschaltet, so muss sichergestellt werden, dass es nicht zu gefährlichen Überstromsituationen durch Überschwinger des Bussummenstromes kommt. Daher hat es sich als vorteilhaft erwiesen, wenn die erste Adressierungsstromquelle (Iqⱼ) den ersten Adressierungsstrom mit einer ersten Zeitkonstante [τ₁] erhöht und mit einer zweiten Zeitkonstante [τ₂] erniedrigt, die kleiner als die erste Zeitkonstante [τ₁] ist und/oder wenn die zweite Adressierungsstromquelle (Iq';) den zweiten Adressierungsstrom mit einer dritten Zeitkonstante [τ₃] erhöht und mit einer vierten Zeitkonstante [τ₄] erniedrigt, die kleiner als die dritte Zeitkonstante [τ₃] ist. Bevorzugt sind die dritte Zeitkonstante [τ₃] und die erste Zeitkonstante [τ₁] betragsgleich gewählt, um die Bussymmetrie auch dynamisch sicherzustellen. Aus dem gleichen Grund sind bevorzugt die vierte Zeitkonstante [τ₄] und die zweite Zeitkonstante [τ₂] betragsgleich gewählt, um auch hier die Bussymmetrie dynamisch sicherzustellen. Es sei hier nochmals auf die Figuren 7 bis 9 verwiesen.

### REDUKTION DES BUSWIDERSTANDS IM NORMALBETRIEB

### Figur 12

Es wird hier auf Figur 12 verwiesen. Es hat sich nun erwiesen, dass die Bus-Shunt-Widerstände (R2, R2') die Eigenschaften der Eindrahtbusse (DBₐ, DB_{b}) und damit des seriellen, bidirektionalen, differentiellen Zweidraht-Kommunikationsbusses (DB) verschlechtern. Daher wurde erkannt, dass es sinnvoll ist mit einem ersten Bus-Shunt-Überbrückungsschalter (S4) je Busknoten (BKⱼ) den zugehörigen ersten Bus-Shunt-Widerstand (R2) des Busknotens (BKⱼ) im Normalbetrieb, also im Normalzustand des Busknotens (BKⱼ), zu überbrücken und diesen ersten Bus-Shunt-Überbrückungsschalter (S4) nur im Adressierungszustand zu öffnen und damit nur im Adressierungszustand den ersten Bus-Shunt-Widerstand (R2) wirksam werden zu lassen. Um die Bus-Symmetrie nicht zu stören, ist es daher ebenfalls sinnvoll, mit einem zweiten Bus-Shunt-Überbrückungsschalter (S4') je Busknoten (BKⱼ) den zugehörigen zweiten Bus-Shunt-Widerstand (R2') des Busknotens (BKⱼ) im Normalbetrieb, also im Normalzustand des Busknotens (BKⱼ), zu überbrücken und diesen zweiten Bus-Shunt-Überbrückungsschalter (S4') nur im Adressierungszustand zu öffnen und damit nur im Adressierungszustand den zweiten Bus-Shunt-Widerstand (R2') wirksam werden zu lassen.

Bei dem zuvor beschriebenen Busknoten (BKⱼ) handelt es sich somit um einen Busknoten (BKⱼ), der zur Durchführung eines Verfahrens zur Vergabe von Busadressen an Busknoten eines seriellen, bidirektionalen, differentiellen Zweidraht-Kommunikationsbusses (DB) in der Lage ist. Dabei wird das Verfahren zur Vergabe von Busadressen an Busknoten ((BK₁), (BK₂), (BK₃), ...... [BKₙ₋₁], [BKₙ]) eines seriellen, bidirektionalen, differentiellen Zweidraht-Kommunikationsbusses (DB) mit Hilfe von ersten Bus-Shunt-Widerständen (R2) und mit Hilfe von zweiten Bus-Shunt-Widerständen (R2') in den einzelnen Busknoten ((BK₁), (BK₂), (BK₃), ...... [BKₙ₋₁], [BKₙ]) in einem Vergabezeitraum, in dem die Busknoten ((BK₁) bis [BKₙ]) in einem Adressierungszustand sind, durchgeführt, was dieses Verfahren wesentlich vom Stand der Technik unterscheidet. Nach der Durchführung des Verfahrens zur Vergabe von Busadressen an die Busknoten ((BK₁), (BK₂), (BK₃), ...... [BKₙ₋₁], [BKₙ]) des seriellen, bidirektionalen, differentiellen Zweidraht-Kommunikationsbusses (DB) in dem Vergabezeitraum schließt sich ein Betriebszeitraum an, in dem die Busknoten normal betrieben werden, sich also in einem Normalzustand befinden. Der Busknoten (BKⱼ) zeichnet sich somit gegenüber dem Stand der Technik bevorzugt durch einen solchen ersten Bus-Shunt-Widerstand (R2) und einen solchen zweiten Bus-Shunt-Widerstand (R2') aus. Bevorzugt wird der Busknoten (BKⱼ) jeweils mit einem ersten Bus-Shunt-Überbrückungsschalter (S4) versehen, der vor Vergabe einer Busadresse an den Busknoten (BKⱼ) im Vergabezeitraum geöffnet ist und der nach Vergabe einer Busadresse an den Busknoten im Vergabezeitraum geschlossen ist und der in dem Betriebszeitraum geschlossen ist. Analog wird aus Symmetriegründen in dem Busknoten (BKⱼ) bevorzugt ein zweiter Bus-Shunt-Überbrückungsschalter (S4') vorgesehen, der vor Vergabe einer Busadresse an den Busknoten (BKⱼ) im Vergabezeitraum geöffnet ist und der nach Vergabe einer Busadresse an den Busknoten (BKⱼ) im Vergabezeitraum geschlossen ist und der in dem Betriebszeitraum geschlossen ist. Diese Bus-Shunt-Überbrückungsschalter (S4, S4') verringern den Buswiderstand massiv und verringern die Empfindlichkeit gegenüber elektromagnetischen Einstrahlungen. Sie verbessern also das EMV Verhalten.

### DIFFERENTIELLE SYMMETRISCHE GLEICHTAKT UND GEGENTAKT BASIERENDE AUTOADRESSIERUNG

Statt eines ersten Adressierungsstromes einer ersten Adressierungsstromquelle (Iqⱼ) eines Busknotens (BKⱼ) und eines zweiten Adressierungsstromes einer zweiten Adressierungsstromquelle (Iq';) eines Busknotens (BKⱼ) kann auch eine Gleichtaktstromquelle [GLIqⱼ] eines Busknotens (BKⱼ) mit zwei Ausgängen verwendet werden, die beide den betragsmäßig gleichen Gleichtaktstrom in den ersten Eindrahtbuus (DBₐ) und den zweiten Eindrahtbus (DB_{b}) des seriellen bidirektionalen differentiellen Kommunikationsbusses (DB) mit gleichem Vorzeichen einspeisen. Ein erster Ausgang dieser beiden Ausgänge entspricht also der ersten Adressierungsstromquelle (Iqⱼ). Der zweite Ausgang entspricht dann der zweiten Atressierungsstromquelle (Iq'ⱼ). Der erste Adressierungsstrom der ersten Adresssierungsstromquelle (Iqⱼ) ist dann betragsgleich dem zweiten Adressierungsstrom der zweiten Adresssierungsstromquelle (Iq'ⱼ). Die Verwendung einer einzigen Gleichtaktadressierungsstrommquelle [GLIqⱼ] hat den Vorteil, dass nur noch eine Regelstrecke benötigt wird.

Statt eines ersten Adressierungsstromes einer ersten Adressierungsstromquelle (Iqⱼ) eines Busknotens (BKⱼ) und eines zweiten Adressierungsstromes einer zweiten Adressierungsstromquelle (Iq';) eines Busknotens (BKⱼ) kann aber auch eine Gegentaktstromquelle [GGIqⱼ] eines Busknotens (BKⱼ) mit zwei Ausgängen verwendet werden, die beide den betragsmäßig gleichen Gegentaktstrom in den ersten Eindrahtbuus (DBₐ) und den zweiten Eindrahtbus (DB_{b}) des seriellen bidirektionalen differentiellen Kommunikationsbusses (DB) mit nun aber unterschiedlichem Vorzeichen einspeisen. Ein erster Ausgang dieser beiden Ausgänge entspricht also der ersten Adressierungsstromquelle (Iqⱼ). Der zweite Ausgang entspricht dann wieder der zweiten Atressierungsstromquelle (Iq'ⱼ). Der erste Adressierungsstrom der ersten Adresssierungsstromquelle (Iqⱼ) ist dann betragsgleich aber eben nicht vorzeichengleich dem zweiten Adressierungsstrom der zweiten Adresssierungsstromquelle (Iq'ⱼ). Die Verwendung einer einzigen Gegentaktadressie-rungsstrommquelle[GLIqⱼ] hat ebenso den Vorteil, dass nur noch eine Regelstrecke benötigt wird.

Mischlösungen unter Verwendung von Gleichtakt- und Gegentaktadressierungsstromquellen sind denkbar.

Dementsprechend wird hier auch ein Busknoten (BKⱼ) für einen seriellen, bidirektionalen, differentiellen Zweidraht-Kommunikationsbus (DB) mit einem Busmaster (ECU) vorgeschlagen, bei dem der serielle, bidirektionale, differentielle Zweidraht-Kommunikationsbus (DB) einen ersten Eindrahtbus (DB₁) und einen zweiten Eindrahtbus (DB₂) umfasst. Ein erster Bus-Shunt-Widerstand (R2), der in den ersten Eindrahtbus (DB₁) eingefügt ist, und ein zweiter Bus-Shunt-Widerstand (R2'), der in den zweiten Eindrahtbus (DB₂) eingefügt ist, sind Teil des Busknotens (BKⱼ). Der Busknoten umfasst darüber hinaus eine differentielle erste Gleichtaktadressierungsstromquelle [GLIqⱼ] zur Ermittlung der Busposition des Busknotens (BKⱼ) im seriellen, bidirektionalen, differentiellen Zweidraht-Kommunikationsbus (DB). Die differentielle erste Gleichtaktadressierungsstromquelle [GLIqⱼ] kann einen ersten Gleichtaktadressierungsstromanteil in der Art in den ersten Eindrahtbus (DBₐ) des seriellen, bidirektionalen, differentiellen Zweidraht-Kommunikationsbusses (DB) geregelt zusätzlich einspeisen, dass der erste Gesamtstrom (iⱼ) durch den ersten Bus-Shunt-Widerstand (R2) des Busknotens (BKⱼ) einem vorgegebenen oder berechneten oder sonst wie bestimmten ersten Summenstrom [I_{ref}] entspricht. Gleichzeitig kann die differentielle erste Gleichtaktadressierungsstromquelle [GLIqⱼ] einen betragsmäßig und vorzeichenmäßig gleichen zweiten Gleichtaktadressierungsstromanteil in der Art nochmals zusätzlich in den zweiten Eindrahtbus (DB_{b}) des seriellen, bidirektionalen, differentiellen Zweidraht-Kommunikationsbusses (DB) geregelt mit gleichem Vorzeichen wie das Vorzeichen des ersten Gleichtaktadressierungsstromanteils einspeisen, so dass der zweite Gesamtstrom (i'ⱼ) durch den zweiten Bus-Shunt-Widerstand (R2') des Busknotens (BKⱼ) dem vorgegebenen oder berechneten oder sonst wie bestimmten ersten Summenstrom [I_{ref}] ebenfalls entspricht. Der erste Gleichtaktadressierungsstromanteil der Gleichtaktadressierungsstromquelle [GLIqⱼ] des Busknotens (BKⱼ) durchströmt den ersten Bus-Shunt-Widerstand (R2) des Busknotens (BKⱼ) in Richtung auf den Busmaster (ECU). Der zweite Gleichtaktadressierungsstromanteil der Gleichtaktadressierungsstromquelle [GLIqⱼ] des Busknotens (BKⱼ) durchströmt den zweiten Bus-Shunt-Widerstand (R2') des Busknotens (BKⱼ) in Richtung auf den Busmaster (ECU).

Komplementär zur Gleichtaktansteuerung ist auch eine Gegentaktansteuerung möglich. Es wird daher ein Busknoten (BKⱼ) für einen seriellen, bidirektionalen, differentiellen Zweidraht-Kommunikationsbus (DB) mit einem Busmaster (ECU) vorgeschlagen, bei dem der serielle, bidirektionale, differentielle Zweidraht-Kommunikationsbus (DB) einen ersten Eindrahtbus (DB₁) und einen zweiten Eindrahtbus (DB₂) umfasst und bei dem ein erster Bus-Shunt-Widerstand (R2) in den ersten Eindrahtbus (DB₁) eingefügt ist und ein zweiter Bus-Shunt-Widerstand (R2') in den zweiten Eindrahtbus (DB₂) eingefügt ist. Der Busknoten (BKⱼ) verfügt dann über eine differentielle erste Gegentaktadressierungsstromquelle [GGIq;] zur Ermittlung der Busposition des Busknotens (BKⱼ) im seriellen, bidirektionalen, differentiellen Zweidraht-Kommunikationsbus (DB), die einen ersten Gegentaktadressierungsstromanteil in der Art in den ersten Eindrahtbus (DBₐ) des seriellen, bidirektionalen, differentiellen Zweidraht-Kommunikationsbusses (DB) geregelt zusätzlich einspeisen kann, dass der erste Gesamtstrom (iⱼ) durch den ersten Bus-Shunt-Widerstand (R2) des Busknotens (BKⱼ) einem vorgegebenen oder berechneten oder sonst wie bestimmten ersten Summenstrom [I_{ref}] entspricht. Die Gegentaktadressierungsstromquelle [GGIqⱼ] des Busknots (BKⱼ) speist den betragsmäßig gleichen zweiten Gegentadressierungsstromanteil in der Art nochmals zusätzlich in den zweiten Eindrahtbus (DB_{b}) des seriellen, bidirektionalen, differentiellen Zweidraht-Kommunikationsbusses (DB) geregelt mit umgekehrtem Vorzeichen wie das Vorzeichen des ersten Gegentaktadressierungsstromanteils ein, so dass der zweite Gesamtstrom (i'ⱼ) durch den zweiten Bus-Shunt-Widerstand (R2') des Busknotens (BKⱼ) dem vorgegebenen oder berechneten oder sonst wie bestimmten ersten Summenstrom [I_{ref}] ebenfalls entspricht. Der erste Gegentaktadressierungsstromanteil der Gegentaktadressierungsstromquelle [GGIqⱼ] des Busknotens (BKⱼ) durchströmt den ersten Bus-Shunt-Widerstand (R2) des Busknotens (BKⱼ) in Richtung auf den Busmaster (ECU). Der zweite Gegentaktadressierungsstromanteil der Gegentaktadressierungsstromquelle [GGIqⱼ] des Busknotens (BKⱼ) durchströmt den zweiten Bus-Shunt-Widerstand (R2') des Busknotens (BKⱼ) in Richtung auf den Busmaster (ECU).

Für die Regelung verfügt der Busknoten (BKⱼ) bevorzugt über erste Mittel (R2, D2), um den Strom durch den ersten Bus-Shunt-Widerstand (R2) zu detektieren, und/oder über zweite Mittel (R2', D2'), um den Strom durch den zweiten Bus-Shunt-Widerstand (R2') zu detektieren.

Wie zuvor erläutert, kann auch hier die Fähigkeit, den Spannungsabfall über den jeweiligen Bus-Shunt-Widerstand (R2, R2') zu erfassen für einen Selbsttest genutzt werden. Es wird daher ein Busknoten (BKⱼ) vorgeschlagen, bei dem der detektierte Strom durch den ersten Bus-Shunt-Widerstand (R2) für einen Selbsttest genutzt wird und/oder bei dem der detektierte Strom durch den zweiten Bus-Shunt-Widerstand (R2') für einen Selbsttest genutzt wird. Hierbei wird der detektierte Spannungsabfall über den Bus-Shunt-Widerstand mit einem Erwartungswert verglichen. Weicht die erfasste Spannung um mehr als einen vorgegebenen Betrag von dem Erwartungswert ab, so liegt ein Fehler vor, der signalisiert werden kann.

Bevorzugt umfasst der vorgeschlagene Busknoten (BKⱼ) zu diesem Zweck zumindest eine Detektionsvorrichtung (DET), die interne Signale (ds1, ds3) des Busknotens (BKⱼ) auf Plausibilität prüft. Bevorzugt ergreift der Busknoten (BKⱼ) oder eine Teilvorrichtung (DET) des Busknotens (BKⱼ) Maßnahmen, wenn die Detektionsvorrichtung (DET) nicht plausible interne Signale innerhalb des Busknotens (BKⱼ) feststellt. Eine mögliche Maßnahme kann durch eine erste Teilvorrichtung (X3) des Busknotens (BKⱼ) und eine zweite Teilvorrichtung (X3') des Busknotens (BKⱼ) in der Art initiiert werden, dass die Einspeisepunkte der ersten Gleichtaktadressierungsströme der Gleichtaktadressierungsstromquelle [GLIqⱼ] durch die erste Teilvorrichtung (X3) des Busknotens (BKⱼ) und die zweite Teilvorrichtung (X3') des Busknotens (BKⱼ) bei Feststellung eines vorbestimmten Fehlers geändert werden.

Eine andere mögliche Maßnahme kann durch eine erste Teilvorrichtung (X3) des Busknotens (BKⱼ) und eine zweite Teilvorrichtung (X3') des Busknotens (BKⱼ) in der Art initiiert werden, dass die Einspeisepunkte der ersten Gegentaktadressierungsströme der Gegentaktadressierungsstromquelle [GGIqⱼ] durch die erste Teilvorrichtung (X3) des Busknotens (BKⱼ) und die zweite zweite Teilvorrichtung (X3') des Busknotens (BKⱼ) bei Feststellung eines vorbestimmten Fehlers geändert werden.

Auch hier ist eine Regelung der Adressierungsströme mit bestimmten Zeitkonstanten wünschenswert und empfohlen. Es wird daher ein Busknoten (BKⱼ) vorgeschlagen, bei dem die Gleichtaktadressierungsstromquelle [GLIqⱼ] den Gleichtaktadressierungsstrom mit einer ersten Zeitkonstante [τ₁] erhöht und mit einer zweiten Zeitkonstante [τ₂] erniedrigt, die kleiner als die erste Zeitkonstante [τ₁].

Analog wird daher ein Busknoten (BKⱼ) vorgeschlagen, bei dem die Gegentaktadressierungsstromquelle [GGIqⱼ] den Gegentaktadressierungsstrom mit einer ersten Zeitkonstante [τ₁] erhöht und mit einer zweiten Zeitkonstante [τ₂] erniedrigt, die kleiner als die erste Zeitkonstante [τ₁] ist.

### AUTOADRESSIERUNG MITTELS INTERRUPT-LEITUNG

### Figur 13

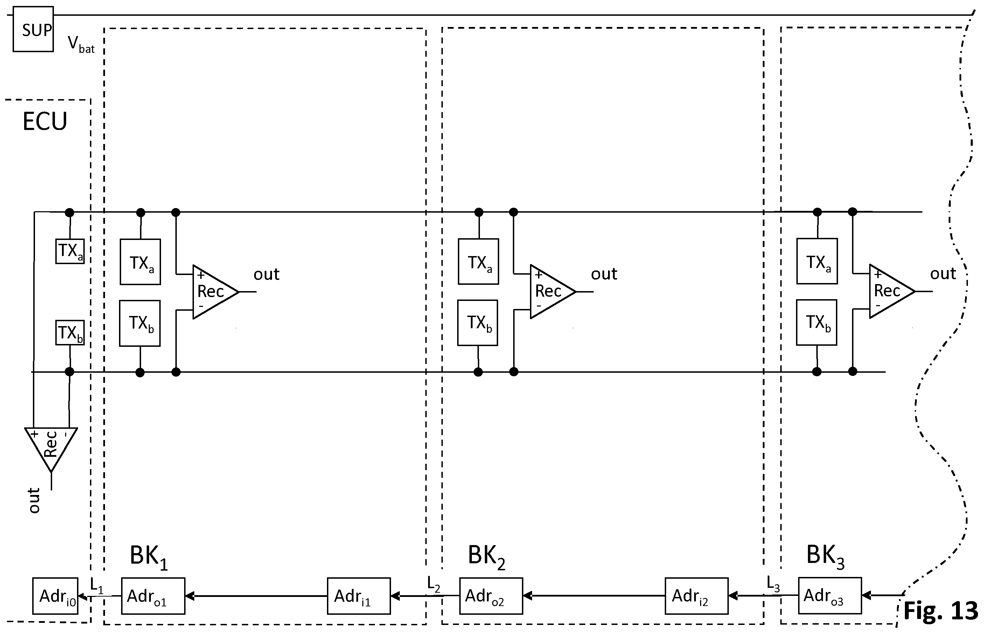

Figur 13 basiert auf Figur 2. Neben dem oben beschriebenen Adressierungsverfahren kann der oben beschriebene Busknoten (BKⱼ), der für ein Datenbussystem mit einem seriellen, bidirektionalen, differentiellen Zweidraht-Kommunikationsbus (DB) vorgesehen ist, für ein anderes Autoadressierungsverfahren (siehe Figur 13) vorbereitet werden. Der betreffende Busknoten (BKⱼ) ist dann wieder dazu vorgesehen, an einem Verfahren zur Vergabe von logischen Busknotenadressen an die Busknoten ((BK₁) bis [BKₙ]) des Datenbussystems teilzunehmen. Das entsprechende Datenbussystem weist dann einen Busmaster (ECU) mit einem Adresseingang (Adrᵢ₀) auf. Das Datenbussystem soll wieder n Busknoten ((BK₁) bis [BKₙ]) einschließlich dieses Busknotens (BKⱼ) selbst mit n als ganzer positiver Zahl aufweisen. Der Busknoten (BKⱼ) wird über einen Datenleitungsabschnitt ((DB₁) bis [DBₙ]) oder den seriellen, bidirektionalen, differentiellen Zweidraht-Kommunikationsbus (DB) aus Datenleitungsabschnitten ((DB₁) bis [DBₙ]) und weiteren Busknoten ((BK₂) bis [BKₙ]) mit dem Busmaster (ECU) zur Datenübertragung verbunden. Innerhalb des Datenbussystems ist eine Leitung [L₁ bis Lₙ] von einem Adresseingang (Adrᵢ₀) des Busmasters (ECU) des Datenbussystems ausgehend durch alle Busknoten ((BK₁) bis [BKₙ]) des Datenbussystems inklusive dieses Busknotens (BKⱼ) selbst so durchgeschleift, dass sie durch die einzelnen Busknoten ((BK₁) bis [BKₙ]) inklusive dieses Busknotens (BKⱼ) selbst in n Leitungsabschnitte [L₁ bis Lₙ] unterteilt wird. Jeder der Busknoten (BKⱼ) umfasst einen zugehörigen Adresseingang [Adrᵢⱼ] und einen diesem Busknoten (BKⱼ) zugehörigen Adressausgang [Adrₒⱼ]. Jeder der Busknoten (BKⱼ) mit 1≤j≤ n-1, wenn er nicht der n-te Busknoten [BKₙ] ist, ist jeweils dazu vorgesehen, mit seinem Adresseingang [Adrᵢⱼ] mit dem Adressausgang [Adrₒ₍ⱼ₊₁₎] eines nachfolgenden Busknotens [BKⱼ₊₁] mit 1≤j≤ n-1 durch einen dem nachfolgenden Busknoten [BKⱼ₊₁] zugehörigen (j+1)-ten Leitungsabschnitt [Lⱼ₊₁] vom (j+1)-ten Busknoten [BKⱼ₊₁] zum j-ten Busknoten (BKⱼ) verbunden zu werden. Jeder der Busknoten (BKⱼ), wenn er nicht der erste Busknoten (BK₁) ist, ist mit seinem Adressausgang [Adrₒⱼ] mit dem Adresseingang [Adrᵢ₍ⱼ₋₁₎] eines vorausgehenden Busknotens [BKⱼ₋₁] mit 2≤j≤ n durch einen dem Busknoten (BKⱼ) zugehörigen j-ten Leitungsabschnitt[Lⱼ] vom j-ten Busknoten (BKⱼ) zum (j-1)-ten Busknoten [BKⱼ₋₁] verbunden. Der erste Busknoten (BK₁) ist (j=1) mit seinem Adressausgang (Adrₒ₁) mit dem Adresseingang (Adrᵢ₀) des Busmasters (ECU) durch einen dem Busknoten (BKⱼ) zugehörigen Leitungsabschnitt [L₁] verbunden. Die Busknotenadresse des Busknotens (BKⱼ) in dessen Busknotenadressregister [BKADRⱼ] kann wie in diesem ganzen Dokument gültig oder nicht gültig sein. Der vorgeschlagene Busknoten sieht nun Mittel und Methoden vor, seine Busknotenadresse zu setzen und seine Busknotenadresse gültig oder ungültig zu machen. Das können z.B. spezielle Dateninhalte (DATA) von Bit-Paketen (BP) des Busmasters (ECU) sein, mit denen der Busmaster (ECU) einzelne oder mehrere oder alle Busknoten ((BK₁) bis [BKₙ]) zum ungültig machen der Adressen in ihren Busknotenadressregistern zwingen kann. Der vorgeschlagene Busknoten (BKⱼ) kann einen Adressierungszustand und einen vom Adressierungszustand verschiedenen zweiten Betriebszustand (oder auch Normalzustand) einnehmen. Der Busknoten (BKⱼ) weist dabei bevorzugt Mittel auf, um zwischen dem Adressierungszustand und dem zweiten Betriebszustand in Abhängigkeit von Befehlen des Busmasters (ECU) zu wechseln. Der Busknoten (BKⱼ) weist dann Mittel auf, um dann, wenn er sich im Adressierungszustand befindet und wenn seine Busknotenadresse ungültig ist, in diesem Fall den logischen Zustand am Adresseingang [Adrᵢ₍ⱼ₋₁₎] eines vorausgehenden Busknotens [BKⱼ₋₁] auf einen ersten logischen Wert durch Überschreiben zu setzten oder um dann, wenn er sich im Adressierungszustand befindet und wenn seine Busknotenadresse ungültig ist, in diesem Fall den logischen Zustand am Adresseingang (Adrᵢ₀) eines vorausgehenden Busmasters (ECU) auf einen ersten logischen Wert durch Überschreiben zu setzten. Der Busknoten (BKⱼ) weist des Weiteren bevorzugt Mittel auf, um im Adressierungszustand den logischen Zustand an seinem Adresseingang [Adrᵢⱼ] auf einen zweiten logischen Wert zu setzten, wenn dieser zweite logische Wert nicht durch einen nachfolgenden Busknoten [BKⱼ₊₁] mit einem ersten logischen Wert überschrieben wird, und Mittel auf, um eine durch den Busmaster (ECU) signalisierte Busknotenadresse als seine gültige zukünftige Busknotenadresse zu übernehmen, wenn seine Busknotenadresse ungültig ist und wenn er sich im Adressierungszustand befindet und wenn sein Adresseingang [Adrᵢⱼ] einen zweiten logischen Wert aufweist, und diese zukünftige Busknotenadresse in diesem Fall als "gültig" zu markieren.

In einer Verfeinerung dieses Vorschlags kann der Adresseingang [Adrᵢⱼ] des Busknotens (BKⱼ) in dem zweiten Betriebszustand als Eingang eines Interrupt-Signals eines nachfolgenden Busknotens [BKⱼ₋₁] verwendet werden. Auf diese Weise kann eine Interrupt-Leitung für die Autoadressierung von Busknoten eines seriellen, bidirektionalen, differenziellen Zweidraht-Kommunikationsbusses (DB) verwendet werden. Bevorzugt kann der Adressausgang [Adrₒⱼ] des Busknotens (BKⱼ) in dem zweiten Betriebszustand als Ausgang eines Interrupt-Signals eines nachfolgenden Busknotens [BKⱼ₋₁] und/oder des Busknotens (BKⱼ) selbst verwendet werden.

### Figur 14

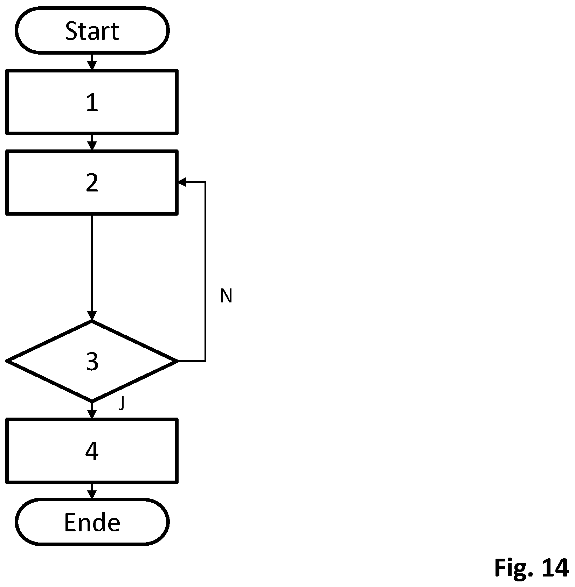

Figur 14 beschreibt den grundsätzlichen Ablauf des hier beschrieben bevorzugten Adressvergabeverfahrens. Nach dem Start des Adressvergabeverfahrens (START) signalisiert der Bus-Master (BM) in einem ersten Verfahrensschritt (1) mittels eines bevorzugten ersten Broadcast-Befehls bevorzugt einem Busknoten oder bevorzugt allen oder zumindest einem Teil der Menge der Busknoten ((BK₁) bis [BKₙ]), dass ein solches Verfahren zur Vergabe von Busknotenadressen für diese Busknoten begonnen wird. Dies hat zum einen bevorzugt zur Folge, dass alle diese Busknoten ((BK₁) bis [BKₙ]) ggf. in diesen Busknoten vorhandene gültige Busknotenadressen ungültig machen oder löschen. Soll die Adressierung mit Hilfe einer durch alle Busknoten durchgeschleiften Interruptleitung [L₁ bis Lₙ] wie in Figur 13 erfolgen, so verliert in dieser bevorzugten Version des Vorschlags diese Interruptleitung [L₁ bis Lₙ] für die Dauer des Adressierungsvorgangs diese Funktion und wird in die besagten Punkt-zu-Punkt-Verbindungen zwischen den Busknoten ((BK₁) bis [BKₙ]) und die Punkt-zu-Punkt-Verbindung zwischen dem ersten LED-Busknoten (BK₁) und dem Bus-Master (BM) aufgespalten. In einem zweiten Verfahrensschritt (2) teilt der Busmaster (ECU) den Busknoten ((BK₁) bis [BKₙ]) mit, dass eine Busknotenadresse zu vergeben ist und welche logische Busknotenadresse dies ist. Derjenige Busknoten, hier beispielhaft zur besseren Klarheit und willkürlich der j-te Busknoten (BKⱼ), dessen Adresseingang [Adrᵢⱼ] einen zweiten logischen Wert aufweist, übernimmt dann die vom Bus-Master (BM) angebotene Buskotenadresse in diesem Verfahrensschritt und setzt seinen Adressausgang [Adrₒⱼ] in der Art, dass er den Adresseingang [Adrᵢ₍ⱼ₋₁₎] eines vorausgehenden Busknotens [BKⱼ₋₁] nicht mehr auf den ersten logischen Wert überschreibt, sondern einen zweiten logischen Wert an dem Adresseingang [Adrᵢ₍ⱼ₋₁₎] eines vorausgehenden Busknotens [BKⱼ₋₁] zulässt. Dieser zweite Logische Wert wird dann bevorzugt durch den vorausgehenden Busknoten [BKⱼ₋₁] selbst an seinem Adresseingang [Adrᵢ₍ⱼ₋₁₎] eingeprägt. In einem weiteren dritten Schritt (3) überprüft der Busmaster (ECU), ob der logische Wert an seinem Adresseingang (Adrᵢ₀) einem zweiten logischen Wert entspricht oder nicht. Entspricht er dem nicht (N), so wiederholt der Busmaster (ECU) den zweiten Verfahrensschritt (2). Entspricht er diesem logischen Wert (J), so beendet der Busmaster (ECU) das Verfahren durch Durchführen eines vierten Verfahrensschrittes (4). Ggf. führt er zuvor eine Prüfung der korrekten Vergabe durch. Bevorzugt sendet der Busmaster (ECU) bei erfolgreicher Vergabe aller Busadressen eine Botschaft an alle Busknoten ((BK₁) bis [BKₙ]), dass die Busknotenadressen vergeben wurden. Hierdurch gehen die Busknoten ((BK₁) bis [BKₙ]) wieder von dem Adressierungszustand, der mit dem ersten Verfahrensschritt (1) eingenommen wurde in einen anderen Betriebszustand, bevorzugt den normalen Betriebszustand oder Normalzustand über. Insbesondere benutzen die Busknoten ((BK₁) bis [BKₙ]) nach Durchführung dieses vierten Verfahrensschrittes eine für die Punkt-zu-Punkt-Verbindungen ggf. benutzte durchgeschleifte Interrupt-Leitung wieder als Interrupt-Leitung. Damit ist das vorgeschlagene Verfahren als solches beendet (ENDE).

### SYMMETRISCHES AUTOADRESSIEUNGSVERFAHREN ÜBER BUS-SHUNT-WIDERSTÄNDE

Hier wird nun ein Verfahren zum Adressieren der Busknoten ((BK₁) bis [BKₙ]) eines Datenbussystems mittels eines symmetrischen Verfahrens besprochen.

Es handelt sich um ein Autoadressierungsverfahren zum Adressieren der Busknoten ((BK₁) bis [BKₙ]) eines Datenbussystems auf Basis eines seriellen, bidirektionalen, differentiellen Zweidraht-Kommunikationsbusses (DB). Das Datenbussystem umfasst einen Busmaster (ECU), einen von dem Busmaster (ECU) ausgehenden seriellen, bidirektionalen, differentiellen Zweidraht-Kommunikationsbus (DB) und mehrere adressierbare Busknoten ((BK₁) bis [BKₙ]), die an den seriellen, bidirektionalen, differentiellen Zweidraht-Kommunikationsbus (DB) angeschlossen sind. Der serielle, bidirektionale, differentielle, Zweidraht-Kommunikationsbus (DB) besteht aus dem besagten ersten Eindrahtbus (DBₐ) und dem besagten zweiten Eindrahtbus (DB_{b}). Jeder noch nicht adressierte Busknoten (BKⱼ) der Busknoten ((BK₁) bis [BKₙ]) besitzt keine gültige Busknotenadresse und speist daher zum Identifizieren einen ersten Adressierstrom in den ersten Eindrahtbus (DBₐ) ein und einen zweiten Adressierstrom in den zweiten Eindrahtbus (DB_{b}) ein. Sämtliche dieser Adressierungsströme fließen durch den seriellen, bidirektionalen, differentiellen Zweidraht-Kommunikationsbus (DB) in Richtung auf den Busmaster (ECU). Jeder noch nicht adressierte Busknoten (BKⱼ) detektiert den durch den ersten Eindrahtbus (DBₐ) des seriellen, bidirektionalen, differentiellen Zweidraht-Kommunikationsbusses (DB) fließenden ersten Strom und den durch den zweiten Eindrahtbus (DB_{b}) des seriellen, bidirektionalen, differentiellen Zweidraht-Kommunikationsbusses (DB) fließenden zweiten Strom. Lediglich derjenige, noch nicht adressierte Busknoten (BKⱼ), der keinen ersten Strom oder lediglich einen ersten Strom detektiert, der kleiner als ein vorgebbarer erster Schwellwert ist und der gleichzeitig keinen zweiten Strom oder lediglich einen zweiten Strom detektiert, der kleiner als ein vorgebbarer weiterer erster Schwellwert ist, wird als ein noch nicht adressierter Busknoten identifiziert. Dem so identifizierten Busknoten wird zwecks Adressierung eine Adresse zugeordnet, wodurch dieser eine gültige Busknotenadresse erhält. Die zuvor genannten Schritte werden ohne den jeweils zuletzt adressierten Busknoten durchgeführt, bis sämtliche noch nicht adressierten Busknoten adressiert sind. Bevorzugt ist der erste Schwellwert gleich dem weiteren ersten Schwellwert und der Wert des ersten Adressierungsstromes innerhalb eines Busknotens gleich dem Wert des zweiten Adressierungsstromes innerhalb dieses Busknotens.

An den seriellen, bidirektionalen, differentiellen Zweidraht-Kommunikationsbus (DB) können neben den adressierten, d.h. mit einer gültigen Busknotenadresse versehenen Busknoten auch nicht adressierte Busknoten ohne gültige Busknotenadresse angeschlossen sein. Der nicht adressierte Busknoten speist in den ersten Eindrahtbus (DBₐ) einen ersten Ruhestrom und in den zweiten Eindrahtbus (DB_{b}) einen zweiten Ruhestrom ein. Jeder noch nicht adressierte Busknoten detektiert vor dem Einspeisen der Adressierungsströme den durch den ersten Eindrahtbus (DBₐ) fließenden ersten Ruhestrom und den durch den zweiten Eindrahtbus (DB_{b}) fließenden zweiten Ruhestrom. Lediglich die noch nicht adressierten Busknoten mit ungültiger Busknotenadresse speisen die ersten Adressierungsströme in den ersten Eindrahtbus (DBₐ) und die zweiten Adressierungsströme in den zweiten Eindrahtbus (DB_{b}) ein. Lediglich derjenige noch nicht adressierte Busknoten, der bei Einspeisung der Adressierungsströme durch sämtliche noch nicht adressierten Busknoten gegenüber der vorherigen Stromdetektion keine Stromdifferenz des ersten oder zweiten Stromes oder lediglich eine Stromdifferenz des ersten oder zweiten Stromes detektiert, die kleiner als ein vorgebbarer zweiter Schwellwert ist, wird als ein noch nicht adressierter Busknoten identifiziert. Dem so identifizierten Busknoten wird zwecks Adressierung eine Adresse zugeordnet, wodurch dieser eine gültige Busknotenadresse erhält. Die zuvor genannten Schritte werden ohne den jeweils zuletzt adressierten Busknoten durchgeführt, bis sämtliche noch nicht adressierten Busknoten adressiert sind. Der zweite Schwellwert ist bevorzugt gleich dem ersten Schwellwert oder dem weiteren ersten Schwellwert.

In einer weiteren Variante des Verfahrens speist jeder adressierbare Busknoten in den ersten Eindrahtbus (DBₐ) einen ersten Ruhestrom ein, der null sein kann, und in den zweiten Eindrahtbus (DB_{b}) einen zweiten Ruhestrom ein, der null sein kann. Jeder noch nicht adressierte Busknoten ohne gültige Busknotenadresse speist einen ersten Ruhestrom in den ersten Eindrahtbus (DBₐ) ein und einen zweiten Ruhestrom in den zweiten Eindrahtbus (DB_{b}) ein. Jeder noch nicht adressierte Busknoten detektiert den durch den ersten Eindrahtbus (DBₐ) auf Grund der Ruhestromeinspeisung fließenden ersten Strom und den durch den zweiten Eindrahtbus (DB_{b}) auf Grund der Ruhestromeinspeisung fließenden zweiten Strom. Dabei wird ermittelt, welcher der noch nicht adressierten Busknoten einen ersten Strom detektiert, der oberhalb eines vorgebbaren dritten Schwellwerts liegt, und welcher der noch nicht adressierten Busknoten einen zweiten Strom detektiert, der oberhalb eines vorgebbaren weiteren dritten Schwellwerts liegt. Lediglich diejenigen noch nicht adressierten Busknoten, die bei Einspeisung der Ruheströme einen ersten Strom detektieren, der kleiner als der dritte Schwellwert oder gleich dem dritten Schwellwert ist, speisen erste Adressierungsströme in den ersten Eindrahtbus (DBₐ) ein und lediglich diejenigen noch nicht adressierten Busknoten, die bei Einspeisung der Ruheströme einen zweiten Strom detektieren, der kleiner als der weitere dritte Schwellwert oder gleich dem weiteren dritten Schwellwert ist, speisen bevorzugt zweite Adressierungsströme in den zweiten Eindrahtbus (DB_{b}) ein. Bevorzugt ist an dieser Stelle, wenn lediglich diejenigen noch nicht adressierten Busknoten, die bei Einspeisung der Ruheströme einen ersten Strom detektieren, der kleiner als der dritte Schwellwert oder gleich dem dritten Schwellwert ist, und die gleichzeitig bei Einspeisung der Ruheströme einen zweiten Strom detektieren, der kleiner als der weitere dritte Schwellwert oder gleich dem weiteren dritten Schwellwert ist, erste Adressierungsströme in den ersten Eindrahtbus (DBₐ) und zweite Adressierungsströme in den zweiten Eindrahtbus (DB_{b}) einspeisen.

Aus der Gruppe dieser Adressierungsströme einspeisenden, noch nicht adressierten Busknoten wird lediglich derjenige Busknoten, der keinen ersten Strom oder lediglich einen ersten Strom detektiert, der kleiner als ein vorgebbarer vierter Schwellwert ist, und der keinen zweiten Strom oder lediglich einen zweiten Strom detektiert, der kleiner als ein vorgebbarer weiterer vierter Schwellwert ist, als ein noch nicht adressierter Busknoten identifiziert. Dem so identifizierten Busknoten wird zwecks Adressierung eine Adresse zugeordnet. Die zuvor genannten Schritte werden ohne den jeweils zuletzt adressierten Busknoten durchgeführt, bis sämtliche noch nicht adressierten Busknoten adressiert sind. Bevorzugt sind der dritte und/oder vierte Schwellwert und/oder der weitere dritte und/oder weiterer vierte Schwellwert und der erste Schwellwert gleich.

In einer Variante des Verfahrens sind an den seriellen, bidirektionalen, differentiellen Zweidraht-Kommunikationsbus (DB) neben den adressierbaren Busknoten auch nicht adressierbarere Busknoten angeschlossen. Ein solcher, nicht adressierbarer Busknoten speist in den ersten Eindrahtbus (DBₐ) einen ersten Ruhestrom ein und in den zweiten Eindrahtbus (DB_{b}) einen zweiten Ruhestrom ein. Jeder noch nicht adressierte Busknoten ermittelt vor dem Einspeisen der ersten Adressierungsströme in den ersten Eindrahtbus (DBₐ) den in dem ersten Eindrahtbus (DBₐ) auf Grund der Ruhestromeinspeisung sämtlicher nicht adressierbarer Busknoten fließenden ersten Strom durch eine erste Stromdetektion. Jeder noch nicht adressierte Busknoten ermittelt vor dem Einspeisen der zweiten Adressierungsströme in den zweiten Eindrahtbus (DB_{b}) den in dem zweiten Eindrahtbus (DB_{b}) auf Grund der Ruhestromeinspeisung sämtlicher nicht adressierbarer Busknoten fließenden zweiten Strom durch eine zweite Stromdetektion. Anschließend speist jeder adressierbare Busknoten in den ersten Eindrahtbus (DBₐ) einen ersten Ruhestrom und in den zweiten Eindrahtbus (DB_{b}) einen zweiten Ruhestrom ein. Dabei wird ermittelt, welcher der noch nicht adressierten Busknoten einen ersten Strom im ersten Eindrahtbus (DBₐ) detektiert, der oberhalb eines vorgebbaren fünften Schwellwerts liegt, und/oder einen zweiten Strom im zweiten Eindrahtbus (DB_{b}) detektiert, der oberhalb eines vorgebbaren weiteren fünften Schwellwerts liegt. Lediglich diejenigen noch nicht adressierten Busknoten, die bei Einspeisung der ersten Ruheströme in den ersten Eindrahtbus (DBₐ) einen ersten Strom detektieren, der kleiner als der fünfte Schwellwert oder gleich dem fünften Schwellwert ist, speisen erste Adressierungsströme in den ersten Eindrahtbus (DBₐ) ein. Lediglich diejenigen noch nicht adressierten Busknoten, die bei Einspeisung der zweiten Ruheströme in den zweiten Eindrahtbus (DB_{b}) einen zweiten Strom detektieren, der kleiner als der weitere fünfte Schwellwert oder gleich dem weiteren fünften Schwellwert ist, speisen zweite Adressierungsströme in den zweiten Eindrahtbus (DB_{b}) ein. Besonders bevorzugt ist aber, wenn lediglich diejenigen noch nicht adressierten Busknoten, die bei Einspeisung der ersten Ruheströme in den ersten Eindrahtbus (DBₐ) einen ersten Strom detektieren, der kleiner als der fünfte Schwellwert oder gleich dem fünften Schwellwert ist, und die gleichzeitig bei Einspeisung der zweiten Ruheströme in den zweiten Eindrahtbus (DB_{b}) einen zweiten Strom detektieren, der kleiner als der weitere fünfte Schwellwert oder gleich dem weiteren fünften Schwellwert ist, erste Adressierungsströme in den ersten Eindrahtbus (DBₐ) und zweite Adressierungsströme in den zweiten Eindrahtbus (DB_{b}) einspeisen.

Aus der Gruppe dieser Adressierungsströme einspeisenden, noch nicht adressierten Busknoten wird lediglich derjenige Busknoten, der gegenüber der ersten Stromdetektion keine Stromdifferenz des ersten Stromes oder lediglich eine Stromdifferenz des ersten Stromes detektiert, die kleiner als ein vorgebbarer sechster Schwellwert ist, und der gegenüber der ersten Stromdetektion keine Stromdifferenz des zweiten Stromes oder lediglich eine Stromdifferenz des zweiten Stromes detektiert, die kleiner als ein vorgebbarer weiterer sechster Schwellwert ist, als ein noch nicht adressierter Busknoten identifiziert. Dem so identifizierten Busknoten wird zwecks Adressierung eine Adresse zugeordnet. Die zuvor genannten Schritte werden ohne den jeweils zuletzt adressierten Busknoten durchgeführt, bis sämtliche noch nicht adressierten Busknoten adressiert sind. Der fünfte Schwellwert und/oder der sechste Schwellwert und/oder der weitere fünfte Schwellwert und/oder der weitere sechste Schwellwert und/oder der erste Schwellwert sind bevorzugt gleich.

Die erste Stromdetektion erfolgt bevorzugt in den Busknoten über den adressierbaren Busknoten zugeordneten ersten Bus-Shunt-Widerstände (R2) des ersten Eindrahtbusses (DBₐ) und die zweite Stromdetektion erfolgt bevorzugt in den Busknoten über den adressierbaren Busknoten zugeordneten zweiten Bus-Shunt-Widerstände (R2') des zweiten Eindrahtbusses (DB_{b}). Die einem adressierbaren Busknoten zugeordneten ersten Bus-Shunt-Widerstände (R2) entsprechen bevorzugt den dem jeweiligen adressierbaren Busknoten zugeordneten zweiten Bus-Shunt-Widerständen (R2') zumindest wertmäßig. Sämtliche ersten Bus-Shunt-Widerstände (R2) sind bevorzugt im ersten Eindrahtbus (DBₐ) längs des ersten Eindrahtbusses (DBₐ) in Reihe geschaltet und sämtliche zweiten Bus-Shunt-Widerstände (R2') sind bevorzugt im zweiten Eindrahtbus (DB_{b}) längs des zweiten Eindrahtbusses (DB_{b}) in Reihe geschaltet.

Anstelle einer Stromdetektion kann auch eine Spannungsdetektion in den Busknoten erfolgen.

Die Zuordnung einer Adresse erfolgt dann typischerweise durch Übermittlung einer Adresse an den identifizierten Busknoten dadurch, dass sämtlichen noch nicht adressierten Busknoten vor der Identifikation eines Busknotens jeweils die gleiche Adresse übermittelt wird und lediglich der anschließend identifizierte Busknoten diese Adresse als seine Busknotenadresse annimmt.

Bevorzugt erfolgt die Zuordnung einer Adresse nach der ersten Identifizierung eines Busknotens und/oder eine Verifizierung der Busknotenadresse nach der Identifizierung eines Busknotens.

Die Verifizierung der Identifikation eines Busknotens kann beispielsweise durch nochmaliges Identifizieren des Busknotens und/oder durch Identifizieren des Busknotens mittels des anderen Eindrahtbusses und Vergleich der zweiten Identifikation mit der ersten Identifikation erfolgen.

Die Verifizierung der Identifikation eines Teilnehmers kann auch durch nochmaliges Identifizieren des Teilnehmers mittels eines anderen Autoadressierungsverfahrens und Vergleich der zweiten Identifikation mit der ersten Identifikation erfolgen. Dabei auftretende Fehler werden signalisiert.

### ASYMMETRISCHES AUTOADRESSIEUNGSVERFAHREN ÜBER BUS-SHUNT-WIDERSTÄNDE

Das Datenbussystem weist einen Busmaster (ECU), einen von dem Busmaster (ECU) ausgehenden seriellen, bidirektionalen, differentiellen Zweidraht-Kommunikationsbus (DB) und mehrere adressierbaren Busknoten ((BK₁) bis [BKₙ]) auf, die an dem seriellen, bidirektionalen, differentiellen Zweidraht-Kommunikationsbus (DB) angeschlossen sind. Der serielle, bidirektionale, differentielle, Zweidraht-Kommunikationsbus (DB) besteht wieder aus einem ersten Eindrahtbus (DBₐ) und einem zweiten Eindrahtbus (DB_{b}). Bei dem hier besprochenen ersten Autoadressierungsverfahren speist jeder noch nicht adressierte Busknoten (BKⱼ) der Busknoten ((BK₁) bis [BKₙ]) zum Identifizieren einen Adressierstrom in zumindest EINEN Eindrahtbus der Eindrahtbusse (DBₐ, DB_{b}) ein. Jeder noch nicht adressierte Busknoten speist den Adressierstrom zumindest in einen Eindrahtbus, im Folgenden mit Adressierungs-Eindrahtbus bezeichnet, ein. Bevorzugt ist es jedoch, wenn dieser Adressierstrom in beide Eindrahtbusse (DBₐ, DB_{b}) eingespeist wird. Alle anderen noch nicht adressierten Busknoten speisen ihren jeweiligen Adressierungsstrom ebenfalls in den Adressierungs-Eindrahtbus ein. Dabei fließen sämtliche Adressierungsströme durch den seriellen, bidirektionalen, differentiellen Zweidraht-Kommunikationsbus (DB) in Richtung auf den Busmaster (ECU). Jeder noch nicht adressierte Busknoten (BKⱼ) detektiert den durch den Adressierungs-Eindrahtbus des seriellen, bidirektionalen, differentiellen Zweidraht-Kommunikationsbusses (DB) fließenden Strom. Diese Detektion geschieht bevorzugt über die bereits oben erwähnten Bus-Shunt-Widerstände (R2, R2'). Lediglich derjenige noch nicht adressierte Busknoten (BKⱼ), der keinen Strom oder lediglich einen Strom detektiert, der kleiner als ein vorgebbarer erster Schwellwert ist, wird als ein noch nicht adressierter Busknoten identifiziert. Dem so identifizierten Busknoten wird zwecks Adressierung eine Adresse zugeordnet, wodurch dieser eine gültige Busknotenadresse erhält. Diese wird bevorzugt durch den Busmaster (ECU) bestimmt. Die zuvor genannten Schritte werden ohne den jeweils zuletzt adressierten Busknoten erneut durchgeführt, also ein weiterer Initialisierungsdurchlauf vorgenommen, bis sämtliche noch nicht adressierten Busknoten adressiert sind.

Es kann vorkommen, dass an den seriellen, bidirektionalen, differentiellen Zweidraht-Kommunikationsbus (DB) neben den adressierten Busknoten auch ein oder mehrere nicht adressierte Busknoten angeschlossen sind, die in den Adressierungs-Eindrahtbus einen Ruhestrom einspeisen. Für diesen Fall muss das zuvor beschriebene Verfahren modifiziert werden. Diese Modifikation erfordert dann, dass jeder noch nicht adressierte Busknoten vor dem Einspeisen der Adressierungsströme den durch den Adressierungs-Eindrahtbus fließenden Ruhestrom detektiert. Lediglich die noch nicht adressierten Busknoten speisen die Adressierungsströme in den Adressierungs-Eindrahtbus ein. Lediglich derjenige noch nicht adressierte Busknoten, der bei Einspeisung der Adressierungsströme durch sämtliche noch nicht adressierten Busknoten gegenüber der vorherigen Stromdetektion keine Stromdifferenz oder lediglich eine Stromdifferenz detektiert, die kleiner als ein vorgebbarer zweiter Schwellwert ist, wird als ein noch nicht adressierter Busknoten identifiziert. Dem so identifizierten Busknoten wird zwecks Adressierung eine Adresse zugeordnet, wodurch dieser eine gültige Busknotenadresse erhält. Die zuvor genannten Schritte werden ohne den jeweils zuletzt adressierten Busknoten durchgeführt, bis sämtliche noch nicht adressierten Busknoten adressiert sind. Bevorzugt ist übrigens der zweite Schwellwert gleich dem ersten Schwellwert.

Es kann übrigens auch vorkommen, dass jeder adressierbare Busknoten in den Adressierungs-Eindrahtbus einen Ruhestrom einspeist, und dass jeder noch nicht adressierte Busknoten einen Ruhestrom in den Adressierungs-Eindrahtbus einspeist. Das Verfahren wird dann ähnlich dem vorherbeschriebenen modifiziert: Jeder noch nicht adressierte Busknoten detektiert wieder den durch den Adressierungs-Eindrahtbus auf Grund der Ruhestromeinspeisung fließenden Strom. Eine Schaltung innerhalb der Busknoten (BKⱼ) ermittelt dann, welcher der noch nicht adressierten Busknoten einen Strom detektiert, der oberhalb eines vorgebbaren dritten Schwellwerts liegt. Lediglich diejenigen noch nicht adressierten Busknoten, die bei Einspeisung der Ruheströme einen Strom detektieren, der kleiner als der dritte Schwellwert oder gleich dem dritten Schwellwert ist, speisen Adressierungsströme in den Adressierungs-Eindrahtbus ein. Aus der Gruppe dieser Adressierungsströme einspeisenden, noch nicht adressierten Busknoten wird lediglich derjenige Busknoten, der keinen Strom oder lediglich einen Strom detektiert, der kleiner als ein vorgebbarer vierter Schwellwert ist, als ein noch nicht adressierter Busknoten identifiziert. Dem so identifizierten Busknoten wird zwecks Adressierung eine Adresse zugeordnet, wodurch dieser eine gültige Busknotenadresse erhält. Die zuvor genannten Schritte werden wieder ohne den jeweils zuletzt adressierten Busknoten durchgeführt, bis sämtliche noch nicht adressierten Busknoten adressiert sind. Bevorzugt ist auch hier der dritte und/oder vierte Schwellwert gleich dem ersten Schwellwert.

Wieder kann es vorkommen, dass an den seriellen, bidirektionalen, differentiellen Zweidraht-Kommunikationsbus (DB) neben den adressierbaren Busknoten auch mindestens ein nicht adressierbarer Busknoten angeschlossen ist, der in den Adressierungs-Eindrahtbus einen Ruhestrom einspeist. Wieder wird das Verfahren geeignet modifiziert: Jeder noch nicht adressierte Busknoten ermittelt vor dem Einspeisen der Adressierungsströme den in dem Adressierungs-Eindrahtbus auf Grund der Ruhestromeinspeisung sämtlicher nicht adressierbarer Busknoten fließenden Strom durch eine erste Stromdetektion. Anschließend speist jeder adressierbare Busknoten in den Adressierungs-Eindrahtbus einen Ruhestrom ein. Es wird dann ermittelt, welcher der noch nicht adressierten Busknoten einen Strom detektiert, der oberhalb eines vorgebbaren fünften Schwellwerts liegt. Lediglich diejenigen noch nicht adressierten Busknoten, die bei Einspeisung der Ruheströme einen Strom detektieren, der kleiner als der fünfte Schwellwert oder gleich dem fünften Schwellwert ist, speist Adressierungsströme in den Adressierungs-Eindrahtbus ein. Aus der Gruppe dieser Adressierungsströme einspeisenden, noch nicht adressierten Busknoten wird lediglich derjenige Busknoten, der gegenüber der ersten Stromdetektion keine Stromdifferenz oder lediglich eine Stromdifferenz detektiert, die kleiner als ein vorgebbarer sechster Schwellwert ist, als ein noch nicht adressierter Busknoten identifiziert. Dem so identifizierten Busknoten wird zwecks Adressierung eine Adresse zugeordnet, wodurch dieser eine gültige Busknotenadresse erhält. Die zuvor genannten Schritte werden wieder ohne den jeweils zuletzt adressierten Busknoten durchgeführt, bis sämtliche noch nicht adressierte Busknoten adressiert sind. Wieder ist bevorzugt der fünfte Schwellwert und/oder sechste Schwellwert gleich dem ersten Schwellwert.

Die Stromdetektion in den Busknoten erfolgt bevorzugt über den adressierbaren Busknoten zugeordneten Shunt-Widerständen des Adressierungs-Eindrahtbusses, wobei in den anderen Eindrahtbus, der nicht der Adressierungs-Eindrahtbus ist, in den Teilnehmern den adressierbaren Teilnehmer zugeordnete weitere Bus-Shunt-Widerstände bevorzugt, aber nicht notwendigerweise angeordnet sind, die jeweils bevorzugt wertemä-ßig den Shunt-Widerstände im Adressierungs-Eindrahtbus entsprechen. Ganz besonders bevorzugt matchen die Bus-Shunt-Widerstände (R2, R2') in den beiden Eindrahtbussen (DBₐ, DB_{b}) miteinander. Sämtliche Shunt-Widerstände im Adressierungs-Eindrahtbusses längs des Adressierungs-Eindrahtbusses sind bevorzugt in Reihe geschaltet. Auch sämtliche Shunt-Widerstände im anderen Eindrahtbus längs dieses anderen Eindrahtbusses sind bevorzugt ebenfalls in Reihe geschaltet.

Es ist möglich statt einer Stromdetektion eine Spannungsdetektion in den Busknoten vorzunehmen.

Eine Variante des Verfahrens sieht vor, dass die Zuordnung einer Adresse durch Übermittlung einer Adresse an den identifizierten Busknoten oder dadurch erfolgt, dass sämtliche noch nicht adressierten Busknoten vor der Identifikation eines Busknotens jeweils die gleiche Adresse übermittelt wird und dass lediglich der anschließend identifizierte Busknoten diese Adresse als seine Busknotenadresse annimmt.

Eine weitere Variante sieht vor, dass die Zuordnung einer Adresse nach der ersten Identifizierung eines Busknotens erfolgt oder dass eine Verifizierung der Busknotenadresse nach der Identifizierung eines Busknotens erfolgt.

Eine weitere Variante sieht vor, dass die Verifizierung der Identifikation eines Busknotens durch nochmaliges Identifizieren des Busknotens und/oder durch Identifizieren des Busknotens mittels des anderen Eindrahtbusses und Vergleich der zweiten Identifikation mit der ersten Identifikation erfolgt.

Eine weitere Variante sieht vor, dass die Verifizierung der Identifikation eines Teilnehmers durch nochmaliges Identifizieren des Teilnehmers mittels eines anderen Autoadressierungsverfahrens und Vergleich der zweiten Identifikation mit der ersten Identifikation erfolgt. Bevorzugt signalisieren der Busknoten und/oder der Busmaster dann einen Fehler.

### SYMMETRISCHES AUTOADRESSIEUNGSVERFAHREN ÜBER BUS-SHUNT-WIDERSTÄNDE MIT SELBSTTESTFÄHIGKEIT UND ADRESSIERUNGSSTROMREGELUNG

Es wird des Weiteren ein selbsttestfähiges Autoadressierungsverfahren zur Vergabe von Busknotenadressen innerhalb eines Datenbussystem beschrieben. Dabei umfasst das Datenbussystem einen seriellen, bidirektionalen, differentiellen Zweidraht-Kommunikationsbus (DB) mit einer Kette von n Busknoten ((BK₁), (BK₂), (BK₃), ..... [BKₙ₋₁], [BKₙ]), mit n als ganzer positiver Zahl größer Null, und einem Busmaster (ECU). Der serielle, bidirektionale, differentielle Zweidraht-Kommunikationsbus (DB) ist mit dem Busmaster (ECU) verbunden. Jeder Busknoten ((BK₂), (BK₃), ..... [BKₙ₋₁], [BKₙ]) weist einen vorausgehenden Busknoten ((BK₁), (BK₂), (BK₃), ..... [BKₙ₋₁]) auf, wenn er nicht der erste Busknoten (BK₁) ist und jeder Busknoten ((BK₂), (BK₃), ..... [BKₙ₋₁], [BKₙ]) ist mit seinem vorausgehenden Busknoten ((BK₁), (BK₂), (BK₃), ..... [BKₙ₋₁]) durch den seriellen, bidirektionalen, differentiellen Zweidraht-Kommunikationsbus (DB) mittels eines Verbindungsabschnitts des seriellen, bidirektionalen, differentiellen Zweidraht-Kommunikationsbusses (DB) verbunden, wenn er nicht der erste Busknoten (BK₁) ist. Der serielle, bidirektionale, differentielle Zweidraht-Kommunikationsbus (DB) besteht aus einem ersten Eindrahtbus (DBₐ) und einem zweiten Eindrahtbus (DB_{b}). Der erste Busknoten (BK₁) ist mit dem Busmaster (ECU) durch den seriellen, bidirektionalen, differentiellen Zweidraht-Kommunikationsbus (DB) mittels eines Verbindungsabschnitts des seriellen, bidirektionaler, differentiellen Zweidraht-Kommunikationsbusses (DB) verbunden. Jeder Busknoten ((BK₂), (BK₃), ..... [BKₙ₋₁], [BKₙ]) sendet einen ersten Busknotenausgangsstrom ((i₂), (i₃), ...[i₍ₙ₋₁₎], [iₙ]) über den Abschnitt (DB₁) des ersten Eindrahtbusses (DBₐ), der Teil des Verbindungsabschnitts zwischen diesem Busknoten ((BK₂), (BK₃), ..... [BKₙ₋₁], [BKₙ]) und seinem vorausgehenden Busknoten ((BK₁), (BK₃), ..... [BKₙ₋₁], [BKₙ₋₁]) ist, an seinen vorausgehenden Busknoten ((BK₁), (BK₂), (BK₃), ..... [BKₙ₋₁]), wenn er nicht der erste Busknoten (BK₁) ist. Jeder Busknoten ((BK₂), (BK₃), ..... [BKₙ₋₁], [BKₙ]) sendet einen zweiten Busknotenausgangsstrom ((i'₂), (i'₃),...[i'₍ₙ₋₁₎], [i'ₙ]) über den Abschnitt (DB₂) des zweiten Eindrahtbusses (DB_{b}), der Teil des Verbindungsabschnitts zwischen diesem Busknoten ((BK₂), (BK₃), ..... [BKₙ₋₁], [BKₙ]) und seinem vorausgehenden Busknoten ((BK₁), (BK₃), ..... [BKₙ₋₁], [BKₙ₋₁]) ist, an seinen vorausgehenden Busknoten ((BK₁), (BK₂), (BK₃), ..... [BKₙ₋₁]), wenn er nicht der erste Busknoten (BK₁) ist. Der erste Busknoten (BK₁) sendet einen ersten Busknotenausgangsstrom (i₁) über den Abschnitt (DB₁) des ersten Eindrahtbusses (DBₐ), der Teil des Verbindungsabschnitts zwischen dem ersten Busknoten (BK₁) und dem Busmaster (ECU) ist, an den Busmaster (ECU). Der erste Busknoten (BK₁) sendet einen zweiten Busknotenausgangsstrom (i₂) über den Abschnitt (DB₂) des zweiten Eindrahtbusses (DB_{b}), der Teil des Verbindungsabschnitts zwischen dem ersten Busknoten (BK₁) und dem Busmaster (ECU) ist, an den Busmaster (ECU). Der Busmaster (ECU) empfängt einen ersten Busknoteneingangsstrom (i₁) über den Abschnitt (DB₁) des ersten Eindrahtbusses (DBₐ), der Teil des Verbindungsabschnitts zwischen dem ersten Busknoten (BK₁) und dem Busmaster (ECU) ist, von seinen nachfolgenden ersten Busknoten (BK₁). Der Busmaster (ECU) empfängt einen zweiten Busknoteneingangsstrom (i'₁) über den Abschnitt (DB₂) des zweiten Eindrahtbusses (DB_{b}), der Teil des Verbindungsabschnitts zwischen dem ersten Busknoten (BK₁) und dem Busmaster (ECU) ist, von seinen nachfolgenden ersten Busknoten (BK₁). Jeder Busknoten ((BK₁), (BK₂), ..... [BKₙ₋₁]) empfängt einen ersten Busknoteneingangsstrom ((i₂), (i₃), ...[i₍ₙ₋₁₎], [iₙ]) über den Abschnitt (DB₁) des ersten Eindrahtbusses (DBₐ), der Teil des Verbindungsabschnitts zwischen diesem Busknoten ((BK₂), (BK₃), ..... [BKₙ₋₁], [BKₙ]) und seinem vorausgehenden Busknoten ((BK₁), (BK₃), ..... [BKₙ₋₁], [BKₙ₋₁]) ist, von seinen nachfolgenden Busknoten ((BK₂), (BK₃), ..... [BKₙ₋₁], [BKₙ]), wenn er nicht der letzte Busknoten [BKₙ] ist. Jeder Busknoten [(BK₁), (BK₂), ..... [BKₙ₋₁]) empfängt einen zweiten Busknoteneingangsstrom ((i₂), (i₃), ...[i₍ₙ₋₁₎], [iₙ]) über den Abschnitt des zweiten Eindrahtbusses (DB_{b}), der Teil des Verbindungsabschnitts zwischen diesem Busknoten ((BK₂), (BK₃), ..... [BKₙ₋₁], [BKₙ]) und seinem vorausgehenden Busknoten ((BK₁), (BK₃), ..... [BKₙ₋₁], [BKₙ₋₁]) ist, von seinen nachfolgenden Busknoten ((BK₂), (BK₃), ..... [BKₙ₋₁], [BKₙ]), wenn er nicht der letzte Busknoten [BKₙ] ist. Dieses Verfahren nutzt also im Gegensatz zum zuvor beschriebenen beide Eindrahtbusse (DBₐ und DB_{b}) für die Übermittlung der Adressierungsströme. Als Erstes wird ein maximaler Adressierungsstrom [Iₐₘₐₓ] bestimmt. Es folgt das Durchführen einer Intitialisierungssequenz, die folgende Schritte aufweist, für jeden Autoadressierungsbusknoten der n Busknoten ((BK₁), (BK₂), ..... [BKₙ₋₁], [BKₙ]), der noch keine gültige Busknotenadresse besitzt, bis alle Autoadressierungsbusknoten der n Busknoten ((BK₁), (BK₂), ..... [BKₙ₋₁], [BKₙ]) über eine gültige Busknotenadresse verfügen:
- Signalisierung einer zu vergebenden Busadresse an alle Autoadressierungsbusknoten der n Busknoten ((BK₁), (BK₂), ..... ]BKₙ₋₁], [BKₙ]);
- Durchführung der folgenden Schritte für jeden Autoadressierungsbusknoten (BKⱼ) der Autoadressierungsbusknoten der n Busknoten ((BK₁), (BK₂), ..... ]BKₙ₋₁], [BKₙ]), im Folgenden als betreffender Autoadressierungsbusknoten (BKⱼ) bezeichnet:
- Empfang des besagten Autoadressierungskommandos vom Busmaster (ECU) durch den betreffenden Autoadressierungsbusknoten (BKⱼ);
- Empfang der zu vergebenden Busadresse vom Busmaster (ECU) durch den betreffenden Autoadressierungsbusknoten (BKⱼ);
- Empfang eines Startsignals für die Vergabe der zu vergebenden Busadresse vom Busmaster (ECU) durch den betreffenden Autoadressierungsbusknoten (BKⱼ) und Start eines Zeitgebers durch den betreffenden Autoadressierungsbusknoten (BKⱼ);
- Einspeisen des von den nachfolgenden Busknoten ([BKⱼ₊₁], [BKⱼ₊₂] ... [BKₙ₋₁], [BKₙ]) empfangenen ersten Buseingangsstroms [i₍ⱼ₊₁₎] über den Abschnitt (DB₁) des ersten Eindrahtbusses (DBₐ), der Teil des Verbindungsabschnitts des seriellen, bidirektionalen, differentiellen Zweidraht-Kommunikationsbusses (DB) zwischen dem betreffenden Autoadressierungsbusknotens (BKⱼ) und dem vorausgehenden (j-1)-ten Busknoten [BKⱼ₋₁] ist, als Teil des ersten Busausgangsstroms [iⱼ] des betreffenden Autoadressierungsbusknotens (BKⱼ);
- Einspeisen des von den nachfolgenden Busknoten ([BKⱼ₊₁], [BKⱼ₊₂] ...) empfangenen zweiten Buseingangsstroms [i'₍ⱼ₊₁₎] über den Abschnitt (DB₂) des zweiten Eindrahtbusses (DB_{b}), der Teil des Verbindungsabschnitts des seriellen, bidirektionalen, differentiellen Zweidraht-Kommunikationsbusses (DB) zwischen dem betreffenden Autoadressierungsbusknotens (BKⱼ) und dem vorausgehenden (j-1)-ten Busknoten [BKⱼ₋₁] ist, als Teil des zweiten Busausgangsstroms (i'ⱼ) des betreffenden Autoadressierungsbusknotens (BKⱼ);
- Erfassen des ersten Werts des ersten Busknotenausgangsstroms (iⱼ) des betreffenden Autoadressierungsbusknotens (BKⱼ) mittels erster Messmittel (R2, D2, D3);
- Erfassen des zweiten Werts des zweiten Busknotenausgangsstroms (i'ⱼ) des betreffenden Autoadressierungsbusknotens (BKⱼ) mittels zweiter Messmittel (R2', D2', D3');
- Erzeugung eines ersten Regelsignals (rwⱼ) aus dem erfassten ersten Wert des ersten Busknotenausgangsstroms (iⱼ) des betreffenden Autoadressierungsbusknotens (BKⱼ) mittels ersten Mitteln zum Regeln (F);
- Erzeugung eines zweiten Regelsignals (rw'ⱼ) aus dem erfassten zweiten Wert des zweiten Busknotenausgangsstroms (i'ⱼ) des betreffenden Autoadressierungsbusknotens (BKⱼ) mittels zweiten Mitteln zum Regeln (F');
- Ausregeln des ersten Busknotenausgangsstroms (iⱼ) durch den betreffenden Autoadressierungsbusknoten (BKⱼ), mittels einer ersten geregelten Autoadressierungsstromquelle (Iqⱼ), deren erster Adressierungsstrom einen Anteil des ersten Busausgangsstromes (iⱼ) darstellt, auf einen ersten vorgegebenen Summenstromwert [I_{ref}] in Abhängigkeit von dem erzeugten ersten Regelsignal (rwⱼ), wobei eine Erhöhung des ersten Adressierungsstroms der ersten geregelten Autoadressierungsstromquelle (Iqⱼ) des betreffenden Autoadressierungsbusknotens (BKⱼ) mit einer ersten Zeitkonstante [τ₁] erfolgt und wobei eine Erniedrigung des ersten Adressierungsstroms der ersten geregelten Autoadressierungsstromquelle (Iqⱼ) des betreffenden Autoadressierungsbusknotens (BKⱼ) mit einer zweiten Zeitkonstante [τ₂] erfolgt und wobei die zweite Zeitkonstante [τ₂] kleiner ist als die erste Zeitkonstante [τ₁];
- Ausregeln des zweiten Busknotenausgangsstroms (i'ⱼ) durch den betreffenden Autoadressierungsbusknoten (BKⱼ), mittels einer zweiten geregelten Autoadressierungsstromquelle (Iq'ⱼ), deren zweiter Adressierungsstrom einen Anteil des zweiten Busausgangsstromes (i'ⱼ) darstellt, auf einen zweiten vorgegebenen Summenstromwert [I'_{ref}] in Abhängigkeit von dem erzeugten zweiten Regelsignal (rw'ⱼ), wobei eine Erhöhung des zweiten Adressierungsstroms der zweiten geregelten Autoadressierungsstromquelle (Iq';) des betreffenden Autoadressierungsbusknotens (BKⱼ) mit einer dritten Zeitkonstante [τ₃] erfolgt und wobei eine Erniedrigung des zweiten Adressierungsstroms der zweiten geregelten Autoadressierungsstromquelle (Iq';) des betreffenden Autoadressierungsbusknotens (BKⱼ) mit einer vierten Zeitkonstante [τ₄] erfolgt und wobei die vierte Zeitkonstante [τ₄] kleiner ist als die dritte Zeitkonstante [τ₃];
- Vergleichen des ersten Regelwerts [rⱼ] des ersten Regelsignals (rwⱼ) des betreffenden Autoadressierungsbusknotens (BKⱼ) mit einem ersten Schwellwert [SWⱼ] des betreffenden Autoadressierungsbusknotens (BKⱼ);
- Vergleichen des zweiten Regelwerts [r'ⱼ] des zweiten Regelsignals (rw'ⱼ) des betreffenden Autoadressierungsbusknotens (BKⱼ) mit einem zweiten Schwellwert[SW'ⱼ] des betreffenden Autoadressierungsbusknotens (BKⱼ);
- Einfrieren der Regelung der ersten Adressierungsstromquelle (Iqⱼ) des betreffenden Autoadressierungsbusknotens (BKⱼ) zu einem ersten Zeitpunkt t₁ nach dem Start des Zeitgebers;
- Einfrieren der Regelung der zweiten Adressierungsstromquelle (Iq';) des betreffenden Autoadressierungsbusknotens (BKⱼ) zu einem zweiten Zeitpunkt t₂ nach dem Start des Zeitgebers;
- Übernahme der zu vergebenden Busknotenadresse vom Busmaster (ECU) als gültige Busknotenadresse des betreffenden Autoadressierungsbusknotens (BKⱼ), wenn eine Mindestzeit seit dem Start des Zeitgebers vergangen ist und wenn der Vergleich des ersten Regelwerts [rⱼ] mit dem ersten Schwellwert [SWⱼ] ergibt, dass der erste Adressierungsstrom der ersten Adressierungsstromquelle (Iqⱼ) des betreffenden Autoadressierungsbusknotens (BKⱼ) betragsmäßig oberhalb eines Stromschwellwertes liegt und/oder wenn der Vergleich des zweiten Regelwerts [r'ⱼ] mit dem zweiten Schwellwert [SW'ⱼ] ergibt, dass der zweite Adressierungsstrom der zweiten Adressierungsstromquelle (Iqⱼ) des betreffenden Autoadressierungsbusknotens (BKⱼ) betragsmäßig oberhalb eines Stromschwellwertes liegt und Konfiguration des betreffenden Autoadressierungsbusknotens (BKⱼ) als Busknoten ohne Autoadressierungsfähigkeit mit der zu vergebenen Busknotenadresse als gültige Busknotenadresse des betreffenden Autoadressierungsbusknotens (BKⱼ) zu einem dritten Zeitpunkt t₃ nach dem ersten Zeitpunkt t₁ und nach dem zweiten Zeitpunkt t₂, wodurch dieser Autoadressierungsbusknoten (BKⱼ) bis auf Weiteres nicht mehr an folgenden Initialisierungssequenzen teilnimmt.
- Überprüfung der erfolgreichen Adressvergabe durch den Busmaster (ECU);
- Ggf. Löschung der Gültigkeit der letzten vergebenen Busknotenadresse, wodurch die betreffenden Autoadressierungsbusknoten (BKⱼ) sich wieder wie Autoadressierungsbusknoten (BKⱼ) ohne gültige Busknotenadresse verhalten;
- Überprüfung ob alle Autoadressierungsbusknoten eine gültige Busknotenadresse erhalten haben;
- Durchführung einer weiteren Initialisierungssequenz, wenn nicht alle Autoadressierungsbusknoten eine gültige Busknotenadresse erhalten haben.

Dieses Basisverfahren kann mit einem zusätzlichen Schritt nach oder zusammen mit der Übernahme der zu vergebenden Busknotenadresse ergänzt werden. Es umfasst dann das Überbrücken des ersten Bus-Shunt-Widerstands (R2) mittels eines ersten Bus-Shunt-Überbrückungsschalters (S4) und/oder das Überbrücken des zweiten Bus-Shunt-Widerstands (R2') mittels eines zweiten Bus-Shunt-Überbrückungsschalters (S4') beim Wechsel vom Adressierungszustand mit ungültiger Busknotenadresse des jeweiligen Busknotens (BKⱼ) in den Adressierungszustand mit gültiger Busknotenadressse des jeweligen Busknotens (BKⱼ) oder beim Wechsel in den Normalzustand. Dieses Vorgehen hat den Vorteil, dass der Buswiderstand im laufenden Betrieb (Normalzustand nach Adressvergabe) vermindert wird.

Beim Übergang in den Autoadressierungsbetrieb (Adressierungszustand), wird die Überbrückung der Bus-Shunt-Widerstände (R2, R2') wieder rückgängig gemacht. Das Verfahren umfasst dann das Öffnen des ersten Bus-Shunt-Überbrückungsschalters (S4), wenn die Busknotenadresse des betreffenden Autoadressierungsbusknoten (BKⱼ) nicht gültig ist, und/oder das Öffnen des zweiten Bus-Shunt-Überbrückungsschalters (S4'), wenn die Busknotenadresse des betreffenden Autoadressierungsbusknotens (BKⱼ) nicht gültig ist.

Die dritte Zeitkonstante [τ₃] wird übrigens bevorzugt um einen Faktor größer als 10 kleiner als die erste Zeitkonstante [τ₁] und als die zweite Zeitkonstante [τ₂] gewählt. Die dritte Zeitkonstante τ₃ hängt bevorzugt in einer Verfahrensvariante innerhalb des betreffenden Autoadressierungsbusknotens (BKⱼ) von dem mittels ersten Messmitteln (R2, D2, D3) erfassten ersten Wert des ersten Busknotenausgangsstroms (iⱼ) des betreffenden Autoadressierungsbusknotens (BKⱼ) und/oder von dem mittels zweiten Messmitteln (R2', D2', D3') erfassten zweiten Wert des zweiten Busknotenausgangsstroms (i'ⱼ) des betreffenden Autoadressierungsbusknotens (BKⱼ) ab.

Bevorzugt hängen die erste Zeitkonstante [τ₁] innerhalb des betreffenden Autoadressierungsbusknotens (BKⱼ) von dem mittels ersten Messmitteln (R2, D1, D3) erfassten ersten Wert des ersten Busknotenausgangsstroms (iⱼ) des betreffenden Autoadressierungsbusknotens (BKⱼ) ab und /oder die zweite Zeitkonstante [τ₂] innerhalb des betreffenden Autoadressierungsbusknotens (BKⱼ) von dem mittels zweiten Messmitteln (R2', D1', D3') erfassten zweiten Wert des zweiten Busknotenausgangsstroms (i'ⱼ) des betreffenden Autoadressierungsbusknotens (BKⱼ) ab.

Die erste Zeitkonstante [τ₁] innerhalb des betreffenden Autoadressierungsbusknotens (BKj) kann von dem mittels ersten Messmitteln (R2, D2, D3) erfassten Wert des ersten Busknotenausgangsstroms (iⱼ) des betreffenden Autoadressierungsbusknotens (BKⱼ) in der Art abhängen, dass der Wert der ersten Zeitkonstante [τ₁] unterhalb eines Schwellwerts einen ersten Wert und oberhalb dieses Schwellwerts einen zweiten Wert besitzt, und/oder von dem mittels zweiten Messmitteln (R2', D2', D3') erfassten Wert des zweiten Busknotenausgangsstroms (i'ⱼ) des betreffenden Autoadressierungsbusknotens (BKⱼ) in der Art abhängen, dass der Wert der zweiten Zeitkonstante τ₂ unterhalb eines Schwellwerts einen dritten Wert und oberhalb dieses Schwellwerts einen vierten Wert besitzt.

Wichtig ist nun, dass die hier offengelegte Technik einen Selbsttest ermöglicht. Es ist daher vorteilhaft, wenn zusätzlich eine Überprüfung des erfassten ersten Werts des ersten Busknotenausgangsstroms (iⱼ) und/oder des erfassten zweiten Werts des zweiten Busknotenausgangsstrms (i'ⱼ) des betreffenden Autoadressierungsbusknotens (BKⱼ) auf Plausibilität erfolgt und ggf. Maßnahmen eingeleitet werden, falls der erfasste erste Wert des ersten Busknotenausgangsstroms (iⱼ) des betreffenden Autoadressierungsbusknotens (BKⱼ) und/oder der erfasste zweite Wert des zweiten Busknotenausgangsstroms (i'ⱼ) des betreffenden Autoadressierungsbusknotens (BKⱼ) oder deren Kombination nicht plausibel ist.

Es erfolgt bevorzugt eine Neubestimmung des Einspeisepunkts des ersten Adressierungsstroms (iⱼ) falls der erfasste erste Wert des ersten Busknotenausgangsstroms (iⱼ) des betreffenden Autoadressierungsbusknotens (BKⱼ) nicht plausibel ist. Ebenso erfolgt bevorzugt analog dazu eine Neubestimmung des Einspeisepunkts des ersten Adressierungsstroms (iⱼ) und des Einspeisepunkts des zweiten Adressierungsstroms (i'ⱼ), falls der erfasste erste Wert des ersten Busknotenausgangsstroms (iⱼ) und/oder der erfasste zweite Wert des zweiten Busknotenausgangsstroms (i'ⱼ) des betreffenden Autoadressierungsbusknotens (BKⱼ) und/oder deren Kombination nicht plausibel ist.

In einer Variante erfolgt bevorzugt eine Signalisierung eines Fehlers über den seriellen bidirektionalen differentiellen Kommunikationsbus (DB) nach Aufforderung durch einen Busmaster (ECU), falls der erfasste erste Wert des ersten Busknotenausgangsstroms (iⱼ) des betreffenden Autoadressierungsbusknotens (BKⱼ) und/oder der erfasste zweite Wert des zweiten Busknotenausgangsstroms (i'ⱼ) des betreffenden Autoadressierungsbusknotens (BKⱼ) oder deren Kombination nicht plausibel ist.

In einer Variante des Verfahrens erfolgt eine Durchführung des Schritts des Erfassens des ersten Werts des ersten Busknotenausgangsstroms (iⱼ) des betreffenden Autoadressierungsbusknotens (BKⱼ) mittels ersten Messmitteln (R2, D1, D3) als Erfassen des ersten Werts des ersten Busknotenausgangsstroms (iⱼ) des betreffenden Autoadressierungsbusknotens (BKⱼ) mittels ersten Messmitteln (R2, D1, D3) mit einem ersten Vorzeichen, falls der erfasste erste Wert des ersten Busknotenausgangsstroms (iⱼ) des betreffenden Autoadressierungsbusknotens (BKⱼ) plausibel ist, und das Erfassen des ersten Werts des ersten Busknotenausgangsstroms (iⱼ) des betreffenden Autoadressierungsbusknotens (BKⱼ) mittels ersten Messmitteln (R2, D1, D3) mit einem zweiten Vorzeichen, das zum ersten Vorzeichen invertiert ist, falls der erfasste erste Wert des ersten Busknotenausgangsstroms (iⱼ) des betreffenden Autoadressierungsbusknotens (BKⱼ) nicht plausibel ist.

In einer weiteren Variante des Verfahrens, die sich auf den anderen Eindrahtbus bezieht, erfolgt die Durchführung des Schritts des Erfassens des zweiten Werts des zweiten Busknotenausgangsstroms (i'ⱼ) des betreffenden Autoadressierungsbusknotens (BKⱼ) mittels zweiten Messmitteln (R2', D1', D3') wie folgt: Der Schritt umfasst das Erfassen des zweiten Werts des zweiten Busknotenausgangsstroms (i'ⱼ) des betreffenden Autoadressierungsbusknotens (BKⱼ) mittels zweiten Messmitteln (R2', D1', D3') mit einem ersten Vorzeichen, falls der erfasste zweite Wert des zweiten Busknotenausgangsstroms (i'ⱼ) des betreffenden Autoadressierungsbusknotens (BKⱼ) plausibel ist, und das Erfassen des zweiten Werts des zweiten Busknotenausgangsstroms (i'ⱼ) des betreffenden Autoadressierungsbusknotens (BKⱼ) mittels zweiten Messmitteln (R2', D1', D3') mit einem zweiten Vorzeichen, das zum ersten Vorzeichen invertiert ist, falls der erfasste zweite Wert des zweiten Busknotenausgangsstroms (i'ⱼ) des betreffenden Autoadressierungsbusknotens (BKⱼ) nicht plausibel ist.

Eine weitere Verfahrensvariante umfasst zusätzlich das Erfassen des zweiten Werts des zweiten Busknotenausgangsstroms (i'ⱼ) des betreffenden Autoadressierungsbusknotens (BKⱼ) mittels zweiten Messmitteln (R2', D1', D3') in der folgenden Art und Weise: Dieser Schritt umfasst als Erstes das Erfassen des zweiten Werts des zweiten Busknotenausgangsstroms (i'ⱼ) des betreffenden Autoadressierungsbusknotens (BKⱼ) mittels zweiten Messmitteln (R2', D1', D3') mit einem ersten Vorzeichen, falls der zuvor erfasste erste Wert des ersten Busknotenausgangsstroms (iⱼ) des betreffenden Autoadressierungsbusknotens (BKⱼ) plausibel ist und falls der zuvor erfasste zweite Wert des zweiten Busknotenausgangsstroms (i'ⱼ) des betreffenden Autoadressierungsbusknotens (BKⱼ) plausibel ist, und das Erfassen des zweiten Werts des zweiten Busknotenausgangsstroms (i'ⱼ) des betreffenden Autoadressierungsbusknotens (BKⱼ) mittels zweiten Messmitteln (R2', D1', D3') mit einem zweiten Vorzeichen, das zum ersten Vorzeichen invertiert ist, falls der zuvor erfasste erste Wert des ersten Busknotenausgangsstroms (iⱼ) des betreffenden Autoadressierungsbusknotens (BKⱼ) nicht plausibel ist oder falls der zuvor erfasste zweite Wert des zweiten Busknotenausgangsstroms (i'ⱼ) des betreffenden Autoadressierungsbusknotens (BKⱼ) nicht plausibel ist.

Plausibel im Sinne dieser Offenlegung sind zwei Werte, wenn sie Ergebnis zweier verschiedener Prüfungen sind, die aufgrund ihrer Konstruktion zwar nicht unberdingt ein identisches, aber doch ein gleiches Ergebnis liefern sollten, und die untereinander gleich sind. Gleichheit bedeutet hier eine Abweichung des Betrags der Norm der Ergebnisse um weniger als einen vorbestimmten Schwellwert. Nicht plausibel im Sinne dieser Offenlegung sind zwei Werte, wenn sie Ergebnis zweier verschiedener Prüfungen sind, die aufgrund ihrer Konstruktion zwar nicht unberdingt ein identisches, aber doch ein gleiches Ergebnis liefern sollten, und die untereinander nicht gleich sind.

Des Weiteren umfasst diese Variante das Durchführen des Schritts des Erfassens des ersten Werts des ersten Busknotenausgangsstroms (iⱼ) des betreffenden Autoadressierungsbusknotens (BKⱼ) mittels ersten Messmitteln (R2, D1, D3) in der folgenden Art und Weise: Der Schritt umfasst das Erfassen des ersten Werts des ersten Busknotenausgangsstroms (iⱼ) des betreffenden Autoadressierungsbusknotens (BKⱼ) mittels ersten Messmitteln (R2, D1, D3) mit einem ersten Vorzeichen, falls der zuvor erfasste erste Wert des ersten Busknotenausgangsstroms (iⱼ) des betreffenden Autoadressierungsbusknotens (BKⱼ) plausibel ist und falls der zuvor erfasste zweite Wert des zweiten Busknotenausgangsstroms (i'ⱼ) des betreffenden Autoadressierungsbusknotens (BKⱼ) plausibel ist, und das Erfassen des ersten Werts des ersten Busknotenausgangsstroms (iⱼ) des betreffenden Autoadressierungsbusknotens (BKⱼ) mittels ersten Messmitteln (R2, D1, D3) mit einem zweiten Vorzeichen, das zum ersten Vorzeichen invertiert ist, falls der zuvor erfasste erste Wert des ersten Busknotenausgangsstroms (iⱼ) des betreffenden Autoadressierungsbusknotens (BKⱼ) nicht plausibel ist oder falls der zuvor erfasste zweite Wert des zweiten Busknotenausgangsstroms (i'ⱼ) des betreffenden Autoadressierungsbusknotens (BKⱼ) nicht plausibel ist.

Eine Variante des Verfahrens mit Plausibilisierungen umfasst die Verwendung einer Fehleradresse als gültige Busknotenadresse des betreffenden Autoadressierungsbusknotens (BKⱼ), falls der erfasste erste Wert des ersten Busknotenausgangsstroms (iⱼ) des betreffenden Autoadressierungsbusknotens (BKⱼ) nicht plausibel oder falls der erfasste zweite Wert des zweiten Busknotenausgangsstroms (i'ⱼ) des betreffenden Autoadressierungsbusknotens (BKⱼ) nicht plausibel ist.

### AUTOADRESSIEUNGSVERFAHREN ÜBER INTERRUPT-LEITUNG

Neben diesen durch Bus-Shunt-Widerstände (R2, R2') gestützten Methoden zur Adressvergabe wird vorgeschlagen, das folgende Verfahren zur Autoadressierung über eine Interruptleitung durchzuführen.

Hierbei handelt es sich um ein Verfahren zur Vergabe von logischen Busknotenadressen an die Busknoten ((BK₁) bis [BKₙ]) eines Datenbussystems mit einem seriellen, bidirektionalen, differentiellen Zweidraht-Kommunikationsbus (DB), bei dem das Datenbussystem einen Busmaster (ECU) mit einem Adresseingang (Adrᵢ₀) und n Busknoten ((BK₁) bis [BKₙ]) (mit n als ganzer positiver Zahl) aufweist. Jeder der n Busknoten ((BK₂) bis [BKₙ]) ist über einen Datenleitungsabschnitt (DB₁ bis DBₙ) oder einen seriellen, bidirektionalen, differentiellen Zweidraht-Kommunikationsbus (DB) mit dem Busmaster (ECU) zur Datenübertragung verbunden. Eine Leitung, die hier zur Signalisierung der Autoadressierungsinformation benutzt wird und die typischerweise eine Interruptleitung ist, ist nun von einem Adresseingang (Adrᵢ₀) des Busmasters (ECU) ausgehend durch alle Busknoten ((BK₁) bis [BKₙ]) so durchgeschleift, dass sie durch die einzelnen Busknoten ((BK₁) bis [BKₙ]) in n Leitungsabschnitte [L₁ bis Lₙ] unterteilt wird. Jeder der Busknoten, im Folgenden zur besseren Klarheit als j-ter Busknoten (BKⱼ) mit 1≤j≤ n bezeichnet, weist nun einen diesem j-ten Busknoten (BKⱼ) zugehörigen Adresseingang [Adrᵢⱼ] und einen diesem j-ten Busknoten (BKⱼ) zugehörigen Adressausgang [Adrₒⱼ] auf. Diese werden als Ein- und Ausgänge zur Stimulierung der Autoadressierungsinformation und zu deren Weitergabe verwendet. Jeder der Busknoten (BKⱼ), wenn er nicht der n-te Busknoten [BKₙ] ist, ist mit seinem Adresseingang [Adrᵢⱼ] (mit 1≤j≤ n-1) mit dem Adressausgang [Adrₒ₍ⱼ₊₁₎] eines nachfolgenden Busknotens [BKⱼ₊₁] mit 1≤j≤ n-1 durch einen dem nachfolgenden Busknoten [BKⱼ₊₁] zugehörigen (j+1)-ten Leitungsabschnitt [Lⱼ₊₁] verbunden. Jeder der Busknoten (BKⱼ) mit 2≤j≤ n ist mit seinem Adressausgang [Adrₒⱼ] mit dem Adresseingang (Adrᵢ₍ⱼ₋₁₎) eines vorausgehenden Busknotens [BKⱼ₋₁] mit 2≤j≤ n durch einen dem Busknoten (BKⱼ) zugehörigen j-ten Leitungsabschnitt [Lⱼ] verbunden. Der erste Busknoten (BK₁) ist mit seinem Adressausgang (Adrₒ₁) mit dem Adresseingang (Adrᵢ₀) des Busmasters (ECU) durch einen dem ersten Busknoten (BK₁) zugehörigen Leitungsabschnitt (L₁) verbunden. Die jeweilige Busknotenadresse jedes Busknotens ((BK₁) bis [BKₙ]) kann gültig oder nicht gültig sein. Als erster Schritt dieses Verfahrens wird ein Ungültig machen aller oder zumindest eines Teils der jeweiligen Busknotenadressen der Busknoten ((BK₁) bis [BKₙ]) und ein Versetzen zumindest dieses Teils der Busknoten ((BK₁) bis [BKₙ]) z.B. von einem Normalzustand aus in einen Adressierungszustand vorgeschlagen. Das Erstere hat den Zweck, einen definierten Anfangszustand herzustellen. Das Zweitere hat den Zweck, die Adressvergabe in allen Busknoten ((BK₁) bis [BKₙ]) zu starten. Solange der Busknoten sich im Adressierungszustand befindet, wird die besagte Leitung nicht für ihre normale Funktion, also beispielsweise als Interrupt-Request-Leitung, benutzt, sondern für den Transport der Autoadressierungsfunktion.

Während dieses Bestehens des Adressierungszustands erfolgt als erstes nun ein Setzten des Pegels des Adresseingangs (Adrᵢ₀) des Busmasters (ECU) auf einen zweiten logischen Wert, wenn der Pegel dieses Adresseingangs (Adrᵢ₀) dieses Busmasters (ECU) nicht durch den Adressausgang (Adrₒ₁) des ersten Busknotens (BK₁) der Busknoten ((BK₁) bis [BKₙ]) überschrieben wird. Es ist ein Charakteristikum, dass sowohl Busmaster (ECU) mit seinem Adresseingang (Adrᵢ₀), als auch die Busknoten ((BK₁) bis [BKₙ₋₁]) mit ihren Adresseingängen ((Adrᵢ₁) bis [Adrᵢₙ]) durch die Adressausgänge ((Adrₒ₁) bis [Adrₒₙ]) der nachfolgenden Busknoten ((BK₁) bis [BKₙ]) überschrieben werden können, da diese niederohmiger ausgelegt werden als die entsprechenden Treiberstufen in den Adresseingängen ((Adrᵢ₁) bis [Adrᵢₙ]) der Busknoten ((BK₁) bis [BKₙ]). Nur der letzte Busknoten [BKₙ] ist mit seinem Adresseingang [Adrᵢₙ] mit keinem anderen nachfolgenden Busknoten verbunden. Daher bestimmt in diesem letzten Busknoten [BKₙ] die Treiberstufe innerhalb des Adresseingangs [Adrᵢₙ] des letzten Busknotens [BKₙ] den logischen Zustand am Adresseingang [Adrᵢₙ]. Dadurch kann der letzte Busknoten erkennen, dass er der letzte in der Reihe der Busknoten ist, der noch keine gültige Busknotenadresse hat, und kann daher die vom Busmaster angebotene Adresse als neue gültige Busknotenadresse akzeptieren, wenn er keine gültige Busknotenadresse hat, sofern er auf welchem Wege auch immer keine gültige Busknotenadresse besitzt. Da er auf diese Weise eine gültige Busknotenadresse erhalten hat und nun über diese verfügt, schaltet dieser Busknoten (BKⱼ) dann seinen Adressausgang [Adrₒⱼ] ab, wodurch die Treiberstufe des vorhergehenden Adresseingangs [Adr₍ⱼ₋₁₎] des vorhergehenden Busknotens [BKⱼ₋₁] nicht mehr durch den Adressausgang [Adrₒⱼ] des Busknotens (BKⱼ) überschrieben wird und der vorausgehende Busknoten [BKⱼ₋₁] sich dann als letzter Busknoten ohne gültige Busknotenadresse in der Reihe der noch nicht adressierten Busknoten erkennen kann und somit beim nächsten Initialisierungsvorgang der vorausgehende Busknoten [BKⱼ₋₁] dann die dann neu vom Busmaster (ECU) angebotene neu zu vergebende Busknotenadresse auf die gleiche Art als seine gültige Busknotenadresse übernehmen kann.

Da der vorausgehende Busknoten [BKⱼ₋₁]auf diese Weise in dem nachfolgenden Inintialisierungslauf eine gültige Busknotenadresse erhält und dann über diese verfügt, schaltet dieser voausgehende Busknoten [BKⱼ₋₁] dann seinen Adressausgang [Adrₒ₍ⱼ₋₁₎] ab, wodurch die Treiberstufe des übernächsten vorhergehenden Adresseingangs [Adrᵢ₍ⱼ₋₂₎] des übernächsten vorhergehenden Busknotens [BKⱼ₋₂] nicht mehr durch den Adressausgang [Adrₒ₍ⱼ₋₁₎] des vorhergehenden Busknotens [BKⱼ₋₁] überschrieben wird und der übernächste vorausgehende Busknoten [BKⱼ₋₂] sich dann als letzter Busknoten ohne gültige Busknotenadresse in der Reihe der noch nicht adressierten Busknoten erkennen kann und somit beim übernächsten Initialisierungsvorgang der übernächste vorausgehende Busknoten [BKⱼ₋₂] dann die dann neu vom Busmaster (ECU) angebotene neu zu vergebende Busknotenadresse auf die gleiche Art als seine gültige Busknotenadresse übernehmen kann.

Dies wird so Busknoten für Busknoten fortgesetzt. Während des Bestehens des Adressierungszustands erfolgt daher in jedem Busknoten (BKⱼ) der Busknoten ((BK₂) bis [BKₙ]) unter Ausschluss des ersten Busknotens (BK₁) ein Überschreiben des Pegels an dem Adresseingang [Adrᵢ₍ⱼ₋₁₎] des dem jeweiligen Busknoten (BKⱼ) vorausgehenden Busknotens [BKⱼ₋₁] durch diesen jeweiligen Busknoten (BKⱼ) mit einem ersten logischen Pegel, wenn die Busknotenadresse dieses jeweiligen Busknotens (BKⱼ) ungültig ist und der Pegel an dem Adresseingang [Adrᵢⱼ] dieses jeweiligen Busknotens (BKⱼ) einen ersten logischen Wert hat und ein Setzten des Pegels des Adresseingangs [Adrᵢⱼ] dieses Busknotens (BKⱼ) auf einen zweiten logischen Wert, wenn der Pegel dieses Adresseingangs [Adrᵢⱼ] dieses Busknotens [BKⱼ] nicht durch den Adressausgang [Adrₒ₍ⱼ₊₁₎] des dem jeweiligen Busknoten (BKⱼ) ggf. nachfolgenden Busknotens [BKⱼ₊₁] der Busknoten ((BK₃) bis [BKₙ]) überschrieben wird. Ebenso erfolgt während des Bestehens des Adressierungszustands in dem ersten Busknoten (BK₁) ein Überschreiben des Pegels an dem Adresseingang (Adrᵢ₀) des Busmasters (ECU) durch den ersten Busknoten (BK₁) mit einem ersten logischen Pegel, wenn die Busknotenadresse des ersten Busknotens (BK₁) ungültig ist und der Pegel an dem Adresseingang (Adrₒ₁) dieses ersten Busknotens (BK₁) einen ersten logischen Wert hat und ein Setzten des Pegels des Adresseingangs (Adrᵢ₁) dieses ersten Busknotens (BK₁) auf einen zweiten logischen Wert, wenn der Pegel dieses Adresseingangs (Adrᵢ₁) dieses ersten Busknotens (BK₁) nicht durch den Adressausgang (Adrₒ₂) des dem ersten Busknoten (BK₁) nachfolgenden Busknotens (BK₂) der Busknoten ((BK₂) bis [BKₙ]) überschrieben wird. Des Weiteren erfolgt während des Bestehens des Adressierungszustands die Signalisierung einer Busknotenadresse an alle Busknoten ((BK₁) bis [BKₙ]) durch den Busmaster (ECU) und die Übernahme der signalisierten Busknotenadresse als gültige Busknotenadresse durch denjenigen Busknoten (BKⱼ) der Busknoten ((BK₁) bis [BKₙ]), dessen Busknotenadresse ungültig ist und dessen Adresseingang [Adrᵢⱼ] einen zweiten logischen Wert aufweist und das Wiederholen dieser Signalisierung durch den Busmaster (ECU) bis der Adresseingang (Adrᵢ₀) des Busmasters (ECU) einen zweiten logischen Wert aufweist, also nicht überschrieben ist. Diese Adressierung wird somit so lange wiederholt, bis der Busmaster (ECU) der letzte in der Kette der nicht adressierten Busknoten ist. Es erfolgt daher ein Versetzen der Busknoten ((BK₁) bis [BKₙ]) in einen vom Adressierungszustand verschiedenen zweiten Betriebszustand - der typischerweise der Normalzustand ist, wenn der Adresseingang (Adrᵢ₀) des Busmasters (ECU) einen zweiten logischen Wert aufweist.

Wie bereits erwähnt, ist es in einigen Fällen günstig, wenn die Leitung [L₁ bis Lₙ] im zweiten Betriebszustand als Interrupt-Leitung benutzt wird.

### AUTOADRESSIEUNGSVERFAHREN ÜBER BUS-SHUNT-WIDERSTÄNDE IN DER VERSORGUNGSSPANNUNGSLEITUNG

### Figur 15

Als letztes wird ein Autoadressierungsverfahren zur Vergabe von Busknotenadressen innerhalb eines Datenbussystems mit einem Kommunikationsbus, insbesondere einem seriellen, bidirektionalen, differentiellen Zweidraht-Kommunikationsbus (DB), mit n Busknoten ((BK₁), (BK₂), (BK₃), ..... [BKₙ₋₁], [BKₙ]), mit n als ganzer positiver Zahl größer Null, und einem Busmaster (ECU) beschrieben, bei dem die Busknoten über eine Versorgungsspannungsleitung (V_{bat}) mit elektrischer Energie versorgt werden, der Kommunikationsbus (DB) mit dem Busmaster (ECU) verbunden ist, jeder Busknoten ((BK₁), (BK₂), ..... [BKₙ₋₁], [BKₙ]) mit dem Kommunikationsbus (DB) verbunden ist und bei dem innerhalb der Busknoten ((BK₁) bis [BKₙ]) jeweils ein dem jeweiligen Busknoten (BKⱼ) der n Busknoten ((BK₁) bis [BKₙ]) zugeordneter Messwiderstand [Rmⱼ] in die Versorgungsspannungsleitung (V_{bat}) eingefügt ist. Dieser Fall entspricht der Figur 15. Damit verfügt das hier nun beschriebene Datenbussystem über n Messwiderstände ((Rm₁) bis [Rmₙ]). Die Messwiderstände ((Rm₁) bis [Rmₙ]) der Busknoten ((BK₁) bis [BKₙ]) unterteilen somit die Versorgungsspannungsleitung (V_{bat}) in n Versorgungsspannungsleitungsabschnitte.

### Figur 16

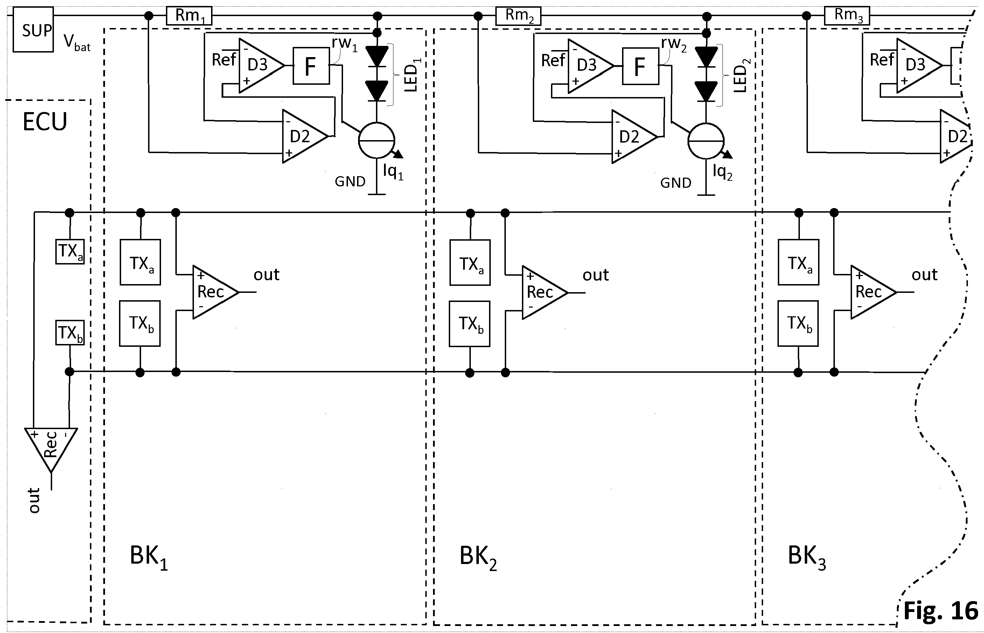

Da insbesondere im Falle von Datenbussystemen zur Steuerung mehrerer Leuchtmittelgruppen ((LED₁) bis [LEDₙ]) (siehe auch Figur 16) erhebliche Ströme über die Versorgungsspannungsleitung (V_{bat}) fließen können, sollten die Messwiderstände ((Rm₁) bis [Rmₙ]) bevorzugt möglichst niederohmig gewählt werden, um die Verluste zu minimieren. Es ist daher denkbar, statt dedizierter Messwiderstände ((Rm₁) bis [Rmₙ]) nur Leiterbahneinschnürungen oder auch nur Leitungsstücke vordefinierter und für alle Busknoten gleicher Länge, Breite und Dicke mit gleichem Material und mit einem spezifischen Bahnwiderstand abweichend von 0 Ω/m als Messwiderstände ((Rm₁) bis [Rmₙ]) zu verwenden. Dies sind nur Beispiele für die Realisierung der Messwiderstände ((Rm₁) bis [Rmₙ]). Andere Realisierungen, wie beispielsweise in Dickschichttechnik etc. sind denkbar. Jeder Busknoten (BKⱼ) der Busknoten ((BK₁) bis [BKₙ]) verfügt über eine Adressierungsstromquelle (Iqⱼ). Als solche Adressierungsstromquellen (Iqⱼ) können auch Stromquellen benutzt werden, die im Normalzustand des Busknotens beispielsweise als Stromquelle für eine Leuchtdiode oder ein anders Leuchtmittel [LED;] benutzt werden. Jeder Busknoten (BKⱼ) der Busknoten ((BK₁) bis [BKₙ]) verfügt bevorzugt über Mittel ((D2), (D3), [Rmⱼ]), um den Strom durch den Messwiderstand [Rmⱼ] dieses Busknotens (BKⱼ) der Busknoten ((BK₁) bis [BKₙ]) zu erfassen. Der zweite Differenzverstärker (D2) eines Busknotens (BKⱼ) erfasst den Spannungsabfall über den jeweiligen Messwiderstand [Rmⱼ9 des betreffenden Busknotens (BKⱼ). Ein dritter Differenzverstärker (D3) vergleicht durch Differenzbildung den Wert des Ausgangssignals des zweiten Differenzverstärkers (D2) mit einem Referenzwert (Ref). Der dritte Differenzverstärker (D3) des Busknotens (BKⱼ) erzeugt in Abhängigkeit vom Ergebnis dieses Vergleichs zusammen mit einem Regler oder Filter (F) des Busknotens (BKⱼ) ein Regelsignal (rwⱼ), das spezifisch für diesen Busknoten (BKⱼ) ist. Von dem Wert dieses Regelsignals (rwⱼ) hängt ab, welchen Wert der Adressierungsstrom der Adressierungsstromquelle (Iqⱼ) des betreffenden Busknotens (BKⱼ) annimmt, wenn der Busknoten (BKⱼ) durch den Busmaster (ECU) zuvor vom Normalzustand in den Adressierungszustand gebracht worden ist. Ist der Busknoten im Normalzustand, so ist typischerweise die Adressierungsstromquelle (Iqⱼ) abgeschaltet, wenn sie in diesem Normalzustand keine andere Aufgabe hat. Es ist beispielsweise nämlich auch möglich, eine Stromquelle, die im Normalbetrieb beispielsweise zur Energieversorgung von Verbrauchern, also beispielsweise Leuchtmitteln und/oder LEDs [LEDⱼ], verwendet wird, im Adressierungsszustand des Busknotens (BKⱼ) als Adressierungsstromquelle (Iqⱼ) des Busknotens (BKⱼ) zu verwenden. Dies ist in Figur 16 dargestellt, die sich bis auf die Leuchtmittel ((LED₁) bis [LEDₙ]) nicht von der Figur 15 unterscheidet. Durch einen Befehl des Busmasters (ECU) geht der betreffende Busknoten (BKⱼ) in den Adressierungszustand, wodurch seine Adressierungsstromquelle (Iqⱼ) eingeschaltet wird. Dieses Einschalten seiner Adressierungsstromquelle (Iqⱼ) führt bevorzugt ein Busknoten (BKⱼ) nur dann durch, wenn er über keine gültige Busknotenadresse verfügt, die typischerweise in einem Busknotenadressregister [BKADR] abgelegt ist, und als "gültig" oder "ungültig" mit einem entsprechenden Flag markiert ist. Dieses Flag dient dann typischerweise auch zur Markierung als "ungültig". Ist seine Busknotenadresse ungültig, so nimmt ein Busknoten (BKⱼ) also bevorzugt an einer Autoadressierungssequenz teil, wenn diese vom Busmaster (ECU) gestartet wird. Dies gilt übrigens auch für die anderen Autoadressierungsverfahren. Die Adressierungsstromquelle (Iqⱼ) jedes Busknotens (BKⱼ) der Busknoten ((BK₁) bis [BKₙ]) speist dann in diesem Fall einen Adressierungsstrom in Richtung auf die Spannungsversorgung (SUP) in die Versorgungsspannungsleitung (V_{bat}) in den Anschluss des Messwiderstands [Rmⱼ] dieses Busknotens (BKⱼ) ein, der längs der Versorgungsspannungsleitung (V_{bat}) am entferntesten von der Spannungsversorgung (SUP) liegt. Die Busknoten ((BK₁) bis [BKⱼ₋₁]), die weniger weit von der Spannungsversorgung (SUP) entfernt liegen, erfassen mit ihren jeweiligen Messmitteln ((Rm₁) bis [Rmⱼ₋₁], (D2), (D3)) jeweils den zusätzlichen Spannungsabfall über ihre jeweiligen Messwiderstände (Rm₁ bis Rmⱼ₋₁) und regeln ihre Adressierungsstromquellen ((Iq₁) bis [Iqⱼ₋₁]) herunter oder schalten diese, je nach Implementation des Verfahrens, in diesem Adressierungszustand der Busknoten ((BK₁) bis [BKₙ]) ab. Dieses Herunterfahren kann durch einen Schwellwertvergleich z.B. des jeweiligen Regelsignals (rwⱼ) eines Busknotens (BKⱼ) erkannt werden. Damit kann der jeweilige Busknoten (BKⱼ) dann wieder feststellen, dass er nicht der letzte Busknoten in der Busknoten-Reihe ohne gültige Busknotenadresse ist oder dass er der letzte Busknoten in der Busknotenreihe ohne gültige Busknotenadresse ist. In diesem letzten Fall übernimmt der Busknoten die vom Busmaster angebotene zu vergebende Busknotenadresse, als seine gültige Busknotenadresse. Somit besitzt dieser Busknoten - angenommen der j-te Busknoten (BKⱼ) - nun eine gültige Busknotenadresse und schaltet seine Adressierungsstromquelle (Iqⱼ) für die Dauer des Adressierungsverfahrens ab. Das Adressierungsverfahren wird, wie immer in dieser Offenlegung typischerweise durch einen Befehl des Busmasters (ECU) beendet, der bevorzugt alle Busknoten ((BK₁) bis [BKₙ]) typischerweise dazu veranlasst, den Adressierungszustand zu beenden und beispielsweise den Normalzustand einzunehmen.

Das Verfahren zur Adressierung über Spannungsabfälle längs der Versorgungsspannungsleitung (V_{bat}) sieht daher nun folgende Schritte konkret vor:
- Signalisierung eines Adressierungszustands, im Folgenden Power-Line-Adressierungszustand genannt, an alle Busknoten ((BK₁) bis [BKₙ]), wodurch diese einen Adressierungszustand für die Durchführung eines Autoadressierungsverfahrens mittels der Versorgungsspannungsleitung (V_{bat}) annehmen;
- Ggf. Signalisierung an zumindest einen Busknoten oder einen Teil, besser an alle der Busknoten ((BK₁) bis [BKₙ]) deren Busknotenadressen ungültig zu machen;
- Durchführen einer Intitialisierungssequenz, die folgende Schritte aufweist, für jeden Busknoten (BKⱼ) der n Busknoten ((BK₁), (BK₂), ..... [BKₙ₋₁], [BKₙ]), der noch keine gültige Busknotenadresse besitzt bis alle Busknoten der n Busknoten ((BK₁), (BK₂), ..... [BKₙ₋₁], [BKₙ]) über eine gültige Busknotenadresse verfügen:
- Signalisierung einer zu vergebenden Busadresse an alle Busknoten der n Busknoten ((BK₁), (BK₂), ..... [BKₙ₋₁], [BKₙ]) (Typischerweise erfolgt mit dieser Signalisierung auch der Befehl des Busmasters (ECU) an die Busknoten, den Adressierungszustand einzunehmen oder ggf. beizubehalten.);
- Durchführung der folgenden Schritte parallel für jeden Busknoten (BKⱼ) der Busknoten der n Busknoten ((BK₁), (BK₂), ..... [BKₙ₋₁], [BKₙ]), im Folgenden als betreffender Busknoten (BKⱼ) bezeichnet, der über keine gültige Busknotenadresse verfügt:
- Empfang des besagten Autoadressierungskommandos vom Busmaster (ECU) durch den betreffenden Busknoten (BKⱼ);
- Empfang der zu vergebenden Busadresse vom Busmaster (ECU) durch den betreffenden Busknoten (BKⱼ);
- Empfang eines Startsignals für die Vergabe der zu vergebenden Busadresse vom Busmaster (ECU) durch den betreffenden Busknoten (BKⱼ) und Start eines Zeitgebers zu einem Startzeitpunkt t₀=0s durch den betreffenden Busknoten (BKⱼ);
- Erfassen des Spannungsabfalls über den Messwiderstand (Rmⱼ) des betreffenden Busknotens (BKⱼ) als Basisspannungswert [Vₘ₀] mittels Messmitteln ([Rmⱼ], (D2), (D3));
- Zu einem vierten Zeitpunkt [t₄] nach dem Startzeitpunkt [t₀]: Einschalten der Adressierungsstromquelle (Iqⱼ) des betreffenden Busknotens (BKⱼ) und Ausregelung des Spannungsabfalls über dem Messwiderstand [Rmⱼ] des betreffenden Busknotens (BKⱼ) mit Hilfe der Adressierungsstromquelle (Iqⱼ) in Abhängigkeit von dem Spannungsabfall über dem Messwiderstand [Rmⱼ] mittels eines Regelsignals (rwⱼ), das durch Messmittel ((D2), (D3), [Rmⱼ]) und/oder Regelmittel (F) des Busknotens (BKⱼ) erzeugt wird, auf einen Gesamtzielspannungswert der einem Zielspannungswert als plus dem zuvor gemessenen Basisspannungswert [Vₘ₀] entspricht, wobei eine Erhöhung des Adressierungsstroms der Autoadressierungsstromquelle (Iqⱼ) des betreffenden Busknotens (BKⱼ) mit einer ersten Zeitkonstante [τ₁] erfolgt und wobei eine Erniedrigung des Adressierungsstroms der Autoadressierungsstromquelle (Iqⱼ) des betreffenden Busknotens (BKⱼ) mit einer zweiten Zeitkonstante [τ₂] erfolgt (Man beachte, dass hier noch keine Aussage über das wertemäßige Verhältnis der ersten Zeitkonstante [τ₁] im Vergleich zur zweiten Zeitkonstante [τ₂] erfolgt.);
- Zu einem fünften Zeitpunkt [t₅] nach dem Startzeitpunkt [t₀] und nach dem vierten Zeitpunkt [t₄]: Erfassen des Werts des Regelsignals (rwⱼ) oder eines daraus abgeleiteten Signals und Vergleich dieses Werts mit einem Schwellwert und
- Verwendung der zu vergebenden Busknotenadresse als gültige Busknotenadresse des Busknotens (BKⱼ), wenn der Betrag dieses Wertes über dem Schwellwert liegt und Ausschalten der Adressierungsstromquelle (Iqⱼ) spätestens beim Verlassen des Adressierungszustands durch den Busknoten (BKⱼ).

Es ist zweckmäßig, eine Überprüfung der erfolgreichen Adressvergabe durch den Busmaster (ECU) nach Vergabe einer Busknotenadresse an einen Busknoten (BKⱼ) durchzuführen. Ergibt diese einen Fehler, melden beispielsweise mehrere Busknoten eine Buskollision, so ist eine Löschung der Gültigkeit der letzten vergebenen Busknotenadresse sinnvoll, wodurch die betreffenden Busknoten (BKⱼ) sich wieder wie Busknoten (BKⱼ) ohne gültige Busknotenadresse verhalten. Nach der Vergabe aller Busknotenadressen an alle Busknoten ((BK₁) bis [BKₙ]), die eine Busknotenadresse erhalten sollten, sollte überprüft werden, ob alle Busknoten ((BK₁) bis [BKₙ]), die eine Busknotenadresse erhalten sollten, eine gültige Busknotenadresse erhalten haben. Haben alle Busknoten eine gültige Busknotenadresse erhalten, so signalisiert der Busmaster (ECU) bevorzugt an alle Busknoten ((BK₁) bis [BKₙ]), dass sie den Adressierungszustand verlassen sollen und einen anderen Zustand, bevorzugt den Normalzustand einnehmen sollen. Im Normalzustand schalten die Busknoten ((BK₁) bis [BKₙ]) ihre Adressierungsstromquellen ((Iq₁) bis [Iqₙ]) aus bzw. betreiben sie in der Funktion, die für diese Adressierungsstromquellen ((Iq₁) bis [Iqₙ]) in diesem Betriebszustand, hier dem Normalzustand, vorgesehen ist. Die Durchführung einer weiteren Initialisierungssequenz ist zweckmäßig, wenn nicht alle Busknoten ((BK₁) bis [BKₙ]), die eine Busknotenadresse erhalten sollten, eine gültige Busknotenadresse erhalten haben. Grundsätzlich ist es zweckmäßig, wenn die zweite Zeitkonstante [τ₂] um einen Faktor größer als 10 kleiner ist als die erste Zeitkonstante [τ₁] ist. Zumindest aber sollte die erste Zeitkonstante [τ₁] größer als die zweite Zeitkonstante [τ₂] sein. Es ist günstig, wenn die erste Zeitkonstante [τ₁] innerhalb des betreffenden Autoadressierungsbusknotens (BKⱼ) von dem mittels Messmitteln ([Rmⱼ], (D2), (D3)) erfassten Wert des Spannungsabfalls über den Messwiderstand [Rmⱼ] des betreffenden Autoadressierungsbusknotens (BKⱼ) abhängt und/oder die zweite Zeitkonstante [τ₂] innerhalb des betreffenden Autoadressierungsbusknotens (BKⱼ) von dem mittels Messmitteln ([Rmⱼ], (D2), (D3)) erfassten Wert des Spannungsabfalls über den Messwiderstand [Rmⱼ] des betreffenden Autoadressierungsbusknotens (BKⱼ) abhängt. Dies ermöglicht eine schnellere Regelung des Spannungsabfalls über den Messwiederstand [Rmⱼ] des betreffenden Busknotens (BKⱼ).

### Figur 17

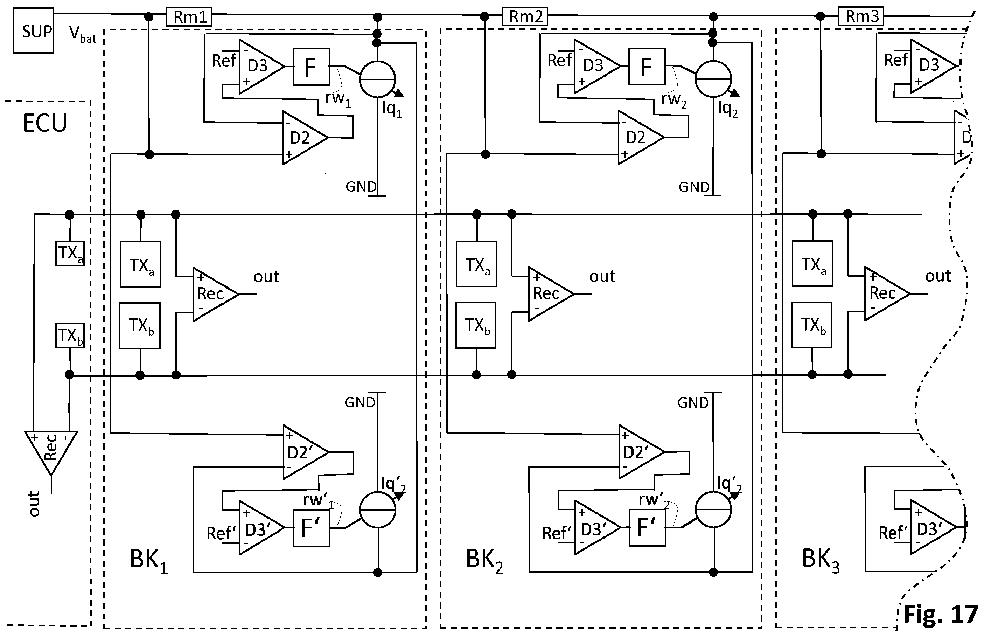

In der Figur 17 werden nun auch zweite Adressierungsstromquellen (Iq'ⱼ) der betreffenden Busknoten (BKⱼ) für die Autoadressierung über die Spannungsversorgungsleitung (V_{bat}) verwendet. Auch werden zweite Messmittel (D2', D3') zusätzlich zu den ersten Messmitteln ((Rm₁) bis [Rmₙ], (D2), (D3)) verwendet. Diese Redundanz kann für Prüf- und Überwachungszwecke genutzt werden, da jeder Autoadressierungsdurchlauf für beide Zweige zu einem gleichen Ergebnis führen sollte. Ist dies nicht der Fall, so wird die angebotene Busknotenadresse bevorzugt nicht übernommen, sondern beispielsweise eine speziell reservierte und vorbestimmte Fehleradresse angenommen. Spricht der Busmaster (ECU) diese Fehleradresse mittels seines Datenbusprotokolls an, so antwortet der Busknoten, an dem der Fehler auftrat, dem Busmaster (ECU), was er nicht sollte, wenn kein Fehler in dem Busknoten aufgetreten wäre. Die Prüfung kann konkret beispielsweise so aussehen, dass die Differenz zwischen dem Wert des ersten Regelsignals (rwⱼ) eines Busknotens (BKⱼ) und dem Wert des zweiten Regelsignals (rw'ⱼ) dieses Busknotens (BKⱼ) gebildet wird. Liegt der Betrag dieser Differenz oberhalb eines vorbestimmten Grenzwertes, so funktioniert zumindest eine der Schaltungen nicht korrekt.

Dies kann somit erkannt werden und dazu genutzt werden, zu verhindern, dass die vom Busmaster (ECU) angebotene zu vergebende Busknotenadresse als gültige Busknotenadresse übernommen wird. Stattdessen wird dann die vorbestimmte Fehleradresse als gültige Busknotenadresse übernommen, was dann durch Ansprechen dieser Adresse durch den Busmaster (ECU) durch denselben überprüft werden kann.

### GLEICHZEITIGE VERWENDUNG VERSCHIEDENER AUTOADRESSIERUNGSVERFAHREN

### Figur 18

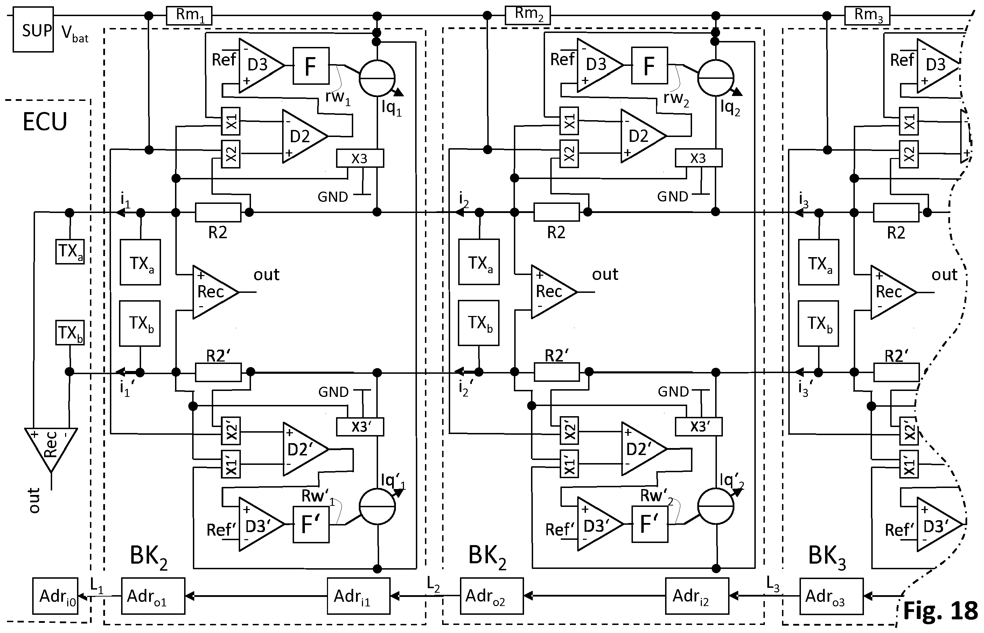

Es ist nun vorteilhaft verschiedene der hier beschriebenen Autoadressierungsverfahren nutzen zu können, da jedes Verfahren den Erfolg der richtigen Identifizierung durch Redundanz bestätigen kann. Außerdem kann bei der Verwendung von mehr als zwei Autoadressierungsverfahren eine Fail-Operational-Eigenschaft erreicht werden. D.h. in der Regel wird die Autoadressierung erfolgreich durchgeführt, aber ein Fehler wird erkannt, der dann signalisiert werden kann. Dies ist potenziell für sicherheitsrelevante Anwendungen von besonderer Wichtigkeit. Figur 18 zeigt eine solche Vorrichtung, die die Durchführung mehrerer Autoadressierungsverfahren zulässt und damit eine erhöhte Sicherheit aufweist. Die Figur 18 ist eine Kombination der Figuren 17, 13, 6 und 5. In den Busknoten ((BK₁) bis [BKₙ]) wird ein erster Multiplexer (X1) des jeweiligen Busknotens (BKⱼ) und ein zweiter Multiplexer (X2) dieses Busknotens (BKⱼ) genutzt um die Eingänge des zweiten Differenzverstärkers (D2) dieses Busknotens (BKⱼ) an den ersten Bus-Shunt-Widerstand (R2) dieses Busknotens (BKⱼ) oder an den Messwiderstand [Rmⱼ] dieses Busknotens (BKⱼ) zu schalten. In den Busknoten ((BK₁) bis [BKₙ]) wird darüber hinaus ein weiterer erster Multiplexer (X1') des jeweiligen Busknotens (BKⱼ) und ein weiterer zweiter Multiplexer (X2') dieses Busknotens (BKⱼ) genutzt, um die Eingänge des weiteren zweiten Differenzverstärkers (D2') dieses Busknotens (BKⱼ) an den zweiten Bus-Shunt-Widerstand (R2') dieses Busknotens (BKⱼ) oder an den Messwiderstand (Rmⱼ) dieses Busknotens (BKⱼ) zu schalten. Entsprechend dazu wird die erste Adressierungsstromquelle (Iqⱼ) dieses Busknotens (BKⱼ) entweder mit einem Bezugspotenzial (GND) oder mit dem ersten Eindrahtbus (DBₐ) durch einen dritten Demultiplexer (X3) dieses Busknotens (BKⱼ) verbunden. Dabei legt der dritte Demultiplexer (X3) dieses Busknotens (BKⱼ) auch fest, ob der erste Adressierungsstrom der ersten Adressierungsstromquelle (Iqⱼ) dieses Busknotens (BKⱼ) vor oder hinter dem ersten Bus-Shunt-Widerstand (R2) dieses Busknotens (BKⱼ) in den ersten Eindrahtbus (DBₐ) eingespeist wird. Analog dazu wird die zweite Adressierungsstromquelle (Iq';) dieses Busknotens (BKⱼ) entweder mit einem Bezugspotenzial (GND) oder mit dem zweiten Eindrahtbus (DB_{b}) durch einen weiteren dritten Multiplexer (X3') dieses Busknotens (BKⱼ) verbunden. Dabei legt der weitere dritte Multiplexer (X3') dieses Busknotens (BKⱼ) auch fest, ob der zweite Adressierungsstrom der zweiten Adressierungsstromquelle (Iq';) dieses Busknotens (BKⱼ) vor oder hinter dem zweiten Bus-Shunt-Widerstand (R2') dieses Busknotens (BKⱼ) in den zweiten Eindrahtbus (DB_{b}) eingespeist wird.

### NIEDEROHMIGER NORMALBETRIEB

### Figur 19

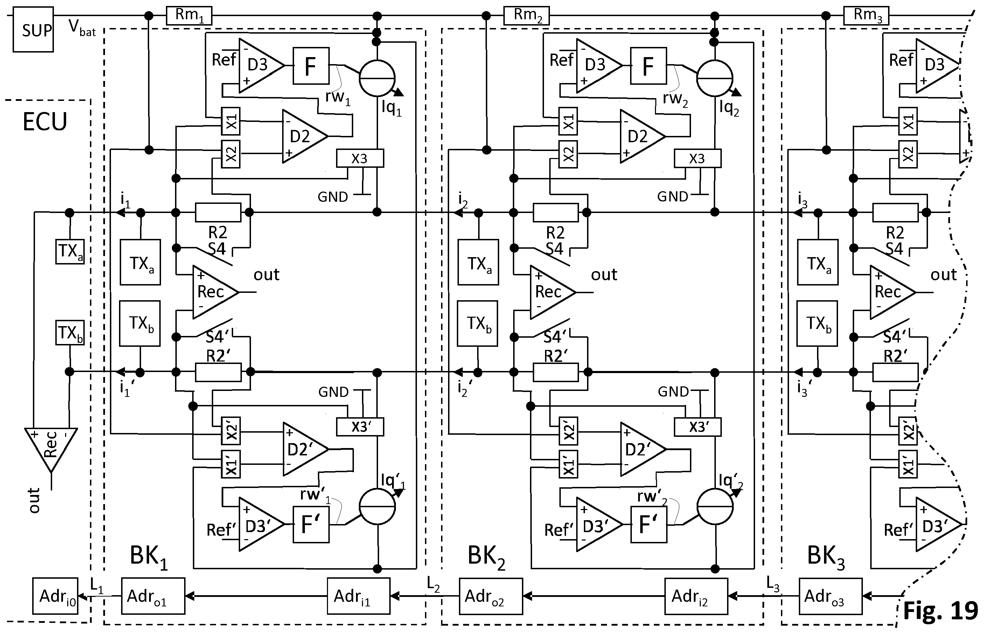

Es ist nun sinnvoll, wenn nur im Adressierungszustand der Busknoten ((BK₁) bis [BKₙ]) die Bus-Shunt-Widerstände (R2, R2') in dem ersten Eindrahtbus (DBₐ) und dem zweiten Eindrahtbus (DB_{b}) wirksam sind. Daher ist es sinnvoll, sobald der Adressierungszustand verlassen wird, bevorzugt in allen Busknoten ((BK₁) bis [BKₙ]) durch einen ersten Überbrückungsschalter (S4) in bevorzugt jedem Busknoten (BKⱼ) den ersten Bus-Shunt-Widerstand (R2) dieses Busknotens (BKⱼ) und durch einen zweiten Überbrückungsschalter (S4') in diesem Busknoten (BKⱼ) den zweiten Bus-Shunt-Widerstand (R2') dieses Busknotens (BKⱼ) kurzzuschließen. Dies ist in Figur 19 dargestellt.

Natürlich wäre dieses Vorgehen auch für den Messwiderstand [Rmⱼ] eines Busknotens (BKⱼ) denkbar. Die entsprechenden Schalter würden in der Regel aber zu viel Chip-Fläche beanspruchen. Außerdem reicht ja in der Regel bereits der Spannungsabfall über die normale Versorgungsspannungsleitung aus, sodass in diesen Fällen dann ja kein dedizierter Messwiderstand [Rmⱼ] in die Versorgungsspannungsleitung (V_{bat}) eingefügt wird, sondern ein Leitungsabschnitt der Versorgungsspannungsleitung (V_{bat}) als Messwiderstand [Rmⱼ] dieses Busknotens (BKⱼ) genutzt werden kann.

### VERTAUSCHUNGSERKENNUNG

### Figur 20

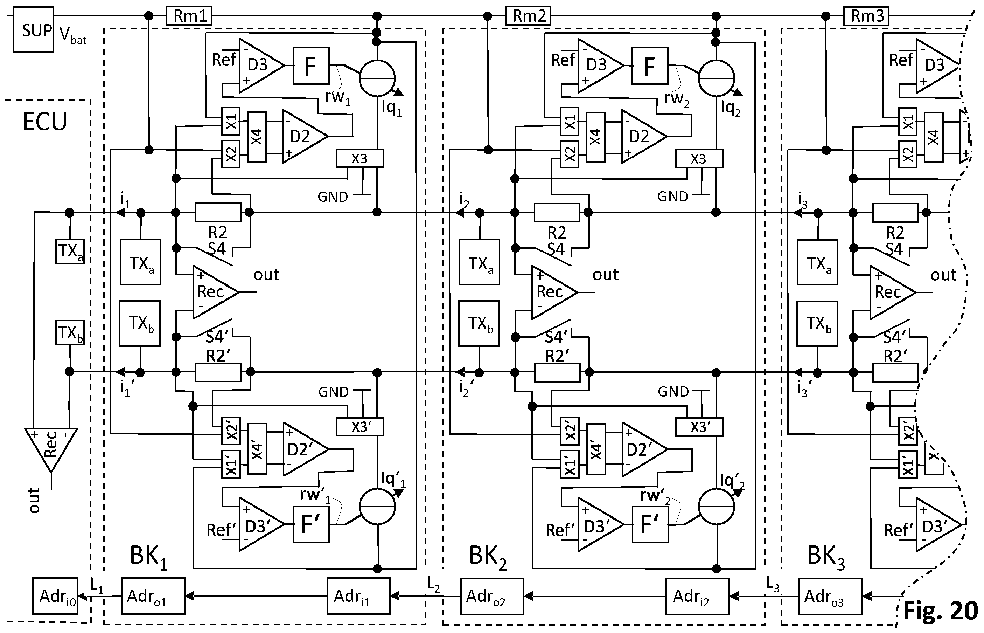

Figur 20 zeigt nun zusätzlich in den beispielhaften Busknoten ((BK₁) bis [BKₙ]) jeweils einen vierten Multiplexer (X4) je Busknoten (BKⱼ), mit dem eine Steuerung innerhalb dieses Busknotens (BKⱼ) die beiden Eingänge des zweiten Differenzverstärkers (D2) dieses Busknotens (BKⱼ) vertauschen kann. Des Weiteren zeigt die Figur 20 zusätzlich in den beispielhaften Busknoten ((BK₁) bis [BKₙ]) jeweils einen weiteren vierten Multiplexer (X4') je Busknoten (BKⱼ), mit dem die Steuerung innerhalb dieses Busknotens (BKⱼ) die beiden Eingänge des weiteren zweiten Differenzverstärkers (D2') dieses Busknotens (BKⱼ) vertauschen kann.

### Figur 21

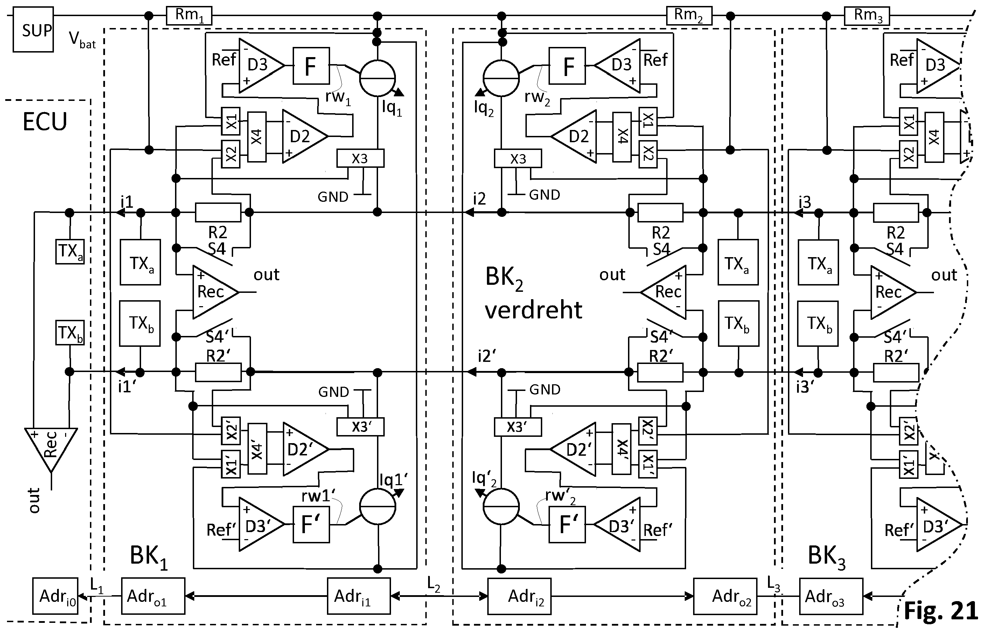

Dies kann an Figur 21 nun für den dort dargestellten Fehlerfall erklärt werden: Der zweite Busknoten (BK₂) ist vertauscht eingebaut. Dies kann nun sehr leicht durch die Steuerung des zweiten Busknotens (BK₂) in einem Selbsttest, der bevorzugt zu Beginn der Initialisierungsprozedur durchgeführt wird, festgestellt werden. Bevorzugt signalisiert beispielsweise der Busmaster (ECU) an die Busknoten ((BK₁) bis [BKₙ]), dass sie einen solchen Selbsttest durchführen sollen. Andere Startszenarien, z.B. in einer Einschaltphase sind denkbar. Beispielsweise kann der Busknoten (BKⱼ) mittels seiner Messmittel (R2, R2', D2, D2', D3, D3', Iqⱼ, Iq'ⱼ, X1, X1', X2, X2', X3, X3') feststellen, ob der erste Adressierungsstrom seiner ersten Adressierungsstromquelle (Iqⱼ) durch seinen ersten Bus-Shunt-Widerstand (R2) fließt, wenn er durch seinen ersten Bus-Shunt-Widerstand (R2) fließen soll, und ob der zweite Adressierungsstrom seiner zweiten Adressierungsstromquelle (Iq'ⱼ) durch seinen zweiten Bus-Shunt-Widerstand (R2') fließt, wenn er durch den zweiten Bus-Shunt-Widerstand (R2') fließen soll. Ist dies genau umgekehrt, so kann die Steuerung des Busknotens dies an Hand der entsprechenden Messergebnisse feststellen und mittels eines vierten Multiplexers (X4) dieses Busknotens (BKⱼ) und des dritten Multiplexers (X3) dieses Busknotens (BKⱼ) zum einen die Eingänge des zweiten Differenzverstärkers (D2) dieses Busknotens (BKⱼ) vertauschen und zum anderen den Einspeisepunkt für den ersten Adressierungsstrom der ersten Adressierungsstromquelle (Iqⱼ) dieses Busknotens (BKⱼ) auf die andere Seite des ersten Bus-Shunt-Widerstands (R2) dieses Busknotens (BKⱼ) legen. In diesem Fall kann die Steuerung des Busknotens mittels eines weiteren vierten Multiplexers (X4') dieses Busknotens (BKⱼ) und des weiteren dritten Multiplexers (X3') dieses Busknotens (BKⱼ) zum einen die Eingänge des weiteren zweiten Differenzverstärkers (D2') dieses Busknotens (BKⱼ) ebenfalls vertauschen und zum anderen den Einspeisepunkt für den zweiten Adressierungsstrom der zweiten Adressierungsstromquelle (Iq'ⱼ) dieses Busknotens (BKⱼ) auf die andere Seite des zweiten Bus-Shunt-Widerstands (R2') dieses Busknotens (BKⱼ) legen.

Dann ist die Durchführung des Autoadressierungsverfahrens mit Hilfe der Bus-Shunt-Widerstände (R2, R2') wieder möglich. Auch möglich, aber hier zur besseren Übersicht nicht mehr eingezeichnet, ist ein Umlegen des Einspeisepunkts der ersten Adressierungsstromquelle (Iqⱼ) dieses Busknotens (BKⱼ) in die Versorgungsspannungsleitung (V_{bat}) auf die andere Seite des Messwiderstands (Rmⱼ) mittels eines nicht eingezeichneten fünften Multiplexers (X5). Dies ist aber nur sinnvoll, wenn die erste Adressierungsstromquelle (Iqⱼ) im Normalzustand keinen zu großen Strom liefern muss. Dies ist aber genau dann der Fall, wenn die erste Autoadressierungsstromquelle (Iqⱼ) im Normalzustand des Busknotens (BKⱼ) beispielsweise die Energiequelle von Leuchtmitteln (LEDⱼ) des Busknotens darstellt. In dem Fall wären die Transistoren des nicht gezeichneten fünften Multiplexers (X5) zu groß und damit zu teuer. Ebenso ist ein Umlegen des Einspeisepunkts der zweiten Adressierungsstromquelle (Iq';) dieses Busknotens (BKⱼ) in die Versorgungsspannungsleitung (V_{bat}) auf die andere Seite des Messwiderstands (Rmⱼ) mittels eines nicht eingezeichneten weiteren fünften Multiplexers (X5') nicht mehr eingezeichnet. Hier gelten die gleichen Überlegungen.

Ebenso wurde nicht eingezeichnet, dass auch der Eingang des Adresseingangs (Adrᵢⱼ) des betreffenden Busknotens (BKⱼ) (hier beispielhaft der zweite Busknoten (BK₂)) mit dem Ausgang des Adressausgangs (Adrₒⱼ) des betreffenden Busknotens (BKⱼ) mittels zweier Multiplexer (X6, X7) vertauscht werden kann, wenn eine solche Vertauschung wie in Figur 21 durch die Steuerung des Busknotens (BKⱼ) z.B. auf die zuvor beschriebene Weise festgestellt wurde.

Dies sind beispielhafte Maßnahmen zur Kompensation einer Einfügung eines Busknotens mit Steckervertauschung.

### Liste der Abkürzungen

- ADR₁: Adresserkennungseinheit des ersten Busknotens (BK₁);
- ADR₂: Adresserkennungseinheit des zweiten Busknotens (BK₂);
- ADR₃: Adresserkennungseinheit des dritten Busknotens (BK₃);
- ADR₄: Adresserkennungseinheit des vierten Busknotens (BK₄);
- ADR₅: Adresserkennungseinheit des fünften Busknotens (BK₅);
- ADR₆: Adresserkennungseinheit des sechsten Busknotens (BK₆);
- ADRⱼ: Adresserkennungseinheit des j-ten Busknotens [BKⱼ];
- ADRₙ: Adresserkennungseinheit des n-ten Busknotens [BKₙ];
- Adrᵢ₍ⱼ₋₁₎: Adresseingang des (j-1)-ten Busknotens [BK₍ⱼ₋₁₎];
- Adrᵢⱼ: Adresseingang des j-ten Busknotens (BK;);
- Adrᵢ₍ⱼ₊₁₎: Adresseingang des (j+1)-ten Busknotens [BK₍ⱼ₊₁₎];
- Adrᵢₙ: Adresseingang des n-ten Busknotens [BKₙ];
- Adrₒ₍ⱼ₋₁₎: Adressausgang des (j-1)-ten Busknotens [BK₍ⱼ₋₁₎];
- Adrₒⱼ: Adressausgang des j-ten Busknotens (BK;);
- Adrₒ₍ⱼ₊₁₎: Adressausgang des (j+1)-ten Busknotens [BK₍ⱼ₊₁₎];
- Adrₒₙ: Adressausgang des n-ten Busknotens [BKₙ];
- AT₁: Abtastvorrichtung des ersten Busknotens (BK₁);
- AT₂: Abtastvorrichtung des zweiten Busknotens (BK₂);
- AT₃: Abtastvorrichtung des dritten Busknotens (BK₃);
- AT₄: Abtastvorrichtung des vierten Busknotens (BK₄);
- AT₅: Abtastvorrichtung des fünften Busknotens (BK₅);
- AT₆: Abtastvorrichtung des sechsten Busknotens (BK₆);
- ATⱼ: Abtastvorrichtung des j-ten Busknotens [BKⱼ];
- ATₙ: Abtastvorrichtung des n-ten Busknotens [BKₙ];
- au: Englisch: "arbitrary units", relative Einheiten;
- BKADR₁: Busknotenadressregister des ersten Busknotens (BK₁);
- BKADR₂: Busknotenadressregister des zweiten Busknotens (BK₂);
- BKADR₃: Busknotenadressregister des zweiten Busknotens (BK₃);
- BKADR₄: Busknotenadressregister des zweiten Busknotens (BK₄);
- BKADR₅: Busknotenadressregister des zweiten Busknotens (BK₅);
- BKADR₆: Busknotenadressregister des zweiten Busknotens (BK₆);
- BKADRⱼ: Busknotenadressregister des j-ten Busknotens [BKⱼ];
- BKADRₙ: Busknotenadressregister des n-ten Busknotens [BKₙ];
- BKⱼ₋₂: (j-2)-ter Busknoten;
- BKⱼ₋₁: (j-1)-ter Busknoten;
- BKⱼ₊₁: (j+1)-ter Busknoten;
- BKⱼ₊₂: (j+2)-ter Busknoten;
- BKₙ₋₂: (n-2)-ter Busknoten;
- BKₙ₋₁: (n-1)-ter Busknoten;
- BKₙ: n-ter Busknoten;
- BLM: Rücklichtmodul;
- CLKA₁: Abtastsignal innerhalb des ersten Busknotens (BK₁);
- CLKA₂: Abtastsignal innerhalb des zweiten Busknotens (BK₂);
- CLKA₃: Abtastsignal innerhalb des dritten Busknotens (BK₃);
- CLKA₄: Abtastsignal innerhalb des vierten Busknotens (BK₄);
- CLKA₅: Abtastsignal innerhalb des fünften Busknotens (BK₅);
- CLKA₆: Abtastsignal innerhalb des sechsten Busknotens (BK₆);
- CLKAⱼ: Abtastsignal innerhalb des j-ten Busknotens [BKⱼ];
- CLKAₙ: Abtastsignal innerhalb des n-ten Busknotens [BKₙ];
- CLKG₁: Taktgeber des ersten Busknotens (BK₁);
- CLKG₂: Taktgeber des zweiten Busknotens (BK₂);
- CLKG₃: Taktgeber des dritten Busknotens (BK₃);
- CLKG₄: Taktgeber des vierten Busknotens (BK₄);
- CLKG₅: Taktgeber des fünften Busknotens (BK₃);
- CLKG₆: Taktgeber des sechsten Busknotens (BK₆);
- CLKGⱼ: Taktgeber des j-ten Busknotens [BKⱼ];
- CLKGₙ: Taktgeber des n-ten Busknotens [BKₙ];
- DBⱼ: j-ter, bidirektionaler, differentieller Datenleitungsabschnitt des bidirektionalen differentiellen Zweidraht-Kommunikationsbusses zwischen dem j-ten Busknoten (BKⱼ) und dem (j-1)-ten Busknoten [BKⱼ₋₁]. Er umfasst je einen korrespondierenden Abschnitt des ersten Eindrahtbusses (DBₐ) und des zweiten Eindrahtbusses (DB_{b});
- DBₙ: n-ter, bidirektionaler, differentieller Datenleitungsabschnitt des bidirektionalen differentiellen Zweidraht-Kommunikationsbusses zwischen dem n-ten Busknoten [BKₙ] und dem (n-1)-ten Busknoten [BKₙ₋₁]. Er umfasst je einen korrespondierenden Abschnitt des ersten Eindrahtbusses (DBₐ) und des zweiten Eindrahtbusses (DB_{b});
- EV₁: Energieversorgungsmittel des ersten Busknotens (BK₁), das für die Energieversorgung des ersten Leuchtmittels (LED₁) des ersten Busknotens (BK₁) vorgesehen ist.
- EV₂: Energieversorgungsmittel des zweiten Busknotens (BK₂), das für die Energieversorgung des zweiten Leuchtmittels (LED₂) des zweiten Busknotens (BK₂) vorgesehen ist.
- EV₃: Energieversorgungsmittel des dritten Busknotens (BK₃), das für die Energieversorgung des dritten Leuchtmittels (LED₃) des dritten Busknotens (BK₃) vorgesehen ist.
- EV₄: Energieversorgungsmittel des vierten Busknotens (BK₄), das für die Energieversorgung des vierten Leuchtmittels [LED₄] des vierten Busknotens (BK₄) vorgesehen ist.
- EV₅: Energieversorgungsmittel des fünften Busknotens (BK₅), das für die Energieversorgung des fünften Leuchtmittels [LED₅] des fünften Busknotens (BK₅) vorgesehen ist.
- EV₆: Energieversorgungsmittel des sechsten Busknotens (BK₆), das für die Energieversorgung des sechsten Leuchtmittels [LED₆] des sechsten Busknotens (BK₆) vorgesehen ist.
- EVⱼ: Energieversorgungsmittel des j-ten Busknotens (BKⱼ), das für die Energieversorgung des j-ten Leuchtmittels [LEDⱼ] des j-ten Busknotens (BKⱼ) vorgesehen ist.
- EVₙ: Energieversorgungsmittel des n-ten Busknotens [BKₙ], das für die Energieversorgung des n-ten Leuchtmittels [LEDₙ] des n-ten Busknotens [BKₙ] vorgesehen ist.
- GGIqⱼ: Gegentaktstromquelle;
- GLIqⱼ: Gleichtaktadressierungsstromquelle des Busknotens (BKⱼ);
- GND: zweite Versorgungsspannungsleitung (komplementär zu V_{bat}) auch als Bezugspotenzial bezeichnet;
- HS-CAN: Hochgeschwindigkeits CAN-Protokoll;
- Iₐₘₐₓ: maximaler Adressierungsstrom;
- Iqⱼ₁: erste Adressierungsstromquelle des j-ten Busknotens (BKⱼ) bei Aufteilung der ersten Adressierungsstromquelle [Iqⱼ₁] des j-ten Busknotens (BKⱼ) in eine erste Adressierungsstromquelle, die vor dem ersten Bus-Shunt-Widerstand (R2) einspeist und eine weitere erste Adressierungsstromquelle, die hinter dem ersten Bus-Shunt-Widerstand (R2) einspeist;
- Iqⱼ₂: weitere erste Adressierungsstromquelle des j-ten Busknotens (BKⱼ) bei Aufteilung der ersten Adressierungsstromquelle [Iqⱼ₁] des j-ten Busknotens (BKⱼ) in eine erste Adressierungsstromquelle, die vor dem ersten Bus-Shunt-Widerstand (R2) einspeist und eine erste Adressierungsstromquelle, die hinter dem ersten Bus-Shunt-Widerstand (R2) einspeist;
- Iq'ⱼ₁: zweite Adressierungsstromquelle des j-ten Busknotens (BKⱼ) bei Aufteilung der zweiten Adressierungsstromquelle [Iqⱼ₁] des j-ten Busknotens (BKⱼ) in eine zweite Adressierungsstromquelle, die vor dem zweiten Bus-Shunt-Widerstand (R2') einspeist und eine weitere zweite Adressierungsstromquelle, die hinter dem zweiten Bus-Shunt-Widerstand (R2') einspeist;
- Iq'ⱼ₂: weitere zweite Adressierungsstromquelle des j-ten Busknotens (BKⱼ) bei Aufteilung der zweiten Adressierungsstromquelle [Iqⱼ₁] des j-ten Busknotens (BKⱼ) in eine zweite Adressierungsstromquelle, die vor dem zweiten Bus-Shunt-Widerstand (R2') einspeist und eine weitere zweite Adressierungsstromquelle, die hinter dem zweiten Bus-Shunt-Widerstand (R2') einspeist;
- I_{ref}: erster vorgegebener Summenstromwert innerhalb eines Busknotens (BKⱼ) für den ersten Busknotenausgangsstrom (iⱼ). Der erste Summenstromwert sollte für alle Busknoten zwar bevorzugt gleich groß sein. Er kann aber auch von Busknoten zu Busknoten schwanken.
- I'_{ref}: zweiter vorgegebener Summenstromwert innerhalb eines Busknotens (BKⱼ) für den zweiten Busknotenausgangsstrom (i'ⱼ). Der zweite Summenstromwert sollte für alle Busknoten zwar bevorzugt gleich groß sein. Er kann aber auch von Busknoten zu Busknoten schwanken.
- L₁ bis Lₙ: Leitung aus den Leitungsabschnitten L₁ bis Lₙ;
- L₄: vierter Leitungsabschnitt vom vierten Busknoten [BK₄] zum dritten Busknoten (BK₃);
- Lⱼ₋₁: (j-1)-ter Leitungsabschnitt vom (j-1)-ten Busknoten [BKⱼ₋₁] zum (j-2)-ten Busknoten [BKⱼ₋₂];
- Lⱼ: j-ter Leitungsabschnitt vom j-ten Busknoten (BKⱼ) zum (j-1)-ten Busknoten [BKⱼ₋₁];
- Lⱼ₊₁: (j+1)-ter Leitungsabschnitt vom (j+1)-ten Busknoten [BKⱼ₊₁] zum j-ten Busknoten (BKⱼ);
- Lₙ₋₁: (n-1)-ter Leitungsabschnitt vom (n-1)-ten Busknoten [BKₙ₋₁] zum (n-2)-ten Busknoten [BKₙ₋₂];
- Lₙ: n-ter Leitungsabschnitt vom n-ten Busknoten [BKₙ] zum (n-1)-ten Busknoten [BKₙ₋₁];
- LEDⱼ: Leuchtmittel des j-ten Busknotens (BKⱼ). Leuchtmittelgruppen und Verschaltungen sind hier mitumfasst. (Dies können beispielsweise Serien- und Parallelschaltungen mehrerer Leuchtdioden sein.)
- LEDₙ: Leuchtmittel des n-ten Busknotens [BKₙ]. Leuchtmittelgruppen und Verschaltungen sind hier mitumfasst. (Dies können beispielsweise Serien- und Parallelschaltungen mehrerer Leuchtdioden sein.)
- µC₁: Mikrocontroller des ersten Busknotens (BK₁);
- µC₂: Mikrocontroller des zweiten Busknotens (BK₂);
- µC₃: Mikrocontroller des dritten Busknotens (BK₃);
- µC₄: Mikrocontroller des vierten Busknotens (BK₄);
- µC₅: Mikrocontroller des fünften Busknotens (BK₅);
- µC₆: Mikrocontroller des sechsten Busknotens (BK₆);
- µCⱼ: Mikrocontroller des j-ten Busknotens (BK;);
- µCₙ: Mikrocontroller des n-ten Busknotens [BKₙ];
- rwₙ: erstes Regelsignal des n-ten Busknotens [BKₙ]. Das erste Regelsignal des n-ten Busknotens [BKₙ] wird mit Mitteln, bevorzugt einem ersten Filter (F) des n-ten Busknotens [BKₙ], der mit dem dritten Komparator (D3) des n-ten Busknotens [BKₙ] auch eine Einheit bilden kann, aus dem Ausgangssignal des dritten Komparators (D3) des n-ten Busknotens [BKₙ] gebildet und dient zur Steuerung der ersten Autoadressierungsstromquelle [Iqₙ] des n-ten Busknotens [BKₙ];
- rw'ₙ: zweites Regelsignal des n-ten Busknotens [BKₙ]. Das zweite Regelsignal des n-ten Busknotens [BKₙ] wird mit Mitteln, bevorzugt einem zweiten Filter (F) des n-ten Busknotens [BKₙ], der mit dem entsprechenden dritten Komparator (D3') des n-ten Busknotens [BKₙ] auch eine Einheit bilden kann, aus dem Ausgangssignal des entsprechenden dritten Komparators (D3') des n-ten Busknotens [BKₙ] gebildet und dient zur Steuerung der zweiten Autoadressierungsstromquelle [Iq'ₙ] des n-ten Busknotens [BKₙ];
- SUP: Spannungsversorgung;
- SW₁: erster Schwellwert zum Vergleich mit dem ersten Regelwert (r₁) des ersten Busknotens (BK₁) für die Entscheidung, ob die Adressdaten als gültige Busknotenadresse übernommen werden sollen;
- SW'₁: zweiter Schwellwert zum Vergleich mit dem zweiten Regelwert (r'₁) des ersten Busknotens (BK₁) für die Entscheidung, ob die Adressdaten als gültige Busknotenadresse übernommen werden sollen;
- SW₂: erster Schwellwert zum Vergleich mit dem ersten Regelwert (r₂) des zweiten Busknotens (BK₂) für die Entscheidung, ob die Adressdaten als gültige Busknotenadresse übernommen werden sollen;
- SW'₂: zweiter Schwellwert zum Vergleich mit dem zweiten Regelwert (r'₂) des zweiten Busknotens (BK₂) für die Entscheidung, ob die Adressdaten als gültige Busknotenadresse übernommen werden sollen;
- SW₃: erster Schwellwert zum Vergleich mit dem ersten Regelwert (r₃) des dritten Busknotens (BK₃) für die Entscheidung, ob die Adressdaten als gültige Busknotenadresse übernommen werden sollen;
- SW'₃: zweiter Schwellwert zum Vergleich mit dem zweiten Regelwert (r'₃) des dritten Busknotens (BK₃) für die Entscheidung, ob die Adressdaten als gültige Busknotenadresse übernommen werden sollen;
- SWⱼ: erster Schwellwert zum Vergleich mit dem ersten Regelwert (rⱼ) des j-ten Busknotens (BKⱼ) für die Entscheidung, ob die Adressdaten als gültige Busknotenadresse übernommen werden sollen;
- SW'j: zweiter Schwellwert zum Vergleich mit dem zweiten Regelwert (r'ⱼ) des j-ten Busknotens (BKⱼ) für die Entscheidung, ob die Adressdaten als gültige Busknotenadresse übernommen werden sollen;
- SWₙ: erster Schwellwert zum Vergleich mit dem ersten Regelwert [rₙ] des n-ten Busknotens [BKₙ] für die Entscheidung, ob die Adressdaten als gültige Busknotenadresse übernommen werden sollen;
- SW'ₙ: zweiter Schwellwert zum Vergleich mit dem zweiten Regelwert [r'ₙ] des n-ten Busknotens [BKₙ] für die Entscheidung, ob die Adressdaten als gültige Busknotenadresse übernommen werden sollen;
- τ1: erste Zeitkonstante, mit der die Erhöhung des ersten Adressierungsstroms der ersten geregelten Autoadressierungsstromquelle (Iqⱼ) des betreffenden Busknotens (BKⱼ) erfolgt;
- τ2: zweite Zeitkonstante, mit der die Erniedrigung des ersten Adressierungsstroms der ersten geregelten Autoadressierungsstromquelle (Iqⱼ) des betreffenden Autoadressierungsbusknotens (BKⱼ) erfolgt
- τ3: dritte Zeitkonstante, mit der die Erhöhung des zweiten Adressierungsstroms der zweiten geregelten Autoadressierungsstromquelle (Iq';) des betreffenden Busknotens (BKⱼ) erfolgt;
- τ4: vierte Zeitkonstante, mit der die Erniedrigung des zweiten Adressierungsstroms der zweiten geregelten Autoadressierungsstromquelle (Iq';) des betreffenden Autoadressierungsbusknotens (BKⱼ) erfolgt;
- Tref: vorrichtungsspezifische, nicht weiter definierte zeitliche Referenzgröße;
- t: Zeit
- t₁: erster Zeitpunkt nach dem Start des Zeitgebers, zu dem ein Einfrieren der Regelung der ersten Adressierungsstromquelle (Iqⱼ) des betreffenden Autoadressierungsbusknotens (BKⱼ) erfolgt;
- t₂: zweiter Zeitpunkt nach dem Start des Zeitgebers, zu dem ein Einfrieren der Regelung der zweiten Adressierungsstromquelle (Iq';) des betreffenden Autoadressierungsbusknotens (BKⱼ) erfolgt;
- t₃: dritter Zeitpunkt, zu dem unter bestimmten Bedingungen die Übernahme der zu vergebenden Busknotenadresse vom Busmaster (ECU) als gültige Busknotenadresse des betreffenden Autoadressierungsbusknotens (BKⱼ) erfolgt;
- TR: Treiber;
- TRa: erster Treiber im Busmaster (ECU) oder in einem Busknoten ((BK₁) bis [BKₙ]).
Bevorzugt wird der Treiber als CAN-Treiber oder RS485-Treiber realisiert. Ein erster Treiber kann als CAN-Treiber bevorzugt zwei von drei erlaubten Zuständen einnehmen: In einem ersten Zustand legt er einen ersten logischen Pegel (Z1) auf den ersten Eindrahtbus (DBₐ). In einem zweiten Zustand legt er einen dritten logischen Pegel (Z3) auf den ersten Eindrahtbus (DBₐ). Der erste Treiber des Busmasters (ECU) arbeitet außerdem im Adressierungszustand des Datenbussystems und der Busknoten ((BK₁) bis [BKₙ]) als erste Stromsenke für die ersten Adressierungsströme der ersten Adressierungsstromquellen ((Iq₁), (Iq₂) bis [Iqₙ]) der Busknoten ((BK₁) bis [BKₙ]) und deren erste Ruheströme. Bevorzugt nimmt der erste Treiber eines Busknotens ((BK₁) bis [BKₙ]) bzw. des Busmasters (ECU) den ersten Zustand (Z1) an, wenn der zweite Treiber [TR_{b}] des betreffenden Busknotens ((BK₁) bis [BKₙ]) den zweiten Zustand (Z2) annimmt. Hierdurch wird das Signal mit einem ersten differentiellen Pegel (z1) differentiell eingeprägt. Bevorzugt nimmt der erste Treiber eines Busknotens ((BK₁) bis [BKₙ]) bzw. des Busmasters (ECU) den dritten Zustand (Z3) an, wenn der zweite Treiber [TR_{b}] des betreffenden Busknotens ((BK₁) bis [BKₙ]) den dritten Zustand (Z3) annimmt. Hierdurch wird das Signal mit einem dritten differentiellen Pegel (z3) differentiell eingeprägt. Der erste Treiber kann auch als RS485-Treiber bevorzugt zwei von zwei erlaubten Zuständen einnehmen: In einem ersten Zustand legt er einen ersten logischen Pegel (Z1) auf den ersten Eindrahtbus (DBₐ). In einem zweiten Zustand legt er einen zweiten logischen Pegel (Z2) auf den ersten Eindrahtbus (DBₐ). Der erste Treiber des Busmasters (ECU) arbeitet außerdem im Adressierungszustand des Datenbussystems und der Busknoten ((BK₁) bis [BKₙ]) als erste Stromsenke für die ersten Adressierungsströme der ersten Adressierungsstromquellen ((Iq₁), (Iq₂) bis [Iqₙ]) der Busknoten ((BK₁) bis [BKₙ]) und deren erste Ruheströme. Bevorzugt nimmt der erste Treiber eines Busknotens ((BK₁) bis [BKₙ]) bzw. des Busmasters (ECU) den ersten Zustand (Z1) an, wenn der zweite Treiber [TR_{b}] des betreffenden Busknotens ((BK₁) bis [BKₙ]) den zweiten Zustand (Z2) annimmt. Hierdurch wird das Signal mit einem ersten differentiellen Pegel (z1) differentiell eingeprägt. Bevorzugt nimmt der erste Treiber eines Busknotens ((BK₁) bis [BKₙ]) bzw. des Busmasters (ECU) den zweiten Zustand (Z2) an, wenn der zweite Treiber [TR_{b}] des betreffenden Busknotens ((BK₁) bis [BKₙ]) den ersten Zustand (Z1) annimmt. Hierdurch wird das Signal mit einem zweiten differentiellen Pegel (z2) differentiell eingeprägt.
Außerdem verfügt der erste Treiber typischerweise über eine Teilvorrichtung zur Detektion und Vermeidung einer Buskollision im Falle eines gleichzeitigen Zugriffs auf den ersten Eindrahtbus (DBₐ) durch einen ersten Treiber eines anderen Busknotens ((BK₁) bis [BKₙ]) bzw. des Busmasters (ECU).
- TR_{b}: zweiter Treiber im Busmaster (ECU) oder in einem Busknoten ((BK₁) bis [BKₙ]).
Bevorzugt wird der zweite Treiber als CAN-Treiber oder RS485-Treiber realisiert.
Ein zweiter Treiber kann als CAN-Treiber bevorzugt zwei von drei erlaubten Zuständen einnehmen: In einem ersten Zustand legt er einen zweiten logischen Pegel (Z2) auf den zweiten Eindrahtbus (DB_{b}). In einem zweiten Zustand legt er einen dritten logischen Pegel (Z3) auf den zweiten Eindrahtbus (DB_{b}). Der zweite Treiber des Busmasters (ECU) arbeitet außerdem im Adressierungszustand des Datenbussystems und der Busknoten ((BK₁) bis [BKₙ]) als zweite Stromsenke für die zweiten Adressierungsströme der zweiten Adressierungsstromquellen ((Iq'₁) bis [Iq'n]) der Busknoten ((BK₁) bis [BKₙ]) und deren zweite Ruheströme. Bevorzugt nimmt der zweite Treiber eines Busknotens ((BK₁) bis [BKₙ]) bzw. des Busmasters (ECU) den zweiten Zustand (Z2) an, wenn der erste Treiber [TRₐ] des betreffenden Busknotens ((BK₁) bis [BKₙ]) den ersten Zustand (Z1) annimmt. Hierdurch wird das Signal mit einem ersten differentiellen Pegel (z1) differentiell eingeprägt. Bevorzugt nimmt der zweite Treiber eines Busknotens ((BK₁) bis [BKₙ]) bzw. des Busmasters (ECU) den dritten Zustand (Z3) an, wenn der erste Treiber [TRₐ] des betreffenden Busknotens ((BK₁) bis [BKₙ]) den dritten Zustand (Z3) annimmt. Hierdurch wird das Signal mit einem dritten differentiellen Pegel (z3) differentiell eingeprägt. Der zweite Treiber kann auch als RS485-Treiber bevorzugt zwei von zwei erlaubten Zuständen einnehmen: In einem ersten Zustand legt er einen zweiten logischen Pegel (Z2) auf den ersten Eindrahtbus (DBₐ). In einem zweiten Zustand legt er einen ersten logischen Pegel (Z1) auf den zweiten Eindrahtbus (DB_{b}). Der zweite Treiber des Busmasters (ECU) arbeitet außerdem im Adressierungszustand des Datenbussystems und der Busknoten ((BK₁) bis [BKₙ]) als zweite Stromsenke für die zweiten Adressierungsströme der zweiten Adressierungsstromquellen ((Iq'₁) bis [Iq'ₙ]) der Busknoten ((BK₁) bis [BKₙ]) und deren zweite Ruheströme. Bevorzugt nimmt der zweite Treiber eines Busknotens ((BK₁) bis [BKₙ]) bzw. des Busmasters (ECU) den zweiten Zustand (Z2) an, wenn der erste Treiber [TRₐ] des betreffenden Busknotens ((BK₁) bis [BKₙ]) den ersten Zustand (Z1) annimmt. Hierdurch wird das Signal mit einem ersten differentiellen Pegel (z1) differentiell eingeprägt. Bevorzugt nimmt der zweite Treiber eines Busknotens ((BK₁) bis [BKₙ]) bzw. des Busmasters (ECU) den ersten Zustand (Z1) an, wenn der erste Treiber [TRₐ] des betreffenden Busknotens ((BK₁) bis [BKₙ]) den zweiten Zustand (Z2) annimmt. Hierdurch wird das Signal mit einem zweiten differentiellen Pegel (z2) differentiell eingeprägt.
Außerdem verfügt der erste Treiber typischerweise über eine Teilvorrichtung zur Detektion und Vermeidung einer Buskollision im Falle eines gleichzeitigen Zugriffs auf den ersten Eindrahtbus (DBₐ) durch einen ersten Treiber eines anderen Busknotens ((BK₁) bis [BKₙ]) bzw. des Busmasters (ECU).
- UART: Universal Asynchronous Receiver Transmitter;
- Vₘ₀: Basisspannungswert;
- X5: Multiplexer zur Vertauschung der Anschlüsse des Messwiderstands [Rmⱼ] eines Busknotens (BKⱼ);
- X6: erster Multiplexer zur Vertauschung der Anschlüsse des Adresseingangs [Adrᵢⱼ] und des Adressausgangs [Adrₒⱼ] eines Busknotens (BKⱼ);
- X7: zweiter Multiplexer zur Vertauschung der Anschlüsse des Adresseingangs [Adrᵢⱼ] und des Adressausgangs [Adrₒⱼ] eines Busknotens (BKⱼ);

### BEZUGSZEICHENLISTE

- ADRD: Adressinformationen innerhalb der Dateninformationen (DATA) eines Bit-Strom-Pakets (BP);
- Adrᵢₒ: Adresseingang des Busmasters (ECU);
- Adrᵢ₁: Adresseingang des ersten Busknotens (BK₁);
- Adrᵢ₂: Adresseingang des zweiten Busknotens (BK₂);
- Adrᵢ₃: Adresseingang des dritten Busknotens (BK₃);
- Adrₒ₁: Adressausgang des ersten Busknotens (BK₁);
- Adrₒ₂: Adressausgang des zweiten Busknotens (BK₂);
- Adrₒ₃: Adressausgang des dritten Busknotens (BK₃);
- BK₁: erster Busknoten;
- BK₂: zweiter Busknoten;
- BK₃: dritter Busknoten;
- BK₄: vierter Busknoten;
- BK₃: fünfter Busknoten;
- BK₆: sechster Busknoten;
- BKⱼ: j-ter Busknoten, in dieser Offenlegung auch als betreffender Busknoten benannt, wenn Aussagen über einen einzelenen Busknoten der Busknoten (BK₁, BK₂, .....BKₙ₋₁, BKₙ) getätigt werden;
- BP: Bit-Strom-Paket (englisch Frame), auch mit Datenpaket bezeichnet;
- CHKD: Prüfinformationen innerhalb der Dateninformationen (DATA) eines Bit-Strom-Pakets (BP). Bevorzugt handelt es sich um eine CRC-Checksumme und/oder Parity-Bits etc.;
- CLK: Takt innerhalb des Busmasters (ECU);
- CLKA;: Abtastsignal innerhalb des j-ten Busknotens (BKⱼ);
- D2: zweiter Differenzverstärker zur Messung des ersten Stromes durch den ersten Eindrahtbus (DBₐ) mittels des ersten Shunt-Widerstands (R2) oder zur Messung des Stromes durch die Versorgungsspannungsleitung (V_{bat}) mittels des Messwiderstands [Rmⱼ] innerhalb des betreffenden Busknotens (BKⱼ). Die zweiten Differenzverstärker sind zur besseren Übersicht nicht mit Indizes für die jeweiligen Busknoten versehen.
- D2': zweiter Differenzverstärker zur Messung des zweiten Stromes durch den zweiten Eindrahtbus (DB_{b}) mittels des zweiten Shunt-Widerstands (R2') oder zur Messung des Stromes durch die Versorgungsspannungsleitung (V_{bat}) mittels des Messwiderstands [Rmⱼ] innerhalb des betreffenden Busknotens (BKⱼ). Die zweiten Differenzverstärker sind zur besseren Übersicht nicht mit Indizes für die jeweiligen Busknoten versehen.
- D3: dritter Komparator bzw. dritter Differenzverstärker zum Vergleich des Ausgangs des zweiten Differenzverstärkers (D2), der zur Messung des Stromes durch den erste Eindrahtbus (DBₐ) mittels des ersten Shunt-Widerstands (R2) oder durch die Versorgungsspannungsleitung mittels des Messwiderstands [Rmⱼ] dient, mit einem Schwellwert (Ref) innerhalb des betreffenden Busknotens (BKⱼ). Die dritten Komparatoren und Differenzverstärker sind zur besseren Übersicht nicht mit Indizes für die jeweiligen Busknoten (BKⱼ) versehen.
- D3': dritter Komparator bzw. dritter Differenzverstärker zum Vergleich des Ausgangs des zweiten Differenzverstärkers (D2'), der zur Messung des Stromes durch den zweiten Eindrahtbus (DB_{b}) mittels des zweiten Shunt-Widerstands (R2') oder durch die Versorgungsspannungsleitung mittels des Messwiderstands [Rmⱼ] dient, mit einem weiteren Schwellwert (Ref) innerhalb des betreffenden Busknotens (BKⱼ). Die dritten Komparatoren und Differenzverstärker sind zur besseren Übersicht nicht mit Indizes für die jeweiligen Busknoten (BKⱼ) versehen.
- DATA: Dateninformationen innerhalb eines Bit-Strom-Paketes;
- DB: serieller, bidirektionaler, differentieller Zweidraht-Kommunikationsbus;
- DBₐ: erster Eindrahtbus des seriellen, bidirektionalen, differentiellen Zweidraht-Kommunikationsbusses (DB);
- DB_{b}: zweiter Eindrahtbus des seriellen, bidirektionalen, differentiellen Zweidraht-Kommunikationsbusses (DB);
- DB₁: erster, bidirektionaler, differentieller Datenleitungsabschnitt des bidirektionalen differentiellen Zweidraht-Kommunikationsbusses zwischen dem ersten Busknoten (BK₁) und dem Busmaster (ECU). Er umfasst je einen korrespondierenden Abschnitt des ersten Eindrahtbusses (DBₐ) und des zweiten Eindrahtbusses (DB_{b});
- DB₂: zweiter, bidirektionaler, differentieller Datenleitungsabschnitt des bidirektionalen differentiellen Zweidraht-Kommunikationsbusses zwischen dem zweiten Busknoten (BK₂) und dem ersten Busknoten (BK₁). Er umfasst je einen korrespondierenden Abschnitt des ersten Eindrahtbusses (DBₐ) und des zweiten Eindrahtbusses (DB_{b});
- DB₃: dritter, bidirektionaler, differentieller Datenleitungsabschnitt des bidirektionalen differentiellen Zweidraht-Kommunikationsbusses zwischen dem dritten Busknoten (BK₃) und dem zweiten Busknoten (BK₂). Er umfasst je einen korrespondierenden Abschnitt des ersten Eindrahtbusses (DBₐ) und des zweiten Eindrahtbusses (DB_{b});
- DET: erste Detektionsvorrichtung innerhalb eines Busknotens (BKⱼ);
- DET': zweite Detektionsvorrichtung innerhalb eines Busknotens (BKⱼ);
- ds2: Ausgang des zweiten Differenzverstärkers (D2). Es handelt sich um ein internes Signal innerhalb eines Busknotens (BKⱼ);
- ds2': Ausgang des weiteren zweiten Differenzverstärkers (D2'). Es handelt sich um ein internes Signal innerhalb eines Busknotens (BKⱼ);
- ds3: internes Signal innerhalb eines Busknotens (BKⱼ);
- ds3': weiteres internes Signal innerhalb eines Busknotens (BKⱼ);
- ECU: Busmaster, hier auch als Ansteuereinheit bezeichnet;
- er: erstes Fehlersignal der ersten Detektionsvorrichtung (DET);
- er': zweites Fehlersignal der zweiten Detektionsvorrichtung (DET');
- F: erstes Filter;
- F': zweites Filter;
- i₁: ersten Busknotenausgangsstrom, den der erste Busknoten (BK₁) über den Abschnitt des ersten Eindrahtbusses (DB₁), der Teil des Verbindungsabschnitts des seriellen, bidirektionalen, differentiellen Zweidraht-Kommunikationsbusses (DB) zwischen dem ersten Busknoten (BK₁) und dem Busmaster (ECU) ist, an den Busmaster (ECU) sendet und den der Busmaster als ersten Busmastereingangsstrom empfängt;
- i'₁: zweiter Busknotenausgangsstrom, den der erste Busknoten (BK₁) über den Abschnitt des zweiten Eindrahtbusses (DB₂), der Teil des Verbindungsabschnitts des seriellen, bidirektionalen, differentiellen Zweidraht-Kommunikationsbusses (DB) zwischen dem ersten Busknoten (BK₁) und dem Busmaster (ECU) ist, an den Busmaster (ECU) sendet und den der Busmaster als zweiten Busmastereingangsstrom empfängt;
- i₂: erster Busknotenausgangsstrom, den der zweite Busknoten (BK₂) über den Abschnitt des ersten Eindrahtbusses (DB₁), der Teil des Verbindungsabschnitts des seriellen, bidirektionalen, differentiellen Zweidraht-Kommunikationsbusses (DB) zwischen dem zweiten Busknoten (BK₂) und dem ersten Busknoten (BK₁) ist, an den ersten Busknoten (BK₁) sendet und den der ersten Busknoten (BK₁) als ersten Busknoteneingangsstrom empfängt;
- i'₂: zweiter Busknotenausgangsstrom, den der zweite Busknoten (BK₂) über den Abschnitt des zweiten Eindrahtbusses (DB₂), der Teil des Verbindungsabschnitts des seriellen, bidirektionalen, differentiellen Zweidraht-Kommunikationsbusses (DB) zwischen dem zweiten Busknoten (BK₂) und dem ersten Busknoten (BK₁) ist, an den ersten Busknoten (BK₁) sendet und den der ersten Busknoten (BK₁) als zweiten Busknoteneingangsstrom empfängt;
- i₃: erster Busknotenausgangsstrom, den der dritte Busknoten (BK₃) über den Abschnitt des ersten Eindrahtbusses (DB₁), der Teil des Verbindungsabschnitts des seriellen, bidirektionalen, differentiellen Zweidraht-Kommunikationsbusses (DB) zwischen dem dritten Busknoten (BK₃) und dem zweiten Busknoten (BK₂) ist, an den zweiten Busknoten (BK₂) sendet und den der zweite Busknoten (BK₂) als ersten Busknoteneingangsstrom empfängt;
- i'₃: zweiter Busknotenausgangsstrom, den der dritte Busknoten (BK₃) über den Abschnitt des zweiten Eindrahtbusses (DB₂), der Teil des Verbindungsabschnitts des seriellen, bidirektionalen, differentiellen Zweidraht-Kommunikationsbusses (DB) zwischen dem dritten Busknoten (BK₃) und dem zweiten Busknoten (BK₂) ist, an den zweiten Busknoten (BK₂) sendet und den der zweite Busknoten (BK₂) als zweiten Busknoteneingangsstrom empfängt;
- iⱼ: erster Busknotenausgangsstrom, den der j-te Busknoten (BKⱼ) über den Abschnitt des ersten Eindrahtbusses (DB₁), der Teil des Verbindungsabschnitts des seriellen, bidirektionalen, differentiellen Zweidraht-Kommunikationsbusses (DB) zwischen dem j-ten Busknoten (BKⱼ) und dem (j-1)-ten Busknoten [BKⱼ₋₁] ist, an den (j-1)-ten Busknoten [BKⱼ₋₁] sendet und den der (j-1)-te Busknoten [BK₍ⱼ₋₁₎] als ersten Busknoteneingangsstrom empfängt;
- i'ⱼ: zweiter Busknotenausgangsstrom, den der j-te Busknoten (BKⱼ) über den Abschnitt des zweiten Eindrahtbusses (DB₂), der Teil des Verbindungsabschnitts des seriellen, bidirektionalen, differentiellen Zweidraht-Kommunikationsbusses (DB) zwischen dem j-ten Busknoten (BKⱼ) und dem (j-1)-ten Busknoten [BKⱼ₋₁] ist, an den (j-1)-ten Busknoten [BKⱼ₋₁] sendet und den der (j-1)-te Busknoten [BK₍ⱼ₋₁₎] als zweiten Busknoteneingangsstrom empfängt;
- iⱼ₊₁: erster Busknotenausgangsstrom, den der (j+1)-te Busknoten [BKⱼ₊₁] über den Abschnitt des ersten Eindrahtbusses (DB₁), der Teil des Verbindungsabschnitts des seriellen, bidirektionalen, differentiellen Zweidraht- Kommunikationsbusses (DB) zwischen dem (j+1)-ten Busknoten [BKⱼ₊₁] und dem j-ten Busknoten (BKⱼ) ist, an den j-ten Busknoten (BKⱼ) sendet und den der j-te Busknoten (BKⱼ) als ersten Busknoteneingangsstrom empfängt;
- i'ⱼ₊₁: zweiter Busknotenausgangsstrom, den der (j+1)-te Busknoten [BKⱼ₊₁] über den Abschnitt des zweiten Eindrahtbusses (DB₂), der Teil des Verbindungsabschnitts des seriellen, bidirektionalen, differentiellen Zweidraht-Kommunikationsbusses (DB) wischen dem (j+1)-ten Busknoten [BKⱼ₊₁] und dem j-ten Busknoten (BKⱼ) ist, an den j-ten Busknoten (BKⱼ) sendet und den der j-te Busknoten (BKⱼ) als zweiten Busknoteneingangsstrom empfängt;
- iₙ₋₁: erster Busknotenausgangsstrom, den der (n-1)-te Busknoten [BKₙ₋₁] über den Abschnitt des ersten Eindrahtbusses (DB₁), der Teil des Verbindungsabschnitts des seriellen, bidirektionalen, differentiellen Zweidraht-Kommunikationsbusses (DB) zwischen dem (n-1)-ten Busknoten [BKₙ₋₁] und dem (n-2)-ten Busknoten [BKₙ₋₂] ist, an den (n-2)-ten Busknoten [BKₙ₋₂] sendet und den der (n-2)-te Busknoten [BKₙ₋₂] als ersten Busknoteneingangsstrom empfängt;
- i'ₙ₋₁: zweiter Busknotenausgangsstrom, den der (n-1)-te Busknoten [BKₙ₋₁] über den Abschnitt des zweiten Eindrahtbusses (DB₂), der Teil des Verbindungsabschnitts des seriellen, bidirektionalen, differentiellen Zweidraht-Kommunikationsbusses (DB) zwischen dem (n-1)-ten Busknoten [BKₙ₋₁] und dem (n-2)-ten Busknoten [BKₙ₋₂] ist, an den (n-2)-ten Busknoten [BKₙ₋₂] sendet und den der (n-2)-te Busknoten [BKₙ₋₂] als zweiten Busknoteneingangsstrom empfängt;
- iₙ: erster Busknotenausgangsstrom, den der n-te Busknoten [BKₙ] über den Abschnitt des ersten Eindrahtbusses (DB₁), der Teil des Verbindungsabschnitts des seriellen, bidirektionalen, differentiellen Zweidraht-Kommunikationsbusses (DB) zwischen dem n-ten Busknoten [BKₙ] und dem (n-1)-ten Busknoten [BKₙ₋₁] ist, an den (n-1)-ten Busknoten [BKₙ₋₁] sendet und den der (n-1)-te Busknoten [BKₙ₋₁] als ersten Busknoteneingangsstrom empfängt;
- i'ₙ: zweiter Busknotenausgangsstrom, den der n-te Busknoten [BKₙ] über den Abschnitt des zweiten Eindrahtbusses (DB₂), der Teil des Verbindungsabschnitts des seriellen, bidirektionalen, differentiellen Zweidraht-Kommunikationsbusses (DB) zwischen dem n-ten Busknoten [BKₙ] und dem (n-1)-ten Busknoten [BKₙ₋₁] ist, an den (n-1)-ten Busknoten [BKₙ₋₁] sendet und den der (n-1)-te Busknoten [BKₙ₋₁] als zweiten Busknoteneingangsstrom empfängt;
- IF₁: differentielle serielle Schnittstelle des ersten Busknotens (BK₁);
- IF₂: differentielle serielle Schnittstelle des zweiten Busknotens (BK₂);
- IF₃: differentielle serielle Schnittstelle des dritten Busknotens (BK₃);
- IF₄: differentielle serielle Schnittstelle des vierten Busknotens (BK₄);
- IF₅: differentielle serielle Schnittstelle des fünften Busknotens (BK₅);
- IF₆: differentielle serielle Schnittstelle des sechsten Busknotens (BK₆);
- IF₍ⱼ₋₁₎: differentielle serielle Schnittstelle des (j-1)-ten Busknotens [BKⱼ₋₁];
- IFⱼ: differentielle serielle Schnittstelle des j-ten Busknotens (BKⱼ);
- IF₍ⱼ₊₁₎: differentielle serielle Schnittstelle des (j+1)-ten Busknotens [BKⱼ₊₁];
- IF₍ₙ₋₁₎: differentielle serielle Schnittstelle des (n-1)-ten Busknotens [BKₙ₋₁];
- IFₙ: differentielle serielle Schnittstelle des n-ten Busknotens [BKₙ];
- ILD: Beleuchtungsinformationen zur Steuerung der Energieversorgung der Leuchtmittel (LED;) des Busknotens (BKⱼ) durch das Energieversorgungsmittel (EVⱼ) des Busknotens (BKⱼ) in Abhängigkeit von diesen Beleuchtungsinformationen;
- INFO: Nutzinformationen innerhalb der Dateninformationen (DATA) eines Bit-Strom-Pakets (BP). Bevorzugt handelt es sich um Beleuchtungsdaten für den jeweiligen Busknoten (BKⱼ);
- Iq₁: erste Adressierungsstromquelle des ersten Busknotens (BK₁);
- Iq₁': zweite Adressierungsstromquelle des ersten Busknotens (BK₁);
- Iq₂: erste Adressierungsstromquelle des zweiten Busknotens (BK₂);
- Iq₂': zweite Adressierungsstromquelle des zweiten Busknotens (BK₂);
- Iq₃: erste Adressierungsstromquelle des dritten Busknotens (BK₃);
- Iq₃': zweite Adressierungsstromquelle des dritten Busknotens (BK₃);
- Iqⱼ: erste Adressierungsstromquelle des j-ten Busknotens (BKⱼ);
- Iqⱼ': zweite Adressierungsstromquelle des j-ten Busknotens (BKⱼ);
- Iqₙ: erste Adressierungsstromquelle des n-ten Busknotens [BKₙ];
- Iqₙ': zweite Adressierungsstromquelle des n-ten Busknotens [BKₙ];
- L₁: erster Leitungsabschnitt vom ersten Busknoten (BK₁) zum Busmaster (ECU);
- L₂: zweiter Leitungsabschnitt vom zweiten Busknoten (BK₂) zum ersten Busknoten (BK₁);
- L₃: dritter Leitungsabschnitt vom dritten Busknoten (BK₃) zum zweiten Busknoten (BK₂);
- µC: Mikrocontroller;
- LED₁: Leuchtmittel des ersten Busknotens (BK₁). Leuchtmittelgruppen und Verschaltungen sind hier mitumfasst. (Dies können beispielsweise Serien- und Parallelschaltungen mehrerer Leuchtdioden sein.)
- LED₂: Leuchtmittel des zweiten Busknotens (BK₂). Leuchtmittelgruppen und Verschaltungen sind hier mitumfasst. (Dies können beispielsweise Serien- und Parallelschaltungen mehrerer Leuchtdioden sein.)
- LED₃: Leuchtmittel des dritten Busknotens (BK₃). Leuchtmittelgruppen und Verschaltungen sind hier mitumfasst. (Dies können beispielsweise Serien- und Parallelschaltungen mehrerer Leuchtdioden sein.)
- LED₄: Leuchtmittel des vierten Busknotens (BK₄). Leuchtmittelgruppen und Verschaltungen sind hier mitumfasst. (Dies können beispielsweise Seren- und Parallelschaltungen mehrerer Leuchtdioden sein.)
- LED₅: Leuchtmittel des fünften Busknotens (BK₅). Leuchtmittelgruppen und Verschaltungen sind hier mitumfasst. (Dies können beispielsweise Serien- und Parallelschaltungen mehrerer Leuchtdioden sein.)
- LED₆: Leuchtmittel des sechsten Busknotens (BK₆). Leuchtmittelgruppen und Verschaltungen sind hier mitumfasst. (Dies können beispielsweise Serien- und Parallelschaltungen mehrerer Leuchtdioden sein.);
- pol: erstes Polaritätssignal, das bevorzugt den Multiplexer (X4) steuert;
- pol': zweites Polaritätssignal, das bevorzugt den weiteren Multiplexer (X4') steuert;
- R2: erster Shunt-Widerstand zur Messung des Stromes durch den ersten Eindrahtbus (DBₐ) innerhalb des betreffenden Busknotens (BKⱼ). Der erste Shunt-Widerstand wird hier als Teil des Busknotens (BKⱼ) betrachtet. Er ist in jedem der autoadressierungsfähigen Busknoten ((BK₁) bis [BKₙ]) bevorzugt jeweils vorhanden. Die ersten Shunt-Widerstände wurden zur besseren Übersicht nicht mit Indizes für die jeweiligen Busknoten versehen.
- R2': zweiter Shunt-Widerstand zur Messung des Stromes durch den zweiten Eindrahtbus (DB_{b}) innerhalb des betreffenden Busknotens (BKⱼ). Der zweite Shunt-Widerstand wird hier als Teil des Busknotens (BKⱼ) betrachtet. Er ist in jedem der autoadressierungsfähigen Busknoten ((BK₁) bis [BKₙ]) bevorzugt jeweils vorhanden. Die zweiten Shunt-Widerstände wurden zur besseren Übersicht nicht mit Indizes für die jeweiligen Busknoten versehen.
- Rec: Empfänger. Jeder Busknoten ((BK₁) bis [BKₙ]) und der Busmaster (ECU) weisen bevorzugt einen Empfänger auf. Ein Empfänger extrahiert die in den Bit-Strom-Paketen (BP) enthaltenen Daten (DATA) und gibt diese bevorzugt zusammen mit Fehlerinformationen über einen Ausgang (out) aus. Der Empfänger überprüft typischerweise, ob die Prüfinformationen (CHKD) innerhalb der Dateninformationen (DATA) eines Bit-Strom-Pakets (BP) auf einen fehlerfreien Empfang schließen lassen. Wurde ein Bit-Strom-Paket (BP) nicht fehlerfrei empfangen, so signalisiert der Empfänger dieses.
- Ref10: zehnter Schwellwert;
- Ref10': weiterer zehnter Schwellwert;
- Ref11: elfter Schwellwert;
- Ref11': weiterer elfter Schwellwert;
- Rm₁: Messwiderstand in der Versorgungsspannungsleitung für den ersten Busknoten (BK₁);
- Rm₂: Messwiderstand in der Versorgungsspannungsleitung für den zweiten Busknoten (BK₂);
- Rm₃: Messwiderstand in der Versorgungsspannungsleitung für den dritten Busknoten (BK₃);
- Rmⱼ: Messwiderstand in der Versorgungsspannungsleitung für den j-ten Busknoten (BKⱼ);
- Rmₙ: Messwiderstand in der Versorgungsspannungsleitung für den n-ten Busknoten [BKₙ];
- rw₁: erstes Regelsignal des ersten Busknotens (BK₁). Das erste Regelsignal des ersten Busknotens (BK₁) wird mit Mitteln, bevorzugt einem ersten Filter (F) des ersten Busknotens (BK₁), der mit dem dritten Komparator (D3) des ersten Busknotens (BK₁) auch eine Einheit bilden kann, aus dem Ausgangssignal des dritten Komparators (D3) des ersten Busknotens (BK₁) gebildet und dient zur Steuerung der ersten Autoadressierungsstromquelle (Iq₁) des ersten Busknotens (BK₁);
- rw'₁: zweites Regelsignal des ersten Busknotens (BK₁). Das zweite Regelsignal des ersten Busknotens (BK₁) wird mit Mitteln, bevorzugt einem zweiten Filter (F) des ersten Busknotens (BK₁), der mit dem entsprechenden dritten Komparator (D3') des ersten Busknotens (BK₁) auch eine Einheit bilden kann, aus dem Ausgangssignal des entsprechenden dritten Komparators (D3') des ersten Busknotens (BK₁) gebildet und dient zur Steuerung der zweiten Autoadressierungsstromquelle (Iq'₁) des ersten Busknotens (BK₁);
- rw₂: erstes Regelsignal des zweiten Busknotens (BK₂). Das erste Regelsignal des zweiten Busknotens (BK₂) wird mit Mitteln, bevorzugt einem ersten Filter (F) des zweiten Busknotens (BK₂), der mit dem dritten Komparator (D3) des zweiten Busknotens (BK₂) auch eine Einheit bilden kann, aus dem Ausgangssignal des zweiten Komparators (D3) des zweiten Busknotens (BK₂) gebildet und dient zur Steuerung der ersten Autoadressierungsstromquelle (Iq₂) des zweiten Busknotens (BK₂);
- rw'₂: zweites Regelsignal des zweiten Busknotens (BK₂). Das zweite Regelsignal des zweiten Busknotens (BK₂) wird mit Mitteln, bevorzugt einem zweiten Filter (F) des zweiten Busknotens (BK₂), der mit dem entsprechenden dritten Komparator (D3') des zweiten Busknotens (BK₂) auch eine Einheit bilden kann, aus dem Ausgangssignal des entsprechenden dritten Komparators (D3') des zweiten Busknotens (BK₂) gebildet und dient zur Steuerung der zweiten Autoadressierungsstromquelle (Iq'₂) des zweiten Busknotens (BK₂);
- rw₃: erstes Regelsignal des dritten Busknotens (BK₃). Das erste Regelsignal des dritten Busknotens (BK₃) wird mit Mitteln, bevorzugt einem ersten Filter (F) des dritten Busknotens (BK₃), der mit dem dritten Komparator (D3) des dritten Busknotens (BK₃) auch eine Einheit bilden kann, aus dem Ausgangssignal des dritten Komparators (D3) des dritten Busknotens (BK₃) gebildet und dient zur Steuerung der ersten Autoadressierungsstromquelle (Iq₃) des dritten Busknotens (BK₃);
- rw'₃: zweites Regelsignal des dritten Busknotens (BK₃). Das zweite Regelsignal des dritten Busknotens (BK₃) wird mit Mitteln, bevorzugt einem zweiten Filter (F) des dritten Busknotens (BK₃), der mit dem entsprechenden dritten Komparator (D3') des dritten Busknotens (BK₃) auch eine Einheit bilden kann, aus dem Ausgangssignal des entsprechenden dritten Komparators (D3') des dritten Busknotens (BK₃) gebildet und dient zur Steuerung der zweiten Autoadressierungsstromquelle (Iq'₃) des dritten Busknotens (BK₃);
- rwⱼ: erstes Regelsignal des j-ten Busknotens (BKⱼ). Das erste Regelsignal des j-ten Busknotens (BKⱼ) wird mit Mitteln, bevorzugt einem ersten Filter (F) des j-ten Busknotens (BKⱼ), der mit dem dritten Komparator (D3) des j-ten Busknotens (BKⱼ)auch eine Einheit bilden kann, aus dem Ausgangssignal des dritten Komparators (D3) des j-ten Busknotens (BK;)gebildet und dient zur Steuerung der ersten Autoadressierungsstromquelle (Iqⱼ) des j-ten Busknotens (BKⱼ);
- rw'ⱼ: zweites Regelsignal des j-ten Busknotens (BKⱼ). Das zweite Regelsignal des j-ten Busknotens (BKⱼ) wird mit Mitteln, bevorzugt einem zweiten Filter (F) des j-ten Busknotens (BKⱼ), der mit dem entsprechenden dritten Komparator (D3') des j-ten Busknotens (BKⱼ) auch eine Einheit bilden kann, aus dem Ausgangssignal des entsprechenden dritten Komparators (D3') des j-ten Busknotens (BKⱼ) gebildet und dient zur Steuerung der zweiten Autoadressierungsstromquelle (Iq';) des j-ten Busknotens (BKⱼ);
- S4: erster Überbrückungsschalter - auch erster Bus-Shunt-Überbrückungsschalter genannt - zur Überbrückung des ersten Shunt-Widerstands (R2) innerhalb eines Busknotens (BKⱼ). Der erste Überbrückungsschalter kann auch als Transistor und/oder als komplexere Schaltung verschiedener elektronischer und sonstiger Bauelemente ausgeführt werden, wenn sich im Arbeitsbereich die Funktionalität eines Schalters ergibt;
- S4': zweiter Überbrückungsschalter - auch zweiter Bus-Shunt-Überbrückungsschalter genannt -zur Überbrückung des zweiten Shunt-Widerstands (R2') innerhalb eines Busknotens (BKⱼ). Der zweite Überbrückungsschalter kann auch als Transistor und/oder als komplexere Schaltung verschiedener elektronischer und sonstiger Bauelemente ausgeführt werden, wenn sich im Arbeitsbereich die Funktionalität eines Schalters ergibt;
- START: Startsignal;
- SYNC: Synchronisationsinformation;
- t_{B}: Länge eines Einzelbits innerhalb eines Bit-Strom-Pakets (BP);
- TXₐ: Transmitter, der den ersten Treiber [TRₐ] umfasst;
- TX_{b}: Transmitter, der den zweiten Treiber [TR_{b}] umfasst;
- V_{bat}: Versorgungsspannungsleitung;
- X1: erster Multiplexer zur Verbindung eines ersten Eingangs des zweiten Differenzverstärkers (D2) zur Messung des Stromes durch den ersten Eindrahtbus (DBₐ) mit einem ersten Anschluss des ersten Shunt-Widerstands (R2) auf der Seite des Busmasters (ECU) oder wahlweise mit einem zweiten Anschluss des Messwiderstands [Rmⱼ] in der Versorgungsspannungsleitung innerhalb des betreffenden Busknotens (BKⱼ);
- X1': zweiter Multiplexer zur Verbindung eines ersten Eingangs des zweiten Komparators (D2') zur Messung des Stromes durch den zweiten Eindrahtbus (DB_{b}) mit einem ersten Anschluss des zweiten Shunt-Widerstands (R2') auf der Seite des Busmasters (ECU) oder wahlweise mit einem zweiten Anschluss des Messwiderstands [Rmⱼ] in der Versorgungsspannungsleitung innerhalb des betreffenden Busknotens (BKⱼ);
- X2: erster Multiplexer zur Verbindung eines zweiten Eingangs des zweiten Differenzverstärkers (D2) zur Messung des Stromes durch den ersten Eindrahtbus (DBₐ) mit einem zweiten Anschluss des ersten Shunt-Widerstands (R2) auf der abgewandten Seite des Busmasters (ECU) oder mit einem ersten Anschluss des Messwiderstands [Rmⱼ] in der Versorgungsspannungsleitung innerhalb des betreffenden Busknotens (BKⱼ);
- X2': zweiter Multiplexer zur Verbindung eines zweiten Eingangs des zweiten Komparators (D2') zur Messung des Stromes durch den zweiten Eindrahtbus (DB_{b}) mit einem zweiten Anschluss des zweiten Shunt-Widerstands (R2') auf der abgewandten Seite des Busmasters (ECU) oder mit einem ersten Anschluss des Messwiderstands [Rmⱼ] in der Versorgungsspannungsleitung innerhalb des betreffenden Busknotens (BKⱼ);
- X3: erster Demultiplexer zur Verbindung eines Anschlusses der ersten Adressierungsstromquelle (Iqⱼ) des Busknotens (BKⱼ) mit einem ersten Anschluss des ersten Shunt-Widerstands (R2) oder mit einem zweiten Anschluss des ersten Shunt-Widerstands (R2) oder mit einem Bezugspotenzial innerhalb des betreffenden Busknotens (BKⱼ);
- X3': zweiter Demultiplexer zur Verbindung eines Anschlusses der zweiten Adressierungsstromquelle (Iq'ⱼ) des Busknotens (BKⱼ) mit einem ersten Anschluss des zweiten Shunt-Widerstands (R2') oder mit einem zweiten Anschluss des zweiten Shunt-Widerstands (R2') oder mit einem Bezugspotenzial innerhalb des betreffenden Busknotens (BKⱼ);
- X4: erster Multiplexer zur Vertauschung der Eingänge des zweiten Differenzverstärkers (D2) des Busknotens (BKⱼ);
- X4': zweiter Multiplexer zur Vertauschung der Eingänge des weiteren zweiten Differenzverstärkers (D2') des Busknotens (BKⱼ);
- Z1: erster logischer Zustand, in dem sich der erste Eindrahtbus (DBₐ) oder der zweite Eindrahtbus (DB_{b}) befinden kann. Dieser wird in dieser Offenlegung auch mit High bezeichnet.
- z1: erster differentieller Zustand in dem sich der serielle, bidirektionale, differentielle Zweidraht-Kommunikationsbus (DB) befinden kann. Dieser wird in dieser Offenlegung auch mit High bezeichnet.
- Z2: zweiter logischer Zustand, in dem sich der erste Eindrahtbus (DBₐ) oder der zweite Eindrahtbus (DB_{b}) befinden kann. Dieser wird in dieser Offenlegung auch mit Low bezeichnet.
- z2: zweiter differentieller Zustand in dem sich der serielle, bidirektionale, differentielle Zweidraht-Kommunikationsbus (DB) befinden kann. Dieser wird in dieser Offenlegung auch mit Low bezeichnet.
- Z3: dritter logischer Zustand, in dem sich der erste Eindrahtbus (DBₐ) oder der zweite Eindrahtbus (DB_{b}) befinden kann. Dieser wird in dieser Offenlegung auch mit Idle bezeichnet. Bevorzugt aber nicht notwendigerweise hat der entsprechende physikalische Pegel des ersten Eindrahtbusses (DBₐ) oder des zweiten Eindrahtbusses (DB_{b}) einen Wert um einen gemeinsamen Mittelwert.
- z3: dritter differentieller Zustand in dem sich der serielle, bidirektionale, differentielle Zweidraht-Kommunikationsbus (DB) befinden kann. Dieser wird in dieser Offenlegung auch mit Idle bezeichnet. Bevorzugt aber nicht notwendigerweise hat der entsprechende differentielle physikalische Pegel einen Wert um Null.

## Patentansprüche

1. Busknoten (BKⱼ) für ein Datenbussystem mit einem seriellen, bidirektionalen, differentiellen Zweidraht-Kommunikationsbus (DB), der einen ersten Eindrahtbus (DB₁) und einen zweiten Eindrahtbus (DB₂) aufweist, einem Busmaster (ECU), einem ersten Bus-Shunt-Widerstand (R2), der in den ersten Eindrahtbus (DB₁) eingefügt ist, einem zweiten Bus-Shunt-Widerstand (R2'), der in den zweiten Eindrahtbus (DB₂) eingefügt ist, und einer Gegentaktadressierungsstromquelle (GGIqⱼ) zur Ermittlung der Busposition des Busknotens (BKⱼ) im Zweidraht-Kommunikationsbus (DB),
- wobei die Gegentaktadressierungsstromquelle (GGIqⱼ)
- einen ersten Gegentaktadressierungsstromanteil in den ersten Eindrahtbus (DBₐ) des Zweidraht-Kommunikationsbusses (DB) geregelt einspeisen kann, wobei der erste Gesamtstrom (iⱼ) durch den ersten Bus-Shunt-Widerstand (R2) des Busknotens (BKⱼ) auf einen vorgegebenen ersten Summenstromwert (I_{ref}) geregelt wird, und
- eine zum ersten Gegentaktadressierungsstromanteil betragsmäßig gleichen zweiten Gegentaktadressierungsstromanteil in den zweiten Eindrahtbus (DB_{b}) des Zweidraht-Kommunikationsbusses (DB) geregelt mit gegenüber dem Vorzeichen des ersten Gegentaktadressierungsstromanteils umgekehrten Vorzeichen einspeisen kann, wobei der zweite Gesamtstrom (i'ⱼ) durch den zweiten Bus-Shunt-Widerstand (R2') des Busknotens (BKⱼ) auf den vorgegebenen ersten Summenstrom (I_{ref}) geregelt wird, und
- wobei der erste Gegentaktadressierungsstromanteil der Gegentaktadressierungsstromquelle (GGIqⱼ) des Busknotens (BKⱼ) den ersten Bus-Shunt-Widerstand (R2) des Busknotens (BKⱼ) in Richtung auf den Busmaster (ECU) durchströmt und
- wobei der zweite Gegentaktadressierungsstromanteil der Gegentaktadressierungsstromquelle (GGIqⱼ) des Busknotens (BKⱼ) den zweiten Bus-Shunt-Widerstand (R2') des Busknotens (BKⱼ) in Richtung auf den Busmaster (ECU) durchströmt.

2. Busknoten nach Anspruch 1, **dadurch gekennzeichnet, dass** einer der beiden ersten und zweiten Gegentaktadressierungsstromanteile null oder im Wesentlichen gleich null sein kann.

3. Busknoten nach Anspruch 1 oder 2, **gekennzeichnet durch**
- erste Mittel (R2, D2) zur Ermittlung des Stroms durch den ersten Bus-Shunt-Widerstand (R2) und/oder
- zweite Mittel (R2', D2') zur Ermittlung des Stroms durch den zweiten Bus-Shunt-Widerstand (R2').

4. Busknoten nach einem der Ansprüche 1 bis 3, **dadurch gekennzeichnet, dass**
- der ermittelte Strom durch den ersten Bus-Shunt-Widerstand (R2) für einen Selbsttest verwendbar ist und/oder
- der ermittelte Strom durch den zweiten Bus-Shunt-Widerstand (R2') für einen Selbsttest verwendbar ist.

5. Busknoten nach einem der Ansprüche 1 bis 4, **gekennzeichnet durch** eine Detektionsvorrichtung (DET), die interne Signale (ds1, ds3) des Busknotens (BKⱼ) auf Plausibilität prüft.

6. Busknoten nach Anspruch 5, **dadurch gekennzeichnet, dass** der Busknoten (BKⱼ) oder eine Teilvorrichtung (DET) des Busknotens (BKⱼ) Maßnahmen ergreift, wenn die Detektionsvorrichtung (DET) nicht plausible interne Signale des Busknotens (BKⱼ) feststellt.

7. Busknoten nach einem der Ansprüche 1 bis 6, **dadurch gekennzeichnet, dass** der Busknoten (BKⱼ) eine erste Teilvorrichtung (X3) und eine zweite Teilvorrichtung (X3') aufweist, die die Einspeisepunkte der ersten Gegentaktadressierungsströme der Gegentaktadressierungsstromquelle (GLIqⱼ) ändern können.

8. Busknoten nach einem der Ansprüche 1 bis 6 **dadurch gekennzeichnet, dass** die Gegentaktadressierungsstromquelle (GGIqⱼ) den Gegentaktadressierungsstrom mit einer ersten Zeitkonstante (τ₁) erhöht und mit einer zweiten Zeitkonstante (τ₂) erniedrigt, die kleiner als die erste Zeitkonstante (τ₁) ist.

## Claims

1. A bus node (BKⱼ) for a data bus system having a serial bidirectional differential two-wire communication bus (DB) comprising a first single-wire bus (DB₁) and a second single-wire bus (DB₂), a bus master (ECU), a first bus shunt resistor (R2) inserted into the first single-wire bus (DB₁), a second bus shunt resistor (R2') inserted into the second single-wire bus (DB₂), and a push-pull addressing current source (GGIqⱼ) for determining the bus position of the bus node (BKⱼ) in the two-wire communication bus (DB),
- wherein the push-pull addressing current source (GGIqⱼ)
- can feed a first push-pull addressing current component into the first single-wire bus (DBₐ) of the two-wire communication bus (DB) in a controlled manner, the first total current (iⱼ) being controlled by the first bus shunt resistor (R2) of the bus node (BKⱼ) to a predetermined first total current value (I_{ref}), and
- can feed a second push-pull addressing current component, which is equal in amount to the first push-pull addressing current component, into the second single-wire bus (DB_{b}) of the two-wire communication bus (DB) in a controlled manner with the sign reversed with respect to the sign of the first push-pull addressing current component, wherein the second total current (i'ⱼ) is regulated by the second bus shunt resistor (R2') of the bus node (BKⱼ) to the predetermined first total current (I_{ref}), and
- wherein the first push-pull addressing current component of the push-pull addressing current source (GGIqⱼ) of the bus node (BKⱼ) flows through the first bus shunt resistor (R2) of the bus node (BKⱼ) towards the bus master (ECU), and
- wherein the second push-pull addressing current component of the push-pull addressing current source (GGIqⱼ) of the bus node (BKⱼ) flows through the second bus shunt resistor (R2') of the bus node (BKⱼ) towards the bus master (ECU).

2. The bus node according to claim 1, **characterized in that** one of the first and second push-pull addressing current components can be zero or substantially zero.

3. The bus node according to claim 1 or 2, **characterized by**
- first means (R2, D2) for determining the current through the first bus shunt resistor (R2), and/or
- second means (R2', D2') for determining the current through the second bus shunt resistor (R2').

4. The bus node according to any one of claims 1 to 3, **characterized in that**
- the determined current through the first bus shunt resistor (R2) can be used for a self-test, and/or
- the determined current through the second bus shunt resistor (R2') can be used for a self-test.

5. The bus node according to any one of claims 1 to 4, **characterized by** a detection device (DET) which checks internal signals (ds1, ds3) of the bus node (BKⱼ) for plausibility.

6. The bus node according to claim 5, **characterized in that** the bus node (BKⱼ) or a sub-device (DET) of the bus node (BKⱼ) takes action if the detection device (DET) detects implausible internal signals of the bus node (BKⱼ).

7. The bus node according to any one of claims 1 to 6, **characterized in that** the bus node (BKⱼ) comprises a first sub-device (X3) and a second sub-device (X3') which can change the feed points of the first push-pull addressing currents of the push-pull addressing current source (GLIqⱼ).

8. The bus node according to any one of claims 1 to 6, **characterized in that** the push-pull addressing current source (GGIqⱼ) increases the push-pull addressing current with a first time constant (τ₁) and decreases it with a second time constant (τ₂) that is smaller than the first time constant (τ₁).

## Revendications

1. Nœud de bus (BKⱼ) pour un système de bus de données comprenant un bus de communication à deux fils (DB) série, bidirectionnel, différentiel, comprenant un premier bus à fil unique (DB₁) ainsi qu'un deuxième bus à fil unique (DB₂), un maître de bus (ECU), une première résistance shunt de bus (R2) intégrée dans le premier bus à fil unique (DB₁), une deuxième résistance shunt de bus (R2') intégrée dans le deuxième bus à fil unique (DB₂), et une source de courant d'adressage en mode différentiel (GGIqⱼ) destinée à déterminer la position du nœud de bus (BKⱼ) dans le bus de communication à deux fils (DB),
sachant que
- la source de courant d'adressage en mode différentiel (GGIqⱼ) est apte à
- injecter de manière régulée une première composante de courant d'adressage en mode différentiel dans le premier bus à fil unique (DBₐ) du bus de communication à deux fils (DB), le premier courant total (iⱼ) à travers la première résistance shunt de bus (R2) du nœud de bus (BKⱼ) étant régulé à une première valeur de courant cumulée prédéfinie (I_{ref}), et
- injecter de manière régulée une deuxième composante de courant d'adressage en mode différentiel, de même valeur absolue que celle de la première composante de courant d'adressage en mode différentiel, dans le deuxième bus à fil unique (DB_{b}) du bus de communication à deux fils (DB), avec un signe inversé par rapport au signe de la première composante de courant d'adressage en mode différentiel, le deuxième courant total (i'ⱼ) à travers la deuxième résistance shunt de bus (R2') du nœud de bus (BKⱼ) étant régulé à la première valeur de courant cumulée prédéfinie (I_{ref}), et
- la première composante de courant d'adressage en mode différentiel de la source de courant d'adressage en mode différentiel (GGIqⱼ) du nœud de bus (BKⱼ) traverse la première résistance shunt de bus (R2) du nœud de bus (BKⱼ) en direction du maître de bus (ECU), et
- la deuxième composante de courant d'adressage en mode différentiel de la source de courant d'adressage en mode différentiel (GGIqⱼ) du nœud de bus (BKⱼ) traverse la deuxième résistance shunt de bus (R2') du nœud de bus (BKⱼ) en direction du maître de bus (ECU).

2. Nœud de bus selon la revendication 1,
**caractérisé en ce que** l'une des première et deuxième composantes de courant d'adressage en mode différentiel peut être nulle ou sensiblement nulle.

3. Nœud de bus selon la revendication 1 ou 2, **caractérisé par**
- des premiers moyens (R2, D2) destinés à déterminer le courant à travers la première résistance shunt de bus (R2), et/ou
- des deuxièmes moyens (R2', D2') destinés à déterminer le courant à travers la deuxième résistance shunt de bus (R2').

4. Nœud de bus selon l'une des revendications 1 à 3,
**caractérisé en ce que**
- le courant déterminé à travers la première résistance shunt de bus (R2) est utilisable pour un autodiagnostic, et/ou
- le courant déterminé à travers la deuxième résistance shunt de bus (R2') est utilisable pour un autodiagnostic.

5. Nœud de bus selon l'une des revendications 1 à 4,
**caractérisé par** un dispositif de détection (DET) qui vérifie la plausibilité de signaux internes (ds1, ds3) du Nœud de bus (BKⱼ).

6. Nœud de bus selon la revendication 5,
**caractérisé en ce que** le nœud de bus (BKⱼ) ou un dispositif partiel (DET) du nœud de bus (BKⱼ) prend des mesures lorsque le dispositif de détection (DET) détecte des signaux internes non plausibles du nœud de bus (BKⱼ).

7. Nœud de bus selon l'une des revendications 1 à 6,
**caractérisé en ce que** le nœud de bus (BKⱼ) comporte un premier dispositif partiel (X3) et un deuxième dispositif partiel (X3') qui peuvent modifier les points d'injection des premiers courants d'adressage en mode différentiel de la source de courant d'adressage en mode différentiel (GLIqⱼ).

8. Nœud de bus selon l'une des revendications 1 à 6,
**caractérisé en ce que** la source de courant d'adressage en mode différentiel (GGIqⱼ) augmente le courant d'adressage en mode différentiel avec une première constante de temps (τ₁) et le diminue avec une deuxième constante de temps (τ₂) qui est inférieure à la première constante de temps (τ₁).
